# EUROPEAN PATENT SPECIFICATION

(11) **EP 4 350 258 B1**
(45) Date of publication and mention of the grant of the patent: **27.05.2026**
(21) Application number: 24159348.2
(22) Date of filing: 15.04.2020
(51) Int. Cl.: F24F 3/044, F24F 11/77, F24F 7/06, F24F 11/00

(54) **AIR TREATMENT SYSTEM**
LUFTBEHANDLUNGSSYSTEM
SYSTÈME DE TRAITEMENT D'AIR

(30) Priority: 15.04.2019 JP 2019077305; 24.06.2019 JP 2019116144; 27.12.2019 JP 2019237836
(43) Date of publication of application: 10.04.2024
(62) Divisional of application: 20791231.2
(73) Proprietor: Daikin Industries, Ltd., Osaka-shi, Osaka 530-0001 (JP)
(72) Inventor: FUJIMOTO, Toru, Osaka-shi, Osaka, 530-8323 (JP); TANAKA, Shuuichi, Osaka-shi, Osaka, 530-8323 (JP); KOMATSU, Akira, Osaka-shi, Osaka, 530-8323 (JP); NOUCHI, Yoshiteru, Osaka-shi, Osaka, 530-8323 (JP); TATSUMI, Kouji, Osaka-shi, Osaka, 530-8323 (JP); SUZUKI, Ryouta, Osaka-shi, Osaka, 530-8323 (JP); NAKASHIMA, Taishi, Osaka-shi, Osaka, 530-8323 (JP)
(74) Representative: Hoffmann Eitle

(56) References cited:
- WO-A1-2011/077007
- WO-A2-2017/164560
- GB-A- 2 528 642
- JP-A- 2009 145 004

## Description

### TECHNICAL FIELD

The present disclosure relates to an air treatment system configured to apply predetermined treatment to outdoor air to be sent to an indoor space.

### BACKGROUND ART

R.O.C. Utility Model No. M566801 discloses, as a conventional air treatment system, a total heat exchanger including a heat exchange element disposed in a casing. The casing is provided with an external intake port, an internal intake port, an external exhaust port, and an internal exhaust port. The total heat exchanger according to R.O.C. Utility Model No. M566801 includes an air intake device separated from the casing and disposed at the intake port, and an air exhaust device separated from the casing and disposed at the exhaust port.

GB 2 528 642 A relates to an apparatus controlling the climate of an inner environment which comprises a heat exchanger and a reversible heat pump for controlling air temperature in the inner environment by heating or cooling air discharged into the inner environment. Air heated or cooled is dependent on the temperature of the air in the inner or an outer environment. A portion of the air from the outer environment may by-pass the heat exchanger and re-combine with the air flowing through the heat exchanger.

JP 2009 145004 A states a rotating type total enthalpy heat exchanger which includes a rotor which houses a heat exchange element carrying out total heat exchange of two different types of air currents of supply air and exhaust air, a supply duct and an exhaust duct for the air currents formed on both sides of the rotor, and an air supply fan and an air exhaust fan causing an air current in each of the supply duct and the exhaust duct.

WO 2011/077007 A1 relates to an air-conditioning apparatus comprising an exhaust air duct, a discharge air duct, a fresh air duct and an inlet air duct, as well as a first evaporator-condenser unit adapted to the discharge air duct and a second evaporator-condenser unit adapted to the inlet air duct. The air-conditioning apparatus is characterized in that, between the fresh air duct and the discharge air duct, prior to the first evaporator-condenser unit in the flow direction of the discharge air duct and prior to the second evaporator-condenser unit in the flow direction of the inlet air duct, is adapted a bypass channel and flow control means for passing fresh air from the fresh air duct to the discharge air duct in order to enhance the function of the evaporator-condenser unit without the need for increasing the flow rates of the exhaust air duct and the inlet air duct.

### SUMMARY OF THE INVENTION

### <Technical Problem>

The total heat exchanger according to R.O.C. Utility Model No. M566801 includes the air intake device and the air exhaust device that are adjusted in the numbers thereof in accordance with capacity of the casing. This achieves reduction in space of the total heat exchanger. The total heat exchanger according to R.O.C. Utility Model No. M566801 is not configured to control airflow volume whenever necessary, and cannot cope with demands for change in airflow volume that varies momentarily. A conventional total heat exchanger particularly provided with a plurality of blow-out ports has difficulty in momentarily changing airflow volume at each of the blow-out ports.

An air treatment system has a task to control airflow volume in accordance with momentarily varying airflow volume to be demanded.

### <Solutions to Problem>

An air treatment system according to a first aspect is defined by independent claim 1.

When the air treatment system according to the first aspect needs to change airflow volume, the supply fan unit and the exhaust fan unit can control the numbers of revolutions of the first fan and the second fan in accordance with the first detection value and the second detection value, respectively. When the air treatment system needs to change the airflow volume, the airflow volume can thus be appropriately changed as necessary.

An air treatment system according to a second aspect is the system according to the first aspect, in which the controller includes a first control unit provided at the supply fan unit and a second control unit provided at the exhaust fan unit. The first control unit receives a first command value on the airflow volume of the first fan from outside the supply fan unit, and controls the rotation speed of the first fan in accordance with the first command value and the first detection value. The second control unit receives a second command value on the airflow volume of the second fan from outside the exhaust fan unit, and controls the rotation speed of the second fan in accordance with the second command value and the second detection value.

In the system according to the second aspect, the supply fan unit and the exhaust fan unit are provided with the first control unit and the second control unit. This configuration facilitates construction of a control system upon installation and addition of the supply fan unit and the exhaust fan unit.

An air treatment system according to a third aspect is the system according to the second aspect, in which the controller includes a main controller configured to transmit the first command value to the first control unit and transmit the second command value to the second control unit.

In the air treatment system according to the third aspect, the supply fan unit and the exhaust fan unit are connected to the identical air treatment unit. In this configuration, the first control unit and the second control unit in the supply fan unit and the exhaust fan unit receive the first command value and the second command value from the main controller and do not need to calculate the first command value or the second command value. This configuration reduces loads applied to the first control unit and the second control unit in the supply fan unit and the exhaust fan unit.

An air treatment system according to a fourth aspect is the system according to any one of the first to third aspects, in which the exhaust fan unit includes a first exhaust fan unit and a second exhaust fan unit. The return air duct includes a first return air duct and a second return air duct provided to guide indoor air. The first exhaust fan unit is connected to the first return air duct, and the second exhaust fan unit is connected to the second return air duct.

In the system according to the fourth aspect, an exhaust load is divisionally applied to the first exhaust fan unit and the second exhaust fan unit, so that each of the first and second exhaust fan units can be reduced in airflow volume and can be reduced in noise.

An air treatment system according to a fifth aspect is the system according to any one of the preceding aspects, in which the supply fan unit includes a first supply fan unit and a second supply fan unit. The supply air duct includes a first supply air duct and a second supply air duct provided to guide the outdoor air to the indoor space. The first supply fan unit is connected to the first supply air duct, and the second supply fan unit is connected to the second supply air duct.

The system according to the fifth aspect includes the supply fan unit divided to the first supply fan unit and the second supply fan unit, so that each of the first and second supply fan units can be reduced in airflow volume and can be reduced in noise.

### BRIEF DESCRIPTION OF THE DRAWINGS

Fig. 1 is a schematic diagram depicting an exemplary configuration of an air treatment system according to an embodiment.
Fig. 2 is a schematic diagram depicting an exemplary relation among the air treatment system, an indoor space, and the indoor space.
Fig. 3 is a sectional side view of an air treatment unit, as an explanatory view of flows of outdoor air and supply air.
Fig. 4 is a sectional side view of the air treatment unit, as an explanatory view of flows of indoor air and exhaust air.
Fig. 5 is a perspective view depicting an exemplary total heat exchange element.
Fig. 6 is a schematic diagram depicting exemplary configurations of a supply fan unit and an exhaust fan unit
Fig. 7 is a schematic sectional view depicting an exemplary fan included in a fan unit.
Fig. 8 is a block diagram depicting an exemplary control system.
Fig. 9 is a schematic diagram depicting an exemplary configuration of an air treatment system according to a modification example A.
Fig. 10 is a schematic diagram depicting an exemplary configuration of an air treatment system according to a modification example B.
Fig. 11 is a schematic diagram depicting an outline configuration of an air conditioning system.
Fig. 12 is a schematic perspective view depicting exemplary connection of a heat exchanger unit, a duct, a fan unit, and a blow-out port unit.
Fig. 13 is a sectional view depicting an exemplary fan included in the fan unit.
Fig. 14 is a block diagram depicting an exemplary control system.
Fig. 15 is a schematic diagram depicting another exemplary configuration of the fan unit.
Fig. 16 is an explanatory block diagram depicting a connection relation between an air conditioning main controller and an air conditioning fan controller.
Fig. 17 is an explanatory block diagram depicting an exemplary connection relation between the air conditioning main controller and the air conditioning fan controller.
Fig. 18 is an explanatory block diagram depicting another exemplary connection relation between the air conditioning main controller and the air conditioning fan controller.
Fig. 19 is an explanatory block diagram depicting still another exemplary connection relation between the air conditioning main controller and the air conditioning fan controller.
Fig. 20 is an explanatory block diagram depicting a different exemplary connection relation between the air conditioning main controller and the air conditioning fan controller.
Fig. 21 is an explanatory block diagram depicting another different exemplary connection relation between the air conditioning main controller and the air conditioning fan controller.
Fig. 22 is an explanatory block diagram depicting a further different exemplary connection relation between the air conditioning main controller and the air conditioning fan controller.
Fig. 23 is a schematic diagram depicting a configuration of an air conditioning system according to a modification example K.
Fig. 24 is a block diagram depicting a configuration of a controller in Fig. 23.
Fig. 25 is a schematic diagram depicting another exemplary configuration of the air conditioning system according to the modification example K.
Fig. 26 is a block diagram depicting a configuration of a controller in Fig. 25.

### DESCRIPTION OF EMBODIMENTS

### (1) Entire configuration

### (1-1) Air treatment system

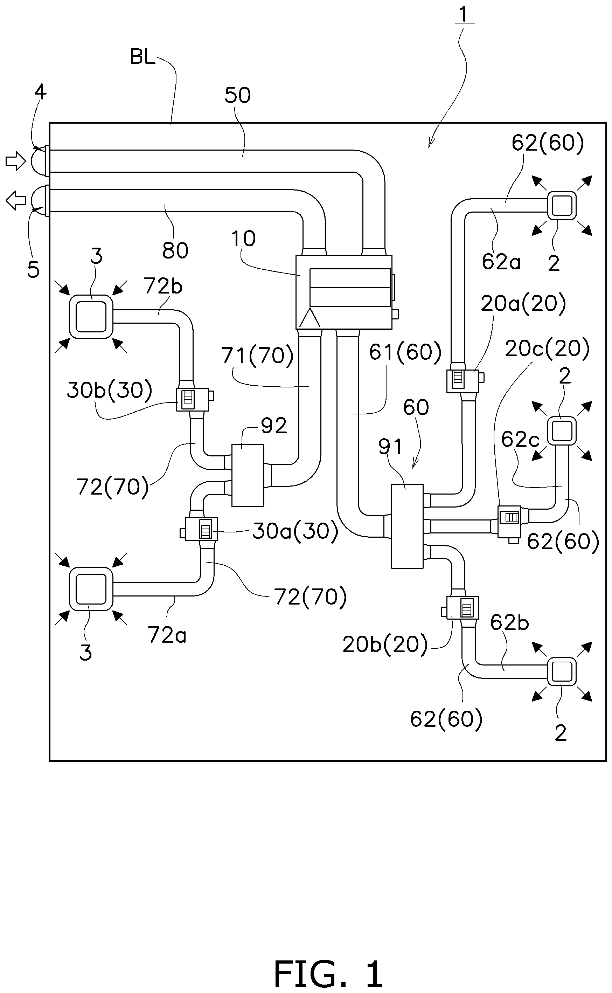

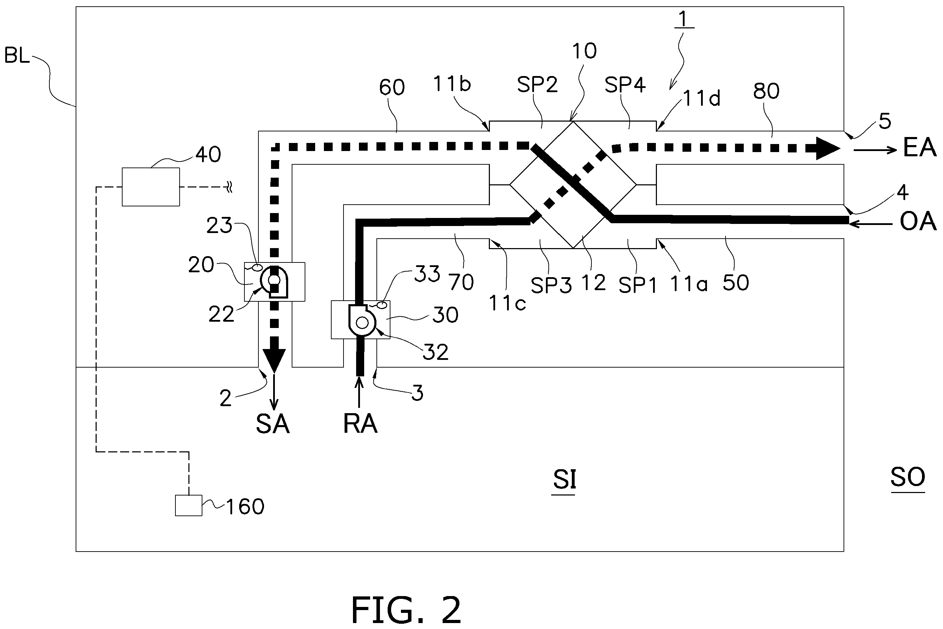

An air treatment system 1 includes an air treatment unit 10, supply fan units 20, and exhaust fan units 30 as depicted in Fig. 1, and also includes a controller 40 as depicted in Fig. 2. Fig. 1 depicts the air treatment system 1 disposed in a ceiling space of one floor in a building BL. The air treatment unit 10 is configured to apply predetermined treatment to air passing through the unit. The predetermined treatment includes filtering for removal of dust in air, changing temperature of the air, changing humidity of the air, filtering for removal of predetermined chemical composition in the air, and filtering for removal of a predetermined pathogen in the air. Examples of the dust include pollen, yellow sand, and PM 2.5. Examples of the predetermined chemical composition include odorant.

The air treatment unit 10 depicted in Fig. 1 does not have a function of actively generating an air flow in the unit. Specifically, the air treatment unit 10 does not include any fan. In the air treatment system 1, the supply fan unit 20 and the exhaust fan unit 30 generate an air flow in the air treatment unit 10.

The air treatment system 1 includes the plurality of supply fan units 20 provided separately from the air treatment unit 10. The air treatment system 1 includes the plurality of exhaust fan units 30 provided separately from the air treatment unit 10.

Fig. 2 schematically depicts an air flow from an indoor space SI to an outdoor space SO, and an air flow from the outdoor space SO to the indoor space SI in the air treatment system 1. Fig. 1 depicts the plurality of supply fan units 20 and the plurality of exhaust fan units 30, whereas Fig. 2 exemplarily depicts an air flow through one of the supply fan units 20 and an air flow through one of the exhaust fan units 30. The indoor space SI is separated from the outdoor space SO, and serves as an air conditioning target space to be air conditioned. The outdoor space SO is a supply source of outdoor air OA as fresh air. The supply fan unit 20 sends the outdoor air OA from the outdoor space SO to the air treatment unit 10, and sends the outdoor air OA treated by the air treatment unit 10 to the indoor space SI. In other words, the supply fan unit 20 is driven to send air to generate an air flow from the outdoor space SO to the indoor space SI through the air treatment unit 10. Air supplied from the air treatment system 1 to the indoor space SI will be called supply air SA.

The exhaust fan unit 30 sends indoor air RA from the indoor space SI to the air treatment unit 10, and sends the indoor air RA treated by the air treatment unit 10 to the outdoor space SO. In other words, the exhaust fan unit 30 is driven to send air to generate an air flow from the indoor space SI to the outdoor space SO through the air treatment unit 10. Air exhausted from the air treatment system 1 to the outdoor space SO will be called exhaust air EA.

Each of the supply fan units 20 includes a first fan 22 having a variable rotation speed. Each of the supply fan units 20 further includes a first airflow volume detection unit 23 configured to detect airflow volume of the first fan 22 or airflow volume corresponding quantity as physical quantity corresponding to the airflow volume, and output a first detection value. Each of the exhaust fan units 30 includes a second fan 32 having a variable rotation speed. Each of the exhaust fan units 30 further includes a second airflow volume detection unit 33 configured to detect airflow volume of the second fan 32 or airflow volume corresponding quantity as physical quantity corresponding to the airflow volume, and output a second detection value.

The controller 40 controls the plurality of supply fan units 20 and the plurality of exhaust fan units 30. The controller 40 controls the rotation speed of the first fan 22 in accordance with the first detection value of the first airflow volume detection unit 23 in each of the supply fan units 20. The controller 40 further controls the rotation speed of the second fan 32 in accordance with the second detection value of the second airflow volume detection unit 33 in each of the exhaust fan units 30.

In an exemplary case where all the plurality of supply fan units 20 increases supply quantity of the supply air SA to be supplied to the indoor space SI in the air treatment system 1, the controller 40 controls to increase the rotation speed of every one of the first fans 22. In an exemplary case where each of the three supply fan units 20 depicted in Fig. 1 is increased in supply quantity by 100 CHM to achieve increase in supply quantity by 300 CHM in total, the controller 40 commands each of the first fans 22 to increase airflow volume by 100 CHM, and each of the first airflow volume detection unit 23 detects increased quantity of the corresponding first fan 22. The controller 40 adjusts the rotation speed of each the first fans 22 such that the first airflow volume detection unit 23 in each of the supply fan units 20 detects 100 CHM as the increased quantity.

When the three supply fan units 20 increase the supply quantity by 300 CHM in the air treatment system 1, two of the exhaust fan units 30 increase exhaust air quantity by 300 CHM. In this case, the controller 40 commands each of the second fans 32 to increase airflow volume by 150 CHM, and each of the second airflow volume detection unit 33 detects increased quantity. The controller 40 adjusts the rotation speed of each the second fans 32 such that the second airflow volume detection unit 33 in each of the exhaust fan units 30 detects 150 CHM as the increased quantity. In this manner, when the air treatment system 1 needs to change airflow volume, the controller 40 is configured to change airflow volume as necessary while balancing supply air quantity and exhaust air quantity.

### (2) Detailed configurations

### (2-1) Air flow path of air treatment system 1

As depicted in Fig. 2, the air treatment system 1 includes an outdoor air duct 50, a supply air duct 60, a return air duct 70, and an exhaust air duct 80. The outdoor air duct 50, the supply air duct 60, the return air duct 70, and the exhaust air duct 80 are connected to the air treatment unit 10.

The outdoor air duct 50 guides the outdoor air OA to be taken in to the air treatment unit 10, from the outdoor space SO to the air treatment unit 10. In other words, the outdoor air duct 50 constitutes an air flow path from the outdoor space SO to the air treatment unit 10. The outdoor air duct 50 extends to an opening 4 opened toward the outdoor space SO. The supply air duct 60 guides, from the air treatment unit 10 to the indoor space SI, the outdoor air OA treated by the air treatment unit 10 and supplied to the indoor space SI. In other words, the supply air duct 60 constitutes an air flow path from the air treatment unit 10 to the indoor space SI. The supply air duct 60 extends to a blow-out port 2 opened toward the indoor space SI.

The return air duct 70 guides from the indoor space SI to the air treatment unit 10, the indoor air RA taken in to the air treatment unit 10 from the indoor space SI. In other words, the return air duct 70 constitutes an air flow path from the indoor space SI to the air treatment unit 10. The return air duct 70 extends to a blow-in port 3 opened toward the indoor space SI. The exhaust air duct 80 guides, from the air treatment unit 10 to the outdoor space SO, the indoor air RA treated by the air treatment unit 10 and supplied to the outdoor space SO. In other words, the exhaust air duct 80 constitutes an air flow path from the air treatment unit 10 to the outdoor space SO. The exhaust air duct 80 extends to an opening 5 opened toward the outdoor space SO.

More specifically, the air treatment system 1 is provided with branch chambers 91 and 92 as depicted in Fig. 1. When the branch chamber 91 is provided, the supply air duct 60 includes a single main duct 61 branched into a plurality of branch ducts 62. In other words, the supply air duct 60 includes the single main duct 61, the branch chamber 91, and the plurality of branch ducts 62. Description is made to a case where there is provided the single branch chamber 91. There may alternatively be provided a plurality of branch chambers 91 and the supply air duct 60 branched by an upstream one of the branch chambers 91 may be further branched by a downstream one of the branch chambers 91 at a position downstream of the upstream branch chamber 91.

When the branch chamber 92 is provided, the return air duct 70 includes a single main duct 71 branched into a plurality of branch ducts 72. In other words, the return air duct 70 includes the single main duct 71, the branch chamber 92, and the plurality of branch ducts 72. Description is made to a case where there is provided the single branch chamber 92. There may alternatively be provided a plurality of branch chambers 92 and the return air duct 70 branched by an upstream one of the branch chambers 92 may be further branched by a downstream one of the branch chambers 92 at a position downstream of the upstream branch chamber 92.

### (2-2) Disposition of supply fan unit 20 and exhaust fan unit 30

The supply fan units 20 are each connected to a corresponding one of the supply air ducts 60. The air treatment system 1 depicted in Fig. 1 includes three branch ducts 62 each connected to a corresponding one of the supply fan units 20. The supply fan units 20 are connected at halfway positions of the branch ducts 62, although the connected positions are not limited to the halfway positions of the branch ducts 62. For example, each of the supply fan units 20 may alternatively be connected to an end adjacent to the blow-out port 2, of the corresponding branch duct 62.

The exhaust fan units 30 are each connected to a corresponding one of the return air ducts 70. The air treatment system 1 depicted in Fig. 1 includes two branch ducts 72 each connected to a corresponding one of the exhaust fan units 30. The exhaust fan units 30 are connected at halfway positions of the branch ducts 72, although the connected positions are not limited to the halfway positions of the branch ducts 72. For example, each of the exhaust fan units 30 may alternatively be connected to an end adjacent to the blow-in port 3, of the corresponding branch duct 72.

For distinction among the respective supply fan units 20, the supply fan units 20 include a first supply fan unit 20a, a second supply fan unit 20b, and a third supply fan unit 20c denoted by reference signs including alphabets. The same applies for distinction among the respective exhaust fan units 30, for distinction among the respective branch ducts 62, and for distinction among the respective branch ducts 72. The plurality of supply fan units 20 in the air treatment system 1 depicted in Fig. 1 includes the first supply fan unit 20a, the second supply fan unit 20b, and the third supply fan unit 20c. The plurality of exhaust fan units 30 in the air treatment system 1 depicted in Fig. 1 includes a first exhaust fan unit 30a and a second exhaust fan unit 30b. In the air treatment system 1 depicted in Fig. 1, the plurality of supply air ducts 60 includes a first branch duct 62a, a second branch duct 62b, and a third branch duct 62c, and the plurality of return air ducts 70 includes a first branch duct 72a and a second branch duct 72b. The first supply fan unit 20a is connected to the first branch duct 62a. The second supply fan unit 20b is connected to the second branch duct 62b. The third supply fan unit 20c is connected to the third branch duct 62c. The first exhaust fan unit 30a is connected to the first branch duct 72a. The second exhaust fan unit 30b is connected to a second return air duct 70b.

### (2-3) Air treatment unit 10

The air treatment unit 10 according to this embodiment is a total heat exchanger. As depicted in Fig. 2 to Fig. 4, the air treatment unit 10 includes a housing 11, a total heat exchange element 12, a first filter 13, and a second filter 14. The housing 11 accommodates the total heat exchange element 12 having a substantially quadrangular prism shape. The housing 11 is provided with an opening 11a for connection to the outdoor air duct 50, an opening 11b for connection to the supply air duct 60, an opening 11c for connection to the return air duct 70, and an opening 11d for connection to the exhaust air duct 80.

The housing 11 has an internal space principally divided into four spaces, namely, a first space SP1, a second space SP2, a third space SP3, and a fourth space SP4. The first space SP1 is provided adjacent to the outdoor air duct 50 with respect to the total heat exchange element 12. The second space SP2 is provided adjacent to the supply air duct 60 with respect to the total heat exchange element 12. The third space SP3 is provided adjacent to the return air duct 70 with respect to the total heat exchange element 12. The fourth space SP4 is provided adjacent to the exhaust air duct 80 with respect to the total heat exchange element 12. Accordingly, the outdoor air duct 50 connects the outdoor space SO and the first space SP1. The supply air duct 60 connects the indoor space SI and the second space SP2. The return air duct 70 connects the indoor space SI and the third space SP3. The exhaust air duct 80 connects the outdoor space SO and the fourth space SP4.

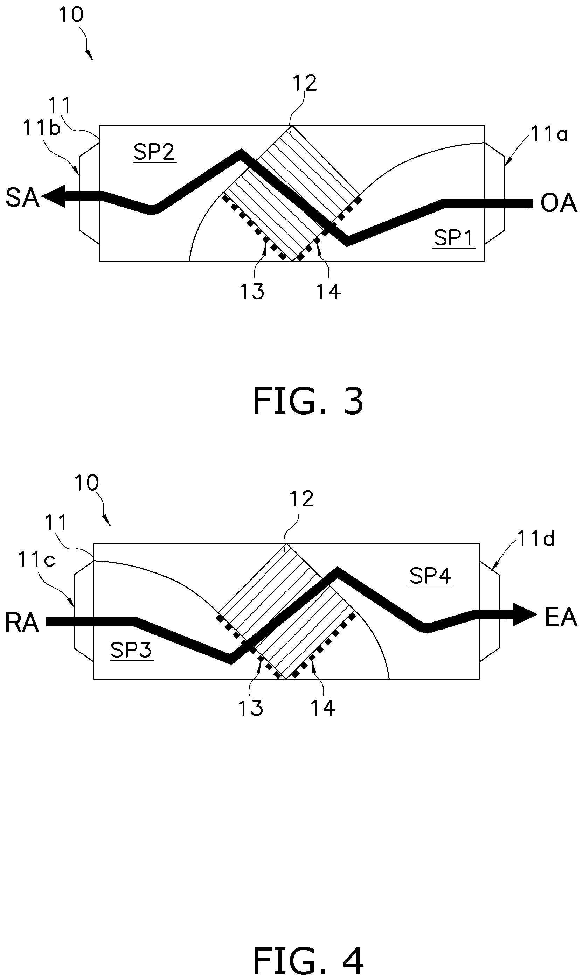

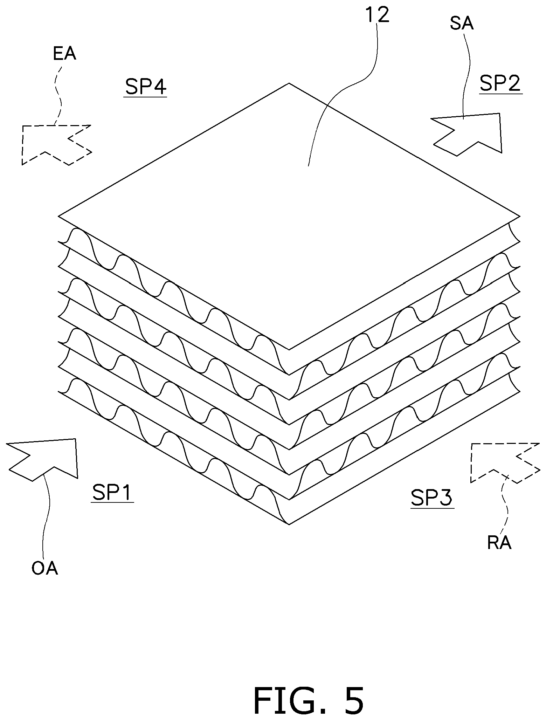

As depicted in a sectional side view of Fig. 3 as well as in Fig. 2, the outdoor air OA in the outdoor space SO flows to the total heat exchange element 12 through the outdoor air duct 50 when the supply fan unit 20 is driven. Air having passed through the total heat exchange element 12 is supplied as fresh supply air SA to the indoor space SI through the supply air duct 60. As depicted in a sectional side view of Fig. 4 as well as in Fig. 2, the indoor air RA in the indoor space SI flows to the total heat exchange element 12 through the return air duct 70 when the exhaust fan unit 30 is driven. Air having passed through the total heat exchange element 12 is exhausted as exhaust air EA to the outdoor space SO. As depicted in Fig. 5, the total heat exchange element 12 causes total heat exchange between the indoor air RA and the outdoor air OA while the indoor air RA and the outdoor air OA are not mixed with each other. In other words, the total heat exchange element 12 causes latent heat exchange and sensible heat exchange simultaneously and continuously between the indoor air RA and the outdoor air OA.

The first filter 13 is disposed to cover a portion exposed to the third space SP3, of the total heat exchange element 12. The second filter 14 is disposed to cover a portion exposed to the first space SP1, of the total heat exchange element 12. Dust can thus be removed from both the outdoor air OA and the indoor air RA before the outdoor air OA and the indoor air RA are supplied to the total heat exchange element 12. This prevents collected dust from flowing into the total heat exchange element 12.

### (2-4) Supply fan unit 20 and exhaust fan unit 30

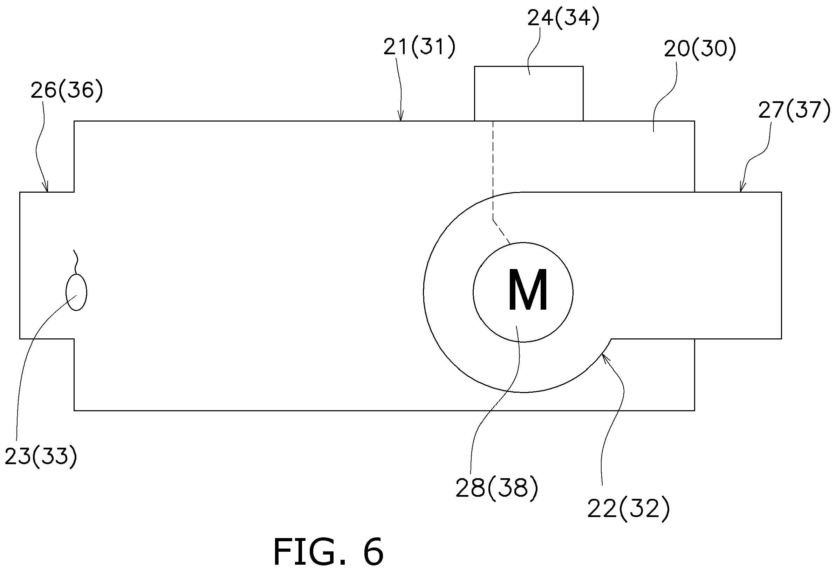

As depicted in Fig. 6, each of the supply fan units 20 includes a unit casing 21, a first fan 22, a first airflow volume detection unit 23, and a fan controller 24. As depicted in Fig. 6, each of the exhaust fan units 30 includes a unit casing 31, a second fan 32, a second airflow volume detection unit 33, and a fan controller 34. Each of the unit casings 21 has an intake port 26 and a blow-out port 27. The unit casing 21 is a case having a space that has a predetermined shape and allows air entering through the intake port 26 and exiting through the blow-out port 27 to flow therethrough. The intake port 26 of each of the unit casings 21 is connected to communicate with the air treatment unit 10. The blow-out port 27 of each of the unit casings 21 is connected with a blow-out port of a corresponding one of the first fans 22. Conditioned air blown out of the first fan 22 is blown out of the blow-out port 2. Each of the unit casings 31 has an intake port 36 and a blow-out port 37. The unit casing 31 is a case having a space that has a predetermined shape and allows air entering through the intake port 36 and exiting through the blow-out port 37 to flow therethrough. The intake port 36 of each of the unit casings 31 is connected to communicate with a corresponding one of the blow-in ports 3. The blow-out port 37 of each of the unit casings 31 is connected with a blow-out port of a corresponding one of the second fans 32. The indoor air RA blown out of the second fan 32 is blown out of the opening 5 through the air treatment unit 10. For clearer description, described below is a case where the supply fan units 20 and the exhaust fan units 30 are configured similarly. The supply fan units 20 will thus be described below while the exhaust fan units 30 may not be described. The plurality of supply fan units 20 and the plurality of exhaust fan units 30 may alternatively be configured differently by exemplarily differentiating between at least one set of the unit casings 21 and 31 the first fans 22 and the second fans 32, and the first airflow volume detection units 23 and the second airflow volume detection units 33 in the plurality of supply fan units 20 and the plurality of exhaust fan units 30.

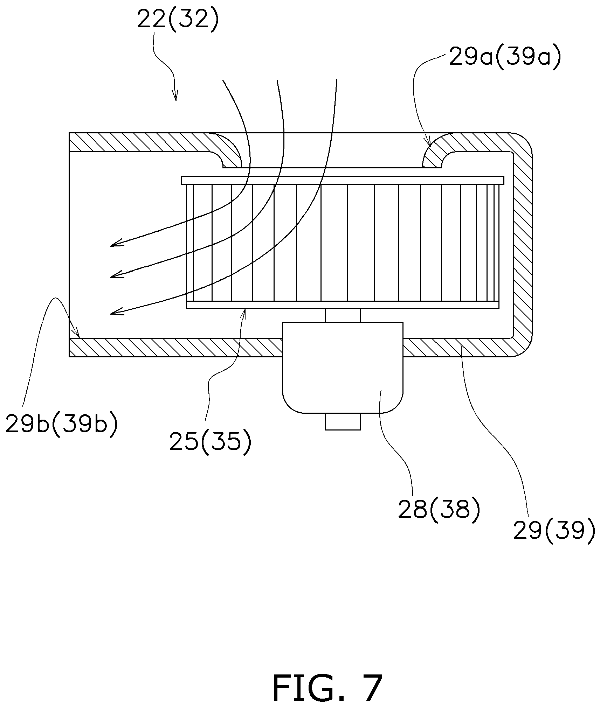

The unit casings 21 each accommodate the first fan 22 and the first airflow volume detection unit 23. The first fan 22 has a fan casing 29 (see Fig. 7). Each of the first fans 22 has the variable rotation speed. The first fan 22 is fixed at a predetermined position in the unit casing 21, and the fan casing 29 has an outlet port 29b connected to the blow-out port 27 of the unit casing 21. The fan casing 29 has an inlet port 29a disposed at a predetermined position in an internal space of the unit casing 21. Examples of the first fan 22 can include a centrifugal fan. Examples of the centrifugal fan functioning as the first fan 22 include a sirocco fan. Fig. 7 depicts the sirocco fan exemplifying the first fan 22. The first fan 22 includes a fan rotor 25 rotatably accommodated in the fan casing 29. The fan rotor 25 is rotated by a fan motor 28. The rotation speed of the first fan 22 can be regarded as a rotation speed of the fan rotor 25. The first fan 22 is increased in airflow volume by increasing the rotation speed of the fan motor 28 for increase in the rotation speed of the fan rotor 25. The first fan 22 is decreased in airflow volume by decreasing the rotation speed of the fan motor 28 for decrease in the rotation speed of the fan rotor 25. The blow-out port of the first fan 22 is connected to the blow-out port 27 of the unit casing 21, so that the airflow volume of the first fan 22 matches supply air volume of air supplied from the blow-out port 2. The first fan 22 can thus be changed in supply air volume by changing the rotation speed of the fan motor 28. The unit casing 21 is provided with the fan controller 24. All the fan controllers 24 are connected to a main controller 41 herein. Each of the fan controllers 24 is connected to the fan motor 28 and is configured to control the rotation speed of the fan motor 28.

The unit casing 31 of each of the exhaust fan units 30 accommodates the second fan 32 and the second airflow volume detection unit 33. As in the supply fan units 20, examples of the second fan 32 can include a centrifugal fan, and specifically a sirocco fan. As in the supply fan units 20, the second fan 32 in each of the exhaust fan units 30 includes a fan rotor 35 rotatably accommodated in a fan casing 39, and the fan rotor 35 is rotated by a fan motor 38.

The first airflow volume detection unit 23 in each of the supply fan units 20 and the second airflow volume detection unit 33 in each of the exhaust fan units 30 are each configured to detect airflow volume of the first fan 22 or the second fan 32, or airflow volume corresponding quantity as physical quantity corresponding to the airflow volume. Description is made below to a case where the first airflow volume detection unit 23 and the second airflow volume detection unit 33 are configured similarly. Accordingly, the first airflow volume detection unit 23 is described below and the second airflow volume detection unit 33 will not be described. In order to detect airflow volume of the first fan 22, the first airflow volume detection unit 23 includes an airflow volume sensor. In order to detect airflow volume corresponding quantity as physical quantity corresponding to the airflow volume of the first fan 22, the first airflow volume detection unit 23 includes a wind speed sensor, a differential pressure sensor, or a pressure sensor. In order for detection of airflow volume with use of the airflow volume sensor, the airflow volume sensor is installed at a predetermined position in the unit casing 21. The unit casing 21, the first fan 22, the intake port 26, the blow-out port 27, and the airflow volume sensor are fixed in terms of shapes and installed positions. There is thus executed a test to find a relation between a measurement value of the installed airflow volume sensor and airflow volume of the first fan 22. The fan controller 24 stores, for example, a table indicating the relation between the measurement value of the airflow volume sensor and the airflow volume of the first fan 22.

In order to detect wind speed as airflow volume corresponding quantity, the first airflow volume detection unit 23 includes a wind speed sensor configured to detect wind speed at a predetermined position in the unit casing 21. The unit casing 21, the first fan 22, the intake port 26, the blow-out port 27, and the wind speed sensor are fixed in terms of shapes and installed positions. There is thus executed a test to find a relation between a measurement value of the installed wind speed sensor and airflow volume of the first fan 22. The fan controller 24 stores, for example, a table indicating the relation between the measurement value of the wind speed sensor and the airflow volume of the first fan 22.

In order to detect differential pressure as airflow volume corresponding quantity, the first airflow volume detection unit 23 includes a differential pressure sensor configured to detect a difference between static pressure values at two predetermined positions in the unit casing 21. The unit casing 21, the first fan 22, the intake port 26, the blow-out port 27, and the differential pressure sensor are fixed in terms of shapes and installed positions. There is thus executed a test to find a relation between a measurement value of the installed differential pressure sensor and airflow volume of the first fan 22. The fan controller 24 stores, for example, a table indicating the relation between the measurement value of the differential pressure sensor and the airflow volume of the first fan 22.

In order to detect static pressure as airflow volume corresponding quantity, the first airflow volume detection unit 23 includes a pressure sensor configured to detect static pressure at a predetermined position in the unit casing 21. The unit casing 21, the first fan 22, the intake port 26, the blow-out port 27, and the pressure sensor are fixed in terms of shapes and installed positions. There is thus executed a test to find a relation between a measurement value of the installed pressure sensor and airflow volume of the first fan 22. The fan controller 24 stores, for example, a table indicating the relation between the measurement value of the pressure sensor and the airflow volume of the first fan 22.

A method of determining airflow volume in accordance with a measurement value is not limited to a method of converting the measurement value to airflow volume with reference to the table. Each of the fan controllers 24 and 34 may alternatively be configured to calculate airflow volume from a measurement value with reference to, instead of the table, a relational expression indicating a relation between each parameter and airflow volume.

The fan controller 24 receives a first command value for airflow volume of the first fan 22 from the main controller 41. The fan controller 24 controls the rotation speed of the first fan 22 in accordance with the first command value for airflow volume and a detection value of airflow volume or airflow volume corresponding quantity detected by the first airflow volume detection unit 23. The fan controller 24 exemplarily controls the rotation speed of the first fan 22 such that the airflow volume indicated by the detection value approaches the first command value. Specifically, the fan controller 24 decreases the rotation speed of the first fan 22 if the airflow volume indicated by the detection value is more than the first command value, and increases the rotation speed of the first fan 22 if the airflow volume indicated by the detection value is less than the first command value.

The fan controller 34 receives a second command value for airflow volume of the second fan 32 from the main controller 41. The fan controller 34 controls the rotation speed of the second fan 32 in accordance with the second command value for airflow volume and a detection value of airflow volume or airflow volume corresponding quantity detected by the second airflow volume detection unit 33. The fan controller 34 exemplarily controls the rotation speed of the second fan 32 such that the airflow volume indicated by the detection value approaches the second command value. Specifically, the fan controller 34 decreases the rotation speed of the second fan 32 if the airflow volume indicated by the detection value is more than the second command value, and increases the rotation speed of the second fan 32 if the airflow volume indicated by the detection value is less than the second command value.

The fan controllers 24 and 34 are associated with a remote controller 160 or the like. In an exemplary case where set airflow volume is inputted to the remote controller 160, the main controller 41 transmits, to the fan controllers 24 and 34 in the supply fan units 20 and the exhaust fan units 30, the first command value and the second command value according to the set airflow volume of the remote controller 160. The main controller 41 accordingly determines the first command value and the second command value in accordance with the set airflow volume inputted to the remote controller 160. When the fan controllers 24 and 34, which have received the first command value and the second command value of a case where the airflow volume indicated by the detection value matches the set airflow volume, receives a larger first command value and a larger second command value, the first fan 22 and the second fan 32 are each increased in the rotation speed to increase airflow volume of each of the first fan 22 and the second fan 32.

### (2-5) Control system

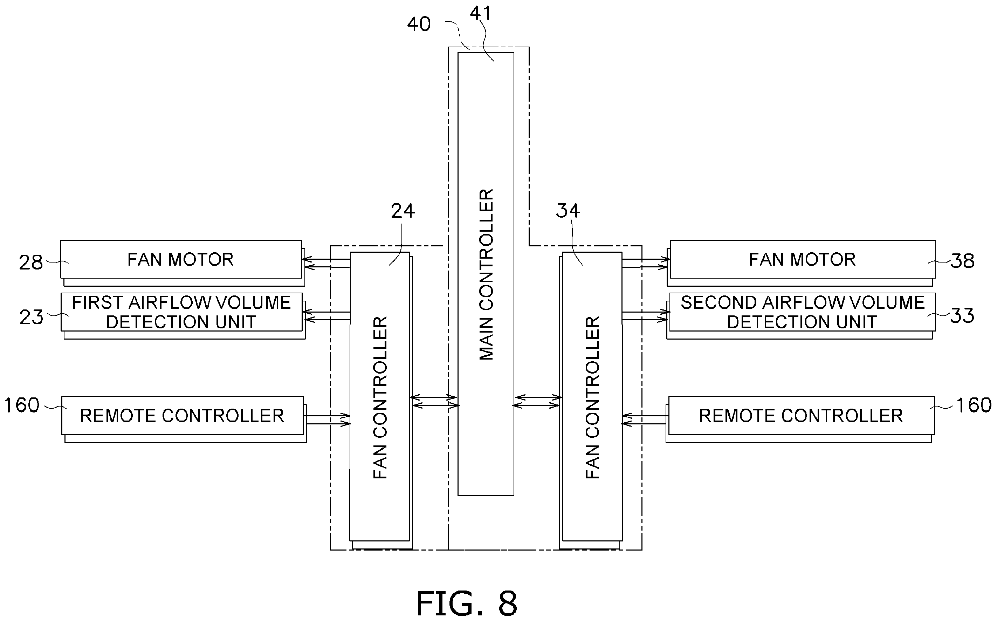

As depicted in Fig. 8, the controller 40 includes the main controller 41 and the fan controllers 24 and 34. The main controller 41 is connected to the plurality of fan controllers 24 and 34. The main controller 41 is connected to each remote controller 160 via the fan controllers 24 and 34. The remote controller 160 exemplarily corresponds to the blow-out port 2 or to both the blow-out port 2 and the blow-in port 3, and is connected to the supply fan unit 20 and the exhaust fan unit 30. Description is made to the case where the remote controller 160 is connected to the main controller 41 via the fan controllers 24 and 34. The remote controller 160 may alternatively be connected directly to the main controller 41. Exemplified herein is the case where the main controller 41, the plurality of fan controllers 24 and 34, and the plurality of remote controllers 160 are connected wiredly. All the controllers or part of the controllers may alternatively be connected by wireless communication.

The main controller 41, the plurality of fan controllers 24 and 34, and the plurality of remote controllers 160 are each embodied by a computer or the like. The computer constituting each of the main controller 41, the plurality of fan controllers 24 and 34, and the plurality of remote controllers 160 includes a control computing device and a storage device. Examples of the control computing device can include a processor such as a CPU or a GPU. The control computing device reads a program stored in the storage device and executes predetermined image processing or arithmetic processing in accordance with the program. The control computing device is configured to further write a result of the arithmetic processing to the storage device, and read information stored in the storage device, in accordance with the program. The main controller 41, the plurality of fan controllers 24 and 34, and the plurality of remote controllers 160 may alternatively be constituted by an integrated circuit (IC) configured to execute control similar to control with use of a CPU and a memory. Examples of the IC mentioned herein include a large-scale integrated circuit (LSI), an application-specific integrated circuit (ASIC), a gate array, and a field programmable gate array (FPGA).

The supply fan units 20 are each provided with the first airflow volume detection unit 23. The exhaust fan units 30 are each provided with the second airflow volume detection unit 33. The first airflow volume detection unit 23 detects airflow volume through the unit casing 21 of the supply fan unit 20. The second airflow volume detection unit 33 detects airflow volume through the unit casing 31 of the exhaust fan unit 30. The first airflow volume detection unit 23 is connected to the fan controller 24, and transmits, to the fan controller 24, data of the first detection value thus detected. The second airflow volume detection unit 33 is connected to the fan controller 34, and transmits, to the fan controller 34, data of the second detection value thus detected. Each of the first airflow volume detection unit 23 and the second airflow volume detection unit 33 may alternatively be configured to detect an airflow direction so as to sense a backflow.

Each of the remote controllers 160 is configured to command to turn on or turn off the air treatment system 1 as well as the supply fan units 20 and the exhaust fan units 30 or either the air treatment system 1 or the supply fan units 20 and the exhaust fan units 30, and input set airflow volume. The remote controller 160 is configured to input the set airflow volume by means of a numerical value or the like.

### (3) Characteristics

(3-1)
   As described above, the controller 40 in the air treatment system 1 is configured to control the rotation speed of the first fan 22 in accordance with the first detection value of the first airflow volume detection unit 23 in each of the supply fan units 20, and control the rotation speed of the second fan 32 in accordance with the second detection value of the second airflow volume detection unit 33 in each of the exhaust fan units 30. When the air treatment system 1 needs change in airflow volume, the supply fan units 20 and the exhaust fan units 30 can appropriately change airflow volume as necessary.
(3-2)
   The supply fan units 20 are each provided with the fan controller 24 functioning as a first control unit, and the exhaust fan units 30 are each provided with the fan controller 34 functioning as the second control unit. The fan controllers 24 and 34 receive, from outside the supply fan unit 20 and the exhaust fan unit 30, the first command value and the second command value indicating airflow volume of the first fan 22 and the second fan 32. The fan controllers 24 and 34 are provided to control the numbers of revolutions of the first fan 22 and the second fan 32 in accordance with the first command value, the second command value, the first detection value, and the second detection value. This configuration facilitates construction of a control system upon installation and addition of the supply fan unit 20 and the exhaust fan unit 30.
(3-3)
   In the air treatment system 1, the supply fan units 20 and the exhaust fan units 30 are connected to the identical air treatment unit 10. In this configuration, the supply fan units 20 and the exhaust fan units 30 receive the first command value and the second command value from the main controller 41. The fan controllers 24 and 34 in the supply fan units 20 and the exhaust fan units 30 refer to the first command value and the second command value thus received and do not need to calculate the first command value or the second command value, which reduces control loads.
(3-4)
   The plurality of exhaust fan units 30 includes the first exhaust fan unit 30a and the second exhaust fan unit 30b. The first exhaust fan unit 30a is connected to the first branch duct 72a, and the second exhaust fan unit 30b is connected to the second branch duct 72b. An exhaust load can thus be divisionally applied to the first exhaust fan unit 30a and the second exhaust fan unit 30b, so that each of the exhaust fan units 30 can be reduced in airflow volume and can be reduced in noise generated at the exhaust fan units 30. The first branch duct 72a exemplifies the first return air duct, and the second branch duct 72b exemplifies the second return air duct.
(3-5)
   The plurality of supply fan units 20 includes the first supply fan unit 20a, the second supply fan unit 20b, and the third supply fan unit 30c. The first supply fan unit 20a is connected to the first branch duct 62a, the second supply fan unit 20b is connected to the second branch duct 62b, and the third supply fan unit 20c is connected to the third branch duct 62c. A supply load can thus be divisionally applied to the first supply fan unit 20a, the second supply fan unit 20b, and the third supply fan unit 20c, so that each of the supply fan units 20 can be reduced in airflow volume and can be reduced in noise generated at the supply fan units 20. The first branch duct 62a exemplifies the first supply air duct, and the second branch duct 62b exemplifies the second supply air duct.

### (4) Modification examples

### (4-1) Modification example A

The above embodiment refers to the case where the plurality of supply fan units 20 and the plurality of exhaust fan units 30 are provided for the single indoor space SI (a single floor). Disposition of the plurality of supply fan units 20 and the plurality of exhaust fan units 30 are not limited to disposition for the single indoor space SI as depicted in Fig. 1.

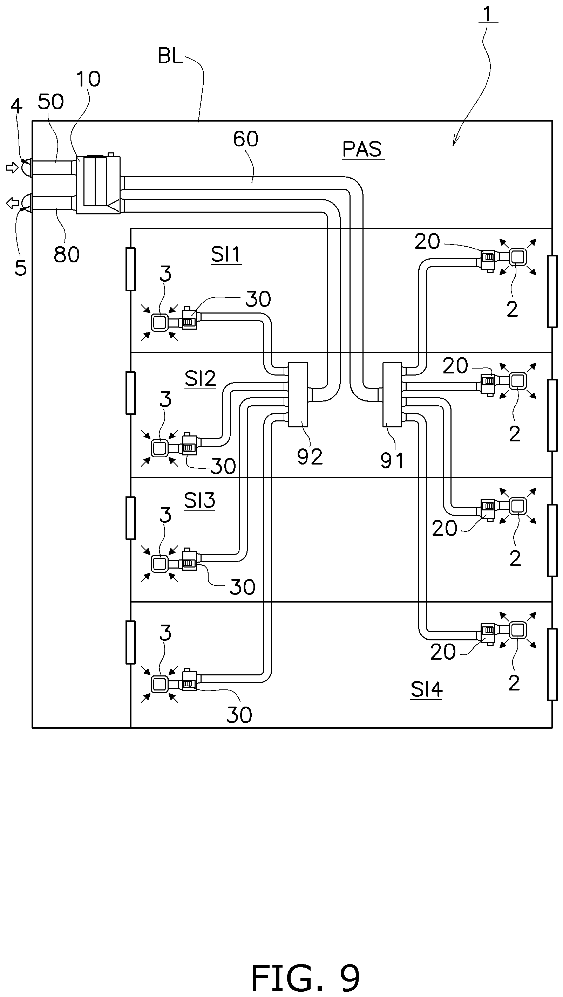

In a case where a floor is divided into a passage PAS and a plurality of rooms SI1 to SI4 as depicted in Fig. 9 or the like, the air treatment unit 10 may be disposed in a ceiling space of the passage PAS and the supply fan units 20 and the exhaust fan units 30 may be disposed in ceiling spaces of the rooms SI1 to SI4.

Furthermore, the single air treatment unit 10 may be connected to the plurality of supply fan units 20 and the plurality of exhaust fan units 30 disposed on a plurality of floors.

### (4-2) Modification example B

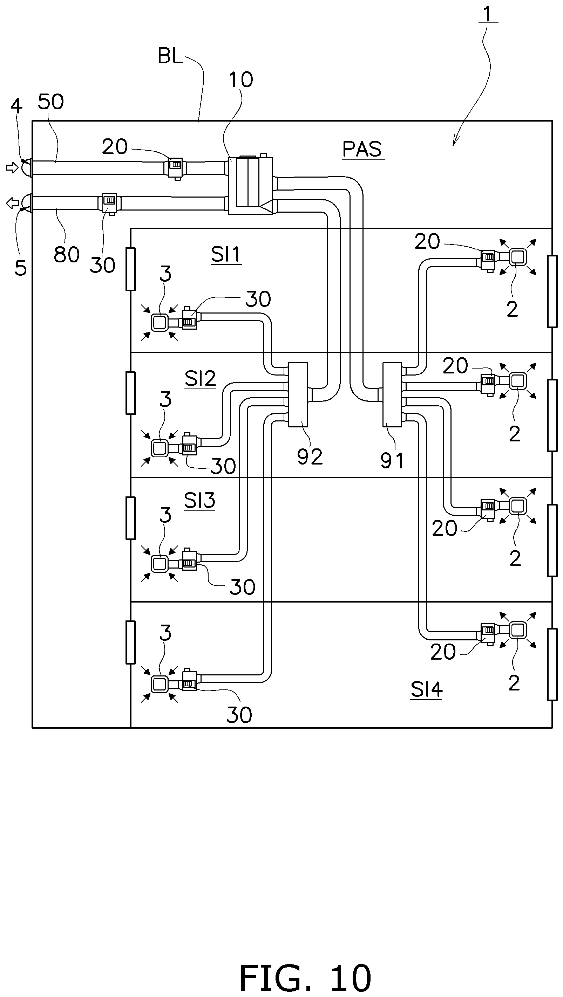

The above embodiment refers to the exemplary case where the supply fan units 20 are each connected to the corresponding supply air duct 60 and the exhaust fan units 30 are each connected to the corresponding return air duct 70. The duct connected with the supply fan unit 20 is not limited to the supply air duct 60. As exemplarily depicted in Fig. 10, the supply fan unit 20 may alternatively be connected to the outdoor air duct 50. Furthermore, the duct connected with the exhaust fan unit 30 is not limited to the return air duct 70. As exemplarily depicted in Fig. 10, the exhaust fan unit 30 may alternatively be connected to the exhaust air duct 80. In this case, the single or plurality of supply fan units 20 may be connected to the corresponding supply air duct 60 and the exhaust fan units 30 may be connected to the exhaust air duct 80.

### (4-3) Modification example C

The above embodiment refers to the case where the air treatment unit 10 is the total heat exchanger including the total heat exchange element 12. The air treatment unit 10 is, however, not limited to the total heat exchanger. The air treatment unit 10 may alternatively include at least one of a humidifier and a dehumidifier. The air treatment unit 10 may still alternatively be a ventilator including a filter. The air treatment unit 10 may further alternatively include at least one of a heater and a cooling apparatus. In any one of these cases, the air treatment unit 10 does not have any blowing function.

### (4-4) Modification example D

The air treatment unit 10 may alternatively be a humidity control outdoor processing device including a first heat exchanger provided with a moisture absorbent, a second heat exchanger provided with a moisture absorbent, a compressor configured to circulate a refrigerant between the first heat exchanger and the second heat exchanger, a four-way valve configured to change a circulation direction of the refrigerant, and an expansion valve provided between the first heat exchanger and the second heat exchanger. The humidity control outdoor processing device can be switched between a first state and a second state. The humidity control outdoor processing device in the first state causes outdoor air to pass through the first heat exchanger to generate supply air and causes indoor air to pass through the second heat exchanger to generate exhaust air. The humidity control outdoor processing device in the second state causes outdoor air to pass through the second heat exchanger to generate supply air and causes indoor air to pass through the first heat exchanger to generate exhaust air. For example, the moisture absorbent is applied directly to each of the first heat exchanger and the second heat exchanger. The moisture absorbent acquires necessary heat directly from the first heat exchanger and the second heat exchanger to absorb and release moisture. The compressor, the first heat exchanger, the second heat exchanger, and the expansion valve constitute a heat pump. There is provided a circuit connecting the compressor, the first heat exchanger, the second heat exchanger, and the expansion valve achieves a vapor compression refrigeration cycle.

During dehumidifying operation, the humidity control outdoor processing device is in the first state and causes heat exchange between a gaseous refrigerant compressed by the compressor and indoor air in the second heat exchanger. The refrigerant liquefied by the second heat exchanger is decompressed and expanded by the expansion valve and is sent to the first heat exchanger. The first heat exchanger causes heat exchange between the refrigerant and outdoor air. The refrigerant subjected to heat exchange at the second heat exchanger returns to the compressor. Moisture in the outdoor air having passed through the first heat exchanger is absorbed to the absorbent of the first heat exchanger to dry supply air.

When the moisture absorbent of the first heat exchanger fully absorbs moisture, the humidity control outdoor processing device is switched from the first state into the second state, such that the four-way valve causes the gaseous refrigerant compressed by the compressor to be discharged to the first heat exchanger and a liquid refrigerant acquired after heat exchange at the first heat exchanger enters the second heat exchanger.

During dehumidifying operation, the humidity control outdoor processing device is in the second state and causes heat exchange between a gaseous refrigerant compressed by the compressor and indoor air in the first heat exchanger. The refrigerant liquefied by the first heat exchanger is decompressed and expanded by the expansion valve and is sent to the second heat exchanger. The second heat exchanger causes heat exchange between the refrigerant and outdoor air. The refrigerant subjected to heat exchange at the first heat exchanger returns to the compressor. Moisture in the outdoor air having passed through the second heat exchanger is absorbed to the absorbent of the second heat exchanger to dry supply air. Moisture in indoor air having passed through the first heat exchanger is released from the absorbent to moisten exhaust air.

When the moisture absorbent of the second heat exchanger fully absorbs moisture, the humidity control outdoor processing device is switched from the second state into the first state, such that the four-way valve causes the gaseous refrigerant compressed by the compressor to be discharged to the second heat exchanger and a liquid refrigerant acquired after heat exchange at the second heat exchanger enters the first heat exchanger.

During humidifying operation, the humidity control outdoor processing device is in the second state and causes heat exchange between a gaseous refrigerant compressed by the compressor and indoor air in the second heat exchanger. The refrigerant liquefied by the second heat exchanger is decompressed and expanded by the expansion valve and is sent to the first heat exchanger. The first heat exchanger causes heat exchange between the refrigerant and outdoor air. The refrigerant subjected to heat exchange at the second heat exchanger returns to the compressor. Moisture in indoor air having passed through the first heat exchanger is absorbed to the absorbent of the first heat exchanger to dry exhaust air.

When the moisture absorbent of the first heat exchanger fully absorbs moisture, the humidity control outdoor processing device is switched from the second state into the first state, such that the four-way valve causes the gaseous refrigerant compressed by the compressor to be discharged to the first heat exchanger and a liquid refrigerant acquired after heat exchange at the first heat exchanger enters the second heat exchanger.

During humidifying operation, the humidity control outdoor processing device is in the first state and causes heat exchange between a gaseous refrigerant compressed by the compressor and outdoor air in the first heat exchanger. The refrigerant liquefied by the first heat exchanger is decompressed and expanded by the expansion valve and is sent to the second heat exchanger. The second heat exchanger causes heat exchange between the refrigerant and indoor air. The refrigerant subjected to heat exchange at the first heat exchanger returns to the compressor. Moisture is released from the absorbent of the first heat exchanger to the outdoor air having passed through the first heat exchanger to moisten supply air. Moisture in indoor air having passed through the second heat exchanger is absorbed to the absorbent to dry exhaust air.

When the moisture absorbent of the first heat exchanger fully releases moisture, the humidity control outdoor processing device is switched from the first state into the second state, such that the four-way valve causes the gaseous refrigerant compressed by the compressor to be discharged to the second heat exchanger and a liquid refrigerant acquired after heat exchange at the second heat exchanger enters the first heat exchanger.

### (4-5) Modification example E

In the air treatment system 1 according to the above embodiment, the total heat exchange element 12 and the blow-out port 2 may alternatively interpose a heat exchanger for recovery of heat from the total heat exchange element 12 simultaneously with cooling of supply air. Examples of the heat exchanger include a direct expansion coil configured to cool passing air. The direct expansion coil may be built in the air treatment unit 10.

In the air treatment system 1 according to the above embodiment, the total heat exchange element 12 and the blow-out port 2 may still alternatively interpose a heat exchanger and a humidifier for recovery of heat from the total heat exchange element 12 simultaneously with heating and humidification of supply air. Examples of the heat exchanger include a direct expansion coil configured to heat passing air. The direct expansion coil may be built in the air treatment unit 10.

The air treatment unit 10 according to the above embodiment may alternatively be configured to be switched, when there is no need to adjust room temperature, into a state of exhausting, as exhaust air, indoor air having not passed through the total heat exchange element and taking in to the indoor space, as supply air, outdoor air not subjected to total heat exchange.

### (4-6) Modification example F

The above embodiment refers to the case where the air treatment system 1 includes the plurality of supply fan units 20 and the plurality of exhaust fan units 30. The air treatment system 1 may alternatively include a single supply fan unit 20 and a single exhaust fan unit 30. In the air treatment system including the single supply fan unit 20 and the single exhaust fan unit 30, the supply fan unit 20 is provided to the outdoor air duct 50 or the supply air duct 60, and the exhaust fan unit 30 is provided at the return air duct 70 or the exhaust air duct 80.

The above embodiment refers to the case where the air treatment system 1 includes the three supply fan units 20 respectively connected to the three branch ducts 62 of the supply air duct 60. The air treatment system 1 may alternatively include two or more supply fan units 20 respectively connected to two or more branch ducts 62. The same may apply to the return air duct 70 and the exhaust fan units 30, and there may be provided two or more exhaust fan units 30 respectively connected to two or more branch ducts 72.

### (4-7) Modification example G

The above embodiment refers to the case where the air treatment system 1 separately includes the main controller 41 and the fan controllers 24 and 34. The main controller 41 may alternatively be not separated from the fan controllers 24 and 34. The air treatment system 1 may exemplarily include a centralized controller collectively having the functions of the main controller 41 and the fan controllers 24 and 34. In this case, the centralized controller may be exemplarily configured to calculate the first command value and the second command value and control the supply fan units 20 and the exhaust fan units 30 in accordance with the first command value and the second command value.

### (4-8) Modification example H

The above embodiment refers to the exemplary case where the air treatment unit 10 is a static total heat exchanger. The air treatment unit 10 may alternatively be a rotary total heat exchanger.

### (4-9) Modification example I

The above embodiment exemplifies only the air treatment system 1 as a system configured to treat air in the indoor space SI. The air treatment system 1 may alternatively be configured to treat air in the indoor space SI as the air conditioning target space in combination with an air conditioning system K1 to be described later.

### (4-9-1) Entire configuration

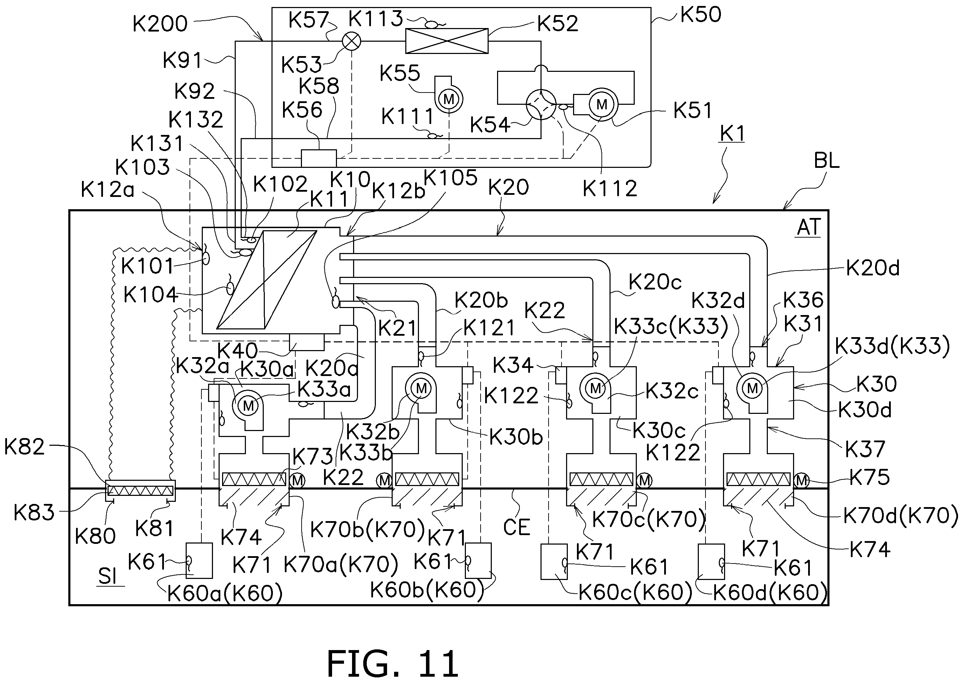

Fig. 11 depicts the air conditioning system K1 configured to supply the indoor space SI as the air conditioning target space with conditioned air. As depicted in Fig. 11, the air conditioning system K1 includes a heat exchanger unit K10, a plurality of ducts K20, a plurality of air conditioning fan units K30, and an air conditioning controller K300 (see Fig. 5). The air conditioning system K1 generates conditioned air through heat exchange at the heat exchanger unit K10, and supplies the indoor space SI with the conditioned air thus generated through a plurality of distribution flow paths. Each of the ducts K20 is disposed at one of the distribution flow paths. Each of the air conditioning fan units K30 is disposed at one of the distribution flow paths. For distinction between the plurality of ducts K20, the reference sign of the duct K20 additionally includes an alphabet subscript such as K20a. The ducts K20 herein include four ducts K20a to K20d. Similarly, the air conditioning fan units K30 include four air conditioning fan units K30a to K30d. Furthermore, there are provided blow-out port units K70 and air conditioning remote controllers K60 including four blow-out port units K70a to K70d and air conditioning remote controllers K60a to K60d, respectively. Each of the blow-out port units K70a to K70d is disposed at one of the distribution flow paths.

The heat exchanger unit K10 includes a utilization heat exchanger K11. The heat exchanger unit K10 has a function of generating conditioned air through heat exchange at the utilization heat exchanger K11. Each of the ducts K20 has a first end K21 connected to the heat exchanger unit K10. The plurality of ducts K20 is a plurality of pipes provided to send conditioned air generated by the heat exchanger unit K10 and has a function of distributing the conditioned air. In other words, the plurality of ducts K20 is provided to distribute conditioned air having passed through the utilization heat exchanger K11 of the heat exchanger unit K10.

The plurality of the air conditioning fan units K30 is connected to second ends K22 of the plurality of ducts K20. In this case, one of the ducts K20a connected to the heat exchanger unit K10 is connected to a corresponding one of the air conditioning fan units K30a. Similarly, the air conditioning fan units K30b to K30d are respectively connected to the corresponding ducts K20b to K20d. Description is made to the ducts K20 each having the single first end K21 and the single second end K22. Each of the ducts K20 may alternatively be branched to have a single first end K21 and a plurality of second ends K22. In this case, the air conditioning fan units K30 may be respectively connected to the plurality of second ends K22 thus branched. The air conditioning fan units K30a to K30d are connected to the blow-out port units K70a to K70d and the air conditioning remote controllers K60a to K60d.

The air conditioning system K1 has a plurality of air outlets K71 provided in the indoor space SI. Each of the air conditioning fan units K30 supplies a corresponding one of the air outlets K71 with conditioned air. In order to supply the air outlets K71 with conditioned air, the air conditioning fan units K30 suck conditioned air from the heat exchanger unit K10 through the ducts K20. Each of the air conditioning fan units K30 has a fan K32 accommodated in a casing K31 of the air conditioning fan unit K30 in order to suck conditioned air. Each of the fans K32 sends air from the second end K22 of the corresponding duct K20 toward the corresponding air outlet K71. Each of the air conditioning fan units K30 may include a single or a plurality of fans K32. In this case, the casings K31 of the air conditioning fan units K30a to K30d accommodate fans K32a to K32d one by one.

The air conditioning fan units K30 are each configured to change, by means of an actuator, individual supply air volume of conditioned air supplied to the corresponding air outlet K71. The supply air volume is volume of air supplied to the indoor space SI per unit time. In this case, the actuator is a fan motor K33 having a variable rotation speed. There are provided four fan motors K33a to K33d individually having variable numbers of revolutions. The fan motors K33a to K33d are individually varied in the numbers of revolutions to achieve individual change in supply air volume of the air conditioning fan units K30a to K30d.

The air conditioning controller K300 controls the plurality of actuators to control the supply air volume of each of the air conditioning fan units K30. In more detail, the air conditioning controller K300 includes an air conditioning main controller K40 configured to control the plurality of actuators in accordance with a plurality of commands on the supply air volume of the plurality of air conditioning fan units K30. In the air conditioning system K1 according to the modification example I, the air conditioning main controller K40 transmits a command on increase or decrease in supply air volume to each of the actuators. The "command on increase or decrease in supply air volume" is issued not only to directly increase or decrease a parameter of supply air volume in order for increase or decrease in supply airflow volume. Examples of the "command on increase or decrease in supply air volume" include a command to increase or decrease a parameter of wind speed in a case where a command to increase or decrease the parameter of the wind speed of the air conditioning fan unit K30 is issued and supply airflow volume is increased or decreased due to increase or decrease in wind speed according to such increase or decrease of the parameter of the wind speed. The examples of the "command on increase or decrease in supply air volume" also include a command to increase or decrease a parameter of differential pressure in a case where a command to increase or decrease the parameter of the differential pressure at predetermined positions in the heat exchanger unit K10, the duct K20, and the air conditioning fan unit K30 is issued and supply airflow volume is increased or decreased due to increase or decrease of the parameter of the differential pressure. As described above, the examples of the "command on increase or decrease in supply air volume" include directly commanding increase or decrease in supply airflow volume as well as indirectly commanding increase or decrease in supply airflow volume. The air conditioning system K1 including the air conditioning main controller K40 of the air conditioning controller K300 will be described later in terms of its control system.

The air conditioning system K1 further includes the configurations described above, as well as a heat source unit K50, the air conditioning remote controllers K60, the blow-out port units K70, a blow-in port unit K80, and various sensors. The sensors included in the air conditioning system K1 will be described later.

### (4-9-2) Detailed configurations

### (4-9-2-1) Heat exchanger unit K10

The heat exchanger unit K10 includes the utilization heat exchanger K11, a hollow housing K12 accommodating the utilization heat exchanger K11, and the air conditioning main controller K40. The housing K12 has a single air inlet port K12a connected to a blow-in port K81, and a plurality of air outlet ports K12b connected to the plurality of ducts K20. Exemplified below is the case where there is provided the single air inlet port K12a. There may alternatively be provided a plurality of air inlet ports K12a. The utilization heat exchanger K11 is exemplarily of a fin and tube type, and causes heat exchange between air passing between heat transfer fins and a refrigerant flowing in a heat transfer tube. When air sucked through the air inlet port K12a passes through the utilization heat exchanger K11, heat is exchanged between the air and the refrigerant (heating medium) passing through the utilization heat exchanger K11 to generate conditioned air. The conditioned air generated by the utilization heat exchanger K11 is sucked into the ducts K20a to K20b through the air outlet ports K12b.

The heat exchanger unit K10 does not include any fan. The heat exchanger unit K10 can suck air through the air inlet port K12a because the heat exchanger unit K10 has internal negative pressure when all the plurality of ducts K20 sucks air through the plurality of air outlet ports K12b.

### (4-9-2-2) Duct K20

The plurality of ducts K20 having the function of distributing conditioned air connects the plurality of air outlet ports K12b of the heat exchanger unit K10 and the plurality of air conditioning fan units K30. Described below is the case where the air conditioning fan units K30 and the blow-out port units K70 are connected directly. Each of the air conditioning fan units K30 and the corresponding blow-out port unit K70 may alternatively interpose the duct K20 to connect the air conditioning fan unit K30 and the blow-out port unit K70.

Examples of the duct K20 may include a metal pipe having a fixed shape, and a pipe made of a freely bent material. The ducts K20 thus configured are connected to enable various dispositions of the heat exchanger unit K10, the plurality of air conditioning fan units K30, and the plurality of blow-out port units K70.

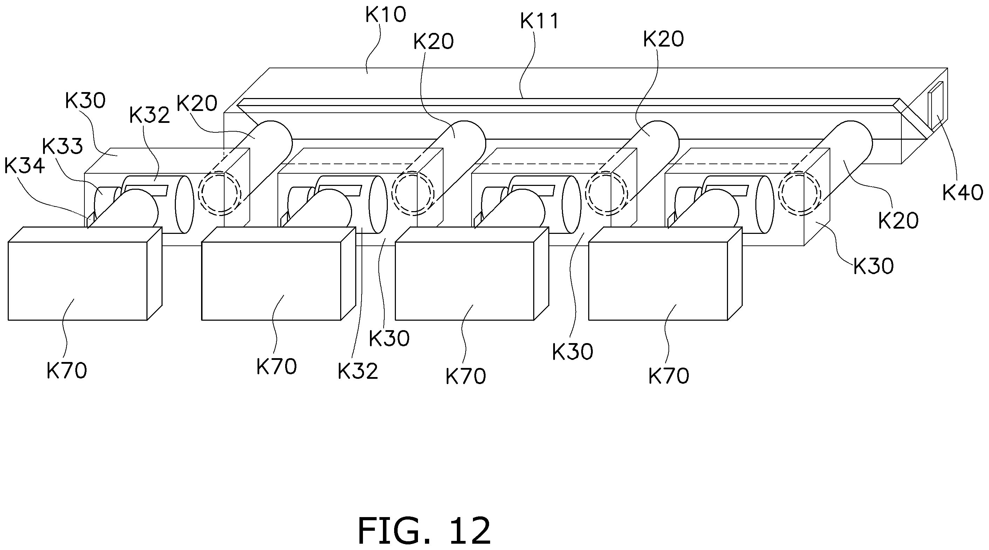

Fig. 12 conceptually depicts the heat exchanger unit K10, four air conditioning fan units K30, and four blow-out port units K70 connected in a ceiling space chamber AT. The heat exchanger unit K10, the air conditioning fan units K30, and the blow-out port units K70 thus configured are easily formed to be thin and may accordingly be disposed in a space below the floor of the indoor space SI.

### (4-9-2-3) Air conditioning fan unit K30

Examples of the fan K32 included in each of the air conditioning fan units K30 can include a centrifugal fan. Examples of the centrifugal fan adopted as the fan K32 include a sirocco fan. The casing K31 included in each of the air conditioning fan units K30 has an intake port K36 and an exhaust port K37. The intake port K36 of each of the casings K31 is connected with the second end K22 of a corresponding one of the ducts K20. The exhaust port K37 of each of the casings K31 is connected with a blow-out port of a corresponding one of the fans K32 and is also connected with a corresponding one of the blow-out port unit K70. Conditioned air blown out of the fan K32 passes through the blow-out port unit K70 and is blown out of the air outlet K71.

The casing K31 is provided with an air conditioning fan controller K34. All the air conditioning fan controllers K34 are connected to the air conditioning main controller K40 in this case.

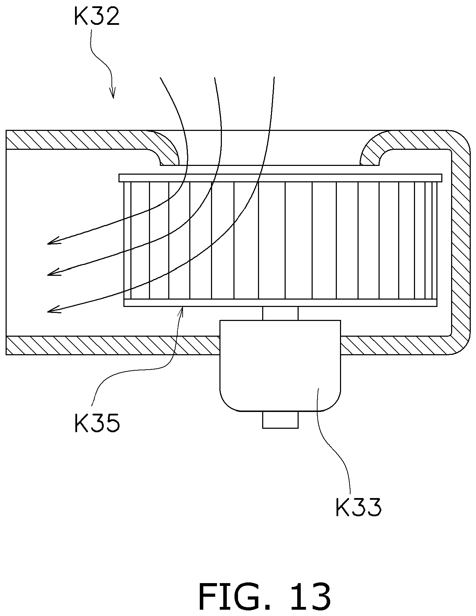

Fig. 13 depicts the sirocco fan exemplifying the fan K32. The fan motor K33 configured to rotate a fan rotor K35 of the fan K32 has a variable rotation speed. The fan K32 can thus be changed in supply air volume by changing the rotation speed of the fan motor K33. The air conditioning fan controller K34 is connected to the fan motor K33 and is configured to control the rotation speed of the fan motor K33.

The air conditioning fan units K30 each include a differential pressure sensor K121 functioning as an airflow volume sensing unit to be described later, and each of the air conditioning fan controllers K34 is configured to automatically correct the rotation speed of the fan motor K33 needed to generate necessary supply air volume even if the ducts K20 extending to the air conditioning fan units K30 generate air resistance varied due to duct lengths. The air conditioning fan units K30 do not have such a correcting function in some cases.

### (4-9-2-4) Heat source unit K50

The heat source unit K50 supplies heat energy necessary for heat exchange at the utilization heat exchanger K11 in the heat exchanger unit K10. In the air conditioning system K1 depicted in Fig. 11, a refrigerant circulates between the heat source unit K50 and the heat exchanger unit K10 to achieve a vapor compression refrigeration cycle. The heat source unit K50 and the heat exchanger unit K10 constitute a refrigeration cycle apparatus configured to achieve the vapor compression refrigeration cycle. Fig. 11 exemplifies the heat source unit K50 that is disposed outside the building BL and utilizes outdoor air as a heat source. However, the heat source unit K50 can be disposed at a place not limited to the outside of the building BL.

The heat source unit K50 includes a compressor K51, a heat source heat exchanger K52, an expansion valve K53, a four-way valve K54, a heat source fan K55, a heat source controller K56, and in-unit refrigerant pipes K57 and K58. The compressor K51 has a discharge port connected to a first port of the four-way valve K54, and a suction port connected to a third port of the four-way valve K54. The compressor K51 compresses a gaseous refrigerant (hereinafter, also referred to as a gas refrigerant) sucked through the suction port or a refrigerant in a gas-liquid two-phase state, and discharges the compressed refrigerant from the discharge port. The compressor K51 incorporates a compressor motor configured to change a rotation speed (or an operating frequency) through inverter control. The compressor K51 is configured to change the operating frequency so as to change discharge volume per unit time of a discharged refrigerant.

The four-way valve K54 connects a first inlet-outlet port of the heat source heat exchanger K52 to a second port, and connects the in-unit refrigerant pipe K58 to a fourth port. During cooling operation, the four-way valve K54 causes the refrigerant to flow, as indicated by a solid line, from the first port to the second port, be discharged from the compressor K51, be sent to the heat source heat exchanger K52, flow from the utilization heat exchanger K11 through an in-unit refrigerant pipe K132, a connection pipe K92, and the in-unit refrigerant pipe K58, flow from the fourth port to the third port, and then be sent to the suction port of the compressor K51. During heating operation, the four-way valve K54 causes the refrigerant to flow, as indicated by a broken line, from the first port to the fourth port, be discharged from the compressor K51, be sent to the utilization heat exchanger K11 through the in-unit refrigerant pipe K58, the connection pipe K92, and the in-unit refrigerant pipe K132, flow from the second port to the third port, and be sent from the heat source heat exchanger K52 to the suction port of the compressor K51. The heat source heat exchanger K52 is exemplarily of a fin and tube type, and causes heat exchange between air passing between heat transfer fins and a refrigerant flowing in a heat transfer tube.

The heat source heat exchanger K52 has a second inlet-outlet port connected to a first end of the expansion valve K53, and a second end of the expansion valve K53 is connected to a first inlet-outlet port of the utilization heat exchanger K11 via the in-unit refrigerant pipe K57, ae connection pipe K91, and the in-unit refrigerant pipe K131. The utilization heat exchanger K11 has a second inlet-outlet port connected to the in-unit refrigerant pipe K132.

The heat source unit K50 and the heat exchanger unit K10 thus configured are connected to constitute a refrigerant circuit K200. During cooling operation, the refrigerant flows, in the refrigerant circuit K200, to the compressor K51, the four-way valve K54, the heat source heat exchanger K52, the expansion valve K53, the utilization heat exchanger K11, the four-way valve K54, and the compressor K51 in the mentioned order. During heating operation, the refrigerant flows, in the refrigerant circuit K200, to the compressor K51, the four-way valve K54, the utilization heat exchanger K11, the expansion valve K53, the heat source heat exchanger K52, the four-way valve K54, and the compressor K51 in the mentioned order.

### (4-9-2-4-1) Circulation of refrigerant during cooling operation

During cooling operation, a gas refrigerant compressed by the compressor K51 is sent to the heat source heat exchanger K52 through the four-way valve K54. This refrigerant radiates heat at the heat source heat exchanger K52 to air blown by the heat source fan K55, is expanded at the expansion valve K53 to be decompressed, flows through the in-unit refrigerant pipe K57, the connection pipe K91, and the in-unit refrigerant pipe K131, and is sent to the utilization heat exchanger K11. The refrigerant sent from the expansion valve K53 and having low temperature and low pressure exchanges heat in the utilization heat exchanger K11 to absorb heat from air sent from the blow-in port K81. A gas refrigerant or a gas-liquid two-phase refrigerant having exchanged heat in the utilization heat exchanger K11 flows through the in-unit refrigerant pipe K132, the connection pipe K92, the in-unit refrigerant pipe K58, and the four-way valve K54, and is sucked to the compressor K51. Conditioned air reduced in heat in the utilization heat exchanger K11 is blown out to the indoor space SI through the plurality of ducts K20, the plurality of air conditioning fan units K30, and the plurality of air outlets K71, so as to cool the indoor space SI.

During cooling operation, the expansion valve K53 is controlled to be adjusted in opening degree to cause, for example, the refrigerant sucked to the suction port of the compressor K51 has a degree of superheating to match a degree of superheating target value, in order to avoid liquid compression at the compressor K51. Furthermore, the operating frequency of the compressor K51 is controlled to change so as to achieve cooling load processing while the expansion valve K53 is adjusted in opening degree. The degree of superheating is exemplarily calculated by subtracting evaporation temperature of the refrigerant in the utilization heat exchanger from temperature of the gas refrigerant sent from the utilization heat exchanger K11.

### (4-9-2-4-2) Circulation of refrigerant during heating operation

During heating operation, the gas refrigerant compressed by the compressor K51 flows through the four-way valve K54, the in-unit refrigerant pipe K58, the connection pipe K92, and the in-unit refrigerant pipe K132, and is sent to the utilization heat exchanger K11. This refrigerant exchanges heat in the utilization heat exchanger K11 to give heat to air sent from the blow-in port K81. The refrigerant having exchanged heat in the utilization heat exchanger K11 flows through the in-unit refrigerant pipe K131, the connection pipe K91, and the in-unit refrigerant pipe K57, and is sent to the expansion valve K53. The refrigerant expanded and decompressed by the expansion valve K53 and having low temperature and low pressure is sent to the heat source heat exchanger K52, and exchanges heat in the heat source heat exchanger K52 to absorb heat from air blown by the heat source fan K55. A gas refrigerant or a gas-liquid two-phase refrigerant having exchanged heat in the heat source heat exchanger K52 flows through the four-way valve K54 and is sucked to the compressor K51. Conditioned air increased in heat in the utilization heat exchanger K11 is blown out to the indoor space SI through the plurality of ducts K20, the plurality of air conditioning fan units K30, and the plurality of air outlets K71, so as to heat the indoor space SI.

During heating operation, the expansion valve K53 is controlled to be adjusted in opening degree to cause, for example, the refrigerant at an outlet port of the utilization heat exchanger K11 (the in-unit refrigerant pipe K131) has a degree of subcooling to match a target value. Furthermore, the operating frequency of the compressor K51 is controlled to change so as to achieve heating load processing while the expansion valve K53 is adjusted in opening degree. The degree of subcooling of the utilization heat exchanger K11 is exemplarily calculated by subtracting temperature of a liquid refrigerant exiting the utilization heat exchanger K11 from condensation temperature of the refrigerant in the utilization heat exchanger K11.

Each of the blow-out port units K70 is attached to a ceiling CE with the air outlet K71 exemplarily directed downward. The blow-out port unit K70 is exemplarily attached to the ceiling CE. The blow-out port unit K70 may alternatively be attached to a wall or the like, with no limitation to the ceiling CE in terms of an attachment place of the blow-out port unit K70.

### (4-9-5) Blow-out port unit K70

The blow-out port units K70 each include a hollow casing K72 accommodating an air filter K73. The blow-out port units K70a to K70d are connected to the air conditioning fan units K30a to K30d, respectively. Conditioned air sent from the air conditioning fan unit K30 passes through the air filter K73 and is blown out of the air outlet K71. Description is made to the case where the blow-out port units K70 each include the air filter K73. Each of the blow-out port units K70 may not alternatively include the air filter K73.

Each of the blow-out port units K70 includes an air deflector K74 accommodated in the hollow casing K72. The blow-out port unit K70 includes an air deflector motor K75 configured to drive the air deflector K74. In this case, the air deflector motor K75 configured to drive the air deflector K74 functions as an actuator. The air deflector K74 can be moved by the air deflector motor K75 to adjust a wind direction. The air deflector K74 can also be moved to be positioned to shut the air outlet K71. The air deflector motor K75 is connected to the air conditioning fan controller K34 of the air conditioning fan unit K30 or the like. The air conditioning fan controller K34 can thus control the wind direction as well as can control to open or close the air outlet K71. Description is made to the case where the blow-out port units K70 each include the air deflector K74 and the air deflector motor K75. Each of the blow-out port units K70 may not alternatively include the air deflector K74 or the air deflector motor K75.

The blow-in port unit K80 is attached to the ceiling CE with the blow-in port K81 exemplarily directed toward the indoor space SI. The blow-in port unit K80 is exemplarily attached to the ceiling CE. The blow-in port unit K80 may alternatively be attached to a wall of the building BL, with no limitation to the ceiling CE of the building BL in terms of an attachment place of the blow-in port unit K80.

The blow-in port unit K80 includes a hollow casing K82 accommodating an air filter K83. Air sent to the heat exchanger unit K10 passes through the air filter K83 and is taken in through the blow-in port K81. Description is made to the case where the blow-in port unit K80 includes the air filter K83. The blow-in port unit K80 may not alternatively include the air filter K83.

### (4-9-6) Control system

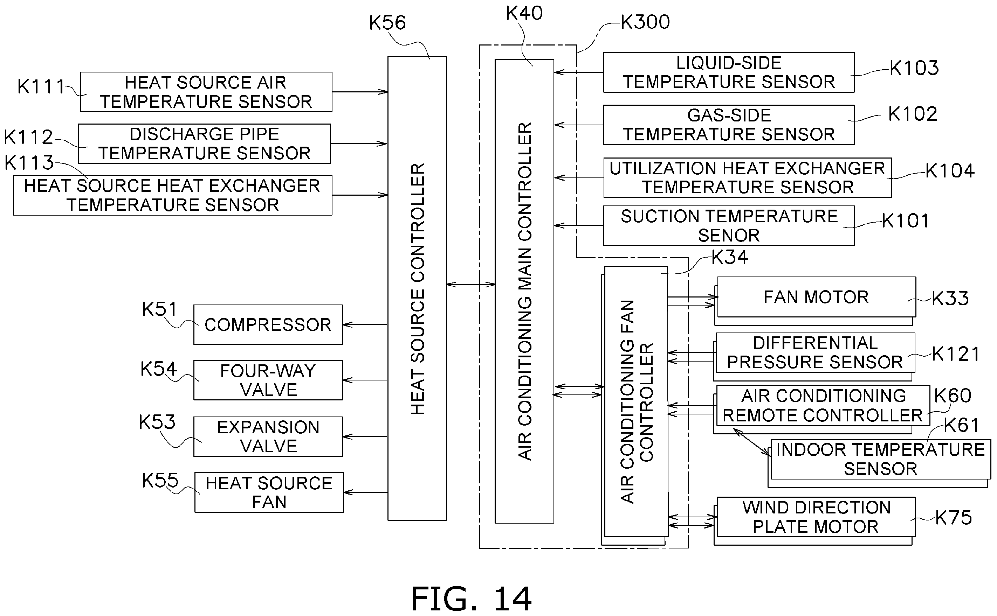

As depicted in Fig. 14, the air conditioning main controller K40 is connected to the plurality of air conditioning fan controllers K34 and the heat source controller K56. The heat source controller K56 is exemplarily constituted by various circuits mounted on a printed circuit board connected to various devices in the heat source unit K50, and controls the various devices in the heat source unit K50, such as the compressor K51, the expansion valve K53, the four-way valve K54, and the heat source fan K55. The air conditioning main controller K40 is connected to the air conditioning remote controllers K60 via the air conditioning fan controllers K34. The air conditioning remote controllers K60a to K60d correspond to the blow-out port units K70a to K70d, and are connected to the air conditioning fan units K30a to K30d. Description is made to the case where the air conditioning remote controllers K60 are connected to the air conditioning main controller K40 via the air conditioning fan controllers K34. The air conditioning remote controllers K60 may alternatively be connected directly to the air conditioning main controller K40. Exemplified is the case where the air conditioning main controller K40, the plurality of air conditioning fan controllers K34, the heat source controller K56, and the plurality of air conditioning remote controllers K60 are connected wiredly. All the controllers or part of the controllers may alternatively be connected by wireless communication.

The air conditioning main controller K40, the plurality of air conditioning fan controllers K34, the heat source controller K56, and the plurality of air conditioning remote controllers K60 are each embodied by a computer or the like. The computer constituting each of the air conditioning main controller K40, the plurality of air conditioning fan controllers K34, the heat source controller K56, and the plurality of air conditioning remote controllers K60 include control computing device and a storage device. Examples of the control computing device can include a processor such as a CPU or a GPU. The control computing device reads a program stored in the storage device and executes predetermined image processing or arithmetic processing in accordance with the program. The control computing device is configured to further write a result of the arithmetic processing to the storage device, and read information stored in the storage device, in accordance with the program. The air conditioning main controller K40, the plurality of air conditioning fan controllers K34, the heat source controller K56, and the plurality of air conditioning remote controllers K60 may alternatively be constituted by an integrated circuit (IC) configured to execute control similar to control with use of a CPU and a memory. Examples of the IC mentioned herein include a large-scale integrated circuit (LSI), an application-specific integrated circuit (ASIC), a gate array, and a field programmable gate array (FPGA).

The heat exchanger unit K10 is provided with a suction temperature sensor K101, a gas-side temperature sensor K102, a liquid-side temperature sensor K103, and a utilization heat exchanger temperature sensor K104. Examples of these temperature sensors or any temperature sensor to be described later can include a thermistor. The suction temperature sensor K101, the gas-side temperature sensor K102, the liquid-side temperature sensor K103, and the utilization heat exchanger temperature sensor K104 are connected to the air conditioning main controller K40 and have detection results sent to the air conditioning main controller K40. The suction temperature sensor K101 detects temperature of air sucked through the air inlet port K12a. The gas-side temperature sensor K102 detects temperature of a refrigerant at the first inlet-outlet port of the utilization heat exchanger K11 connected to the in-unit refrigerant pipe K132. The liquid-side temperature sensor K103 detects temperature of a refrigerant at the second inlet-outlet port of the utilization heat exchanger K11 connected to the in-unit refrigerant pipe K131. The utilization heat exchanger temperature sensor K104 is attached to a halfway portion of a refrigerant flow path in the utilization heat exchanger K11, and detects heat exchanger temperature with a refrigerant in the gas-liquid two-phase state flowing in the utilization heat exchanger K11. The air conditioning main controller K40 refers to at least one of detection values of the suction temperature sensor K101, the gas-side temperature sensor K102, the liquid-side temperature sensor K103, and the utilization heat exchanger temperature sensor K104 for determination of a command on increase or decrease in supply air volume. There may be optionally provided an air outlet temperature sensor 105 configured to detect temperature of air just having passed through the utilization heat exchanger K11.

The heat source unit K50 is provided with a heat source air temperature sensor K111, a discharge pipe temperature sensor K112, and a heat source heat exchanger temperature sensor K113. The heat source air temperature sensor K111, the discharge pipe temperature sensor K112, and the heat source heat exchanger temperature sensor K113 are connected to the heat source controller K56. The heat source air temperature sensor K111, the discharge pipe temperature sensor K112, and the heat source heat exchanger temperature sensor K113 have detection results sent to the air conditioning main controller K40 via the heat source controller K56. The heat source air temperature sensor K111 detects temperature of an airflow generated by the heat source fan K55 and just about to pass the heat source heat exchanger K52. The discharge pipe temperature sensor K112 detects temperature of a refrigerant discharged from the compressor K51. The heat source heat exchanger temperature sensor K113 is attached to a halfway portion of a refrigerant flow path in the heat source heat exchanger K52, and detects heat exchanger temperature with a refrigerant in the gas-liquid two-phase state flowing in the heat source heat exchanger K52.

The air conditioning fan unit K30 is provided with the differential pressure sensor K121 and a blow-out temperature sensor K122. The differential pressure sensor K121 detects differential pressure between airflows upwind and downwind of the air conditioning fan unit K30 or the like. The differential pressure sensor K121 is connected to the air conditioning fan controller K34, and transmits, to the air conditioning fan controller K34, differential pressure data thus detected. The differential pressure sensor K121 is attached to a place of a flow path having a preliminarily determined sectional shape, and the air conditioning fan controller K34 can calculate supply air volume from a detection value of the differential pressure sensor K121. The differential pressure sensor K121 detects differential pressure to be referred to for detection of a wind direction. The blow-out temperature sensor K122 is exemplarily disposed in the casing K31 of each of the air conditioning fan units K30, and detects temperature of conditioned air blown out of each of the air conditioning fan units K30. Description is made to the case where the blow-out temperature sensor K122 is disposed in the casing K31 of each of the air conditioning fan units K30. The blow-out temperature sensor K122 may alternatively be disposed at a different place such as an inside of the blow-out port unit K70.

Each of the air conditioning remote controllers K60 incorporates an indoor temperature sensor K61, and is configured to input a command to turn on or off at least one of the air conditioning system K1 and the air conditioning fan unit K30, switching between cooling operation and heating operation, set temperature, and set airflow volume. For example, the set temperature is provided to enable input by means of a numerical value, and the set airflow volume is provided to enable input through selection among slight airflow volume, small airflow volume, moderate airflow volume, and large airflow volume. A use uses an input button of the air conditioning remote controller K60 to select cooling operation, set 28°C as set temperature, and select moderate airflow volume as set airflow volume.

The air conditioning main controller K40 calculate, from blow-out temperature detected by each of the blow-out temperature sensor K122 and the set temperature, necessary supply air volume to be blown out of each of the air conditioning fan units K30, controls the rotation speed of the fan motor K33, and controls to approach a detection value of the indoor temperature sensor K61 to the set temperature. Description is made to the case where the indoor temperature sensor K61 is incorporated in the air conditioning remote controller K60. The indoor temperature sensor K61 is not limited in terms of its disposition to the air conditioning remote controller K60. For example, the indoor temperature sensor can be provided as an independent device, and the air conditioning main controller K40 can be configured to receive an indoor temperature value from the independent indoor temperature sensor.

Exemplarily assume that three air conditioning fan units K30 are initially connected to the heat exchanger unit K10 and one of the air outlet ports K12b is closed in the heat exchanger unit K10. In order to additionally provide another air conditioning fan unit K30 in such a case, the duct K20 is connected to the air outlet port K12b having been closed, the additional air conditioning fan unit K30 is connected to the duct K20, and the blow-out port unit K70 is connected to the air conditioning fan unit K30 thus added. The air conditioning fan controller K34 of the air conditioning fan unit K30 thus added is connected to the air conditioning main controller K40 to complete a network of the air conditioning main controller K40 and the four air conditioning fan units K34, with facilitated construction of the network for transmission of commands from the air conditioning main controller K40.

### (4-9-3) Operation of air conditioning system K 1

In the air conditioning system K1, the set airflow volume inputted from the plurality of air conditioning remote controllers K60 correspond to basic supply air volume for determination of supply air volume of the plurality of air conditioning fan units K30. However, without change in set airflow volume, cooling operation decreases temperature to be lower than the set temperature and heating operation increases temperature to be higher than the set temperature after the temperature reaches the set temperature. In order to converge indoor air temperature to the set temperature in accordance with a command from the air conditioning main controller K40, the supply air volume of each of the air conditioning fan units K30 is changed from the set airflow volume. The air conditioning main controller K40 calculates an air conditioning load from a difference between the indoor air temperature and the set temperature, and determines necessary supply air volume from the air conditioning load and blowing air temperature of each of the air conditioning fan units K30. The air conditioning load is zero in an exemplary case where the indoor air temperature matches the set temperature without any difference therebetween. The air conditioning main controller K40 causes the air conditioning fan unit K30 having indoor air temperature matching the set temperature to stop blowing air even if the set airflow volume is not zero. Alternatively, in order to prevent an air backflow from the air outlet K71 toward the heat exchanger unit K10, the air conditioning fan unit K30 to be stopped in accordance with the air conditioning load may be controlled not to have no supply air volume for inhibition of the backflow.

### (4-9-3-1) Upon activation

The air conditioning fan controllers K34 of the air conditioning fan units K30a to K30d transmit, to the air conditioning main controller K40, supply air volume from the air conditioning fan units K30a to K30d in accordance with the set airflow volume of the four air conditioning remote controllers K60. When the air conditioning fan unit K30 being stopped is operating to quite slightly blow air to prevent an air backflow from the air outlet K71 toward the heat exchanger unit K10, the air conditioning system K1 may be configured to add such slight supply air volume to total airflow volume. The air conditioning system K1 may alternatively be configured not to add such slight supply air volume to the total airflow volume.

The air conditioning main controller K40 totals supply air volume transmitted from all the air conditioning fan units K30 to calculate total airflow volume of air passing through the utilization heat exchanger K11. The air conditioning main controller K40 calculates air temperature sucked to the heat exchanger unit K10 with reference to the suction temperature sensor K101 of the heat exchanger unit K10. The air conditioning main controller K40 requests, to the heat source controller K56 of the heat source unit K50, necessary refrigerant circulation volume calculated from the total airflow volume of air passing through the utilization heat exchanger K11 and the air temperature. The heat source controller K56 of the heat source unit K50 changes the operating frequency of the compressor K51 to change the refrigerant circulation volume in accordance with the request from the air conditioning main controller K40.

### (4-9-3-2) During normal operation

The air conditioning system K1 in normal operation controls differently between a case where the total airflow volume is equal to or more than a lower limit value and a case where the total airflow volume is equal to or less than the lower limit value.

### (4-9-3-2-1) When total airflow volume is equal to or more than lower limit value

When predetermined time elapses after activation and the system comes into a normal operation state, the air conditioning main controller K40 determines whether or not the total airflow volume is equal to or more than the lower limit value. The lower limit value will be described later in terms of setting thereof. When the total airflow volume is equal to or more than the lower limit value, the air conditioning main controller K40 controls the air conditioning system K1 in the following manner.

When predetermined time elapses after activation and the system comes into the normal operation state, the air conditioning fan controllers K34 are each configured to recalculate individual supply air volume at predetermined intervals. Such recalculation includes calculating an air conditioning load with reference to indoor air temperature sensed by the air conditioning remote controller K60, in accordance with a situation that the indoor air temperature adjacent to each of the blow-out port units K70 "approaches to", "is largely different from" the set temperature, or the like, and each of the air conditioning fan controller K34 corrects the set airflow volume. Each of the air conditioning fan units K30 transmits corrected supply air volume thus obtained to the air conditioning main controller K40. The air conditioning main controller K40 may alternatively be configured to execute calculation on correction of set airflow volume. The air conditioning main controller K40 recalculates supply air volume transmitted from the plurality of air conditioning fan controllers K34 at each interval to obtain total airflow volume, and requests, to the heat source controller K56 of the heat source unit K50, when the total airflow volume is equal to or more than the lower limit value, necessary refrigerant circulation volume calculated from the total airflow volume of air passing through the utilization heat exchanger K11 and the air temperature at each interval. The heat source controller K56 of the heat source unit K50 changes the operating frequency of the compressor K51 to change the refrigerant circulation volume in accordance with the request from the air conditioning main controller K40.

### (4-9-3-2-2) When total airflow volume is less than lower limit value

When the total airflow volume is less than the lower limit value, the air conditioning main controller K40 calculates a shortfall as a difference between the calculated total airflow volume and the lower limit value. The air conditioning main controller K40 allocates the shortfall to the plurality of air conditioning fan units K30 in accordance with a preliminarily determined airflow volume distribution rule. When the shortfall is allocated to the plurality of air conditioning fan units K30, supply air volume matching the shortfall may be allocated or supply air volume equal to or more than the shortfall may be allocated because the total airflow volume has only to be equal to or more than the lower limit value.

Assume an exemplary case where the lower limit value is 30 m³/min, and the air conditioning main controller K40 has requests for 16 m³/min from the air conditioning fan controller K34 of the air conditioning fan unit K30a, 0 m³/min from the air conditioning fan controller K34 of the air conditioning fan unit K30b, 10 m³/min from the air conditioning fan controller K34 of the air conditioning fan unit K30c, and 6 m³/min from the air conditioning fan controller K34 of the air conditioning fan unit K30d. In this case, the air conditioning main controller K40 calculates total airflow volume of 32 m³/min > 30 m³/min, and determines that the total airflow volume is more than the lower limit value.

When the air conditioning fan controller K34 of the air conditioning fan unit K30c subsequently receives a command to stop blowing from the air conditioning remote controller K60, the air conditioning fan controller K34 of the air conditioning fan unit K30c changes the request from 10 m³/min to 0 m³/min. The total airflow volume then decreases from 32 m³/min to 22 m³/min. The air conditioning main controller K40 thus determines that there is commanded to change the total airflow volume to be equal to or less than the lower limit value.

In an exemplary case of having determined that there is commanded to change to be equal to or less than the lower limit value, the air conditioning main controller K40 may allocate the shortfall equally to the air conditioning fan units K30 in operation. In the above case, 8 (= 30 - 22) m³/min is allocated to the air conditioning fan unit K30a by 4 m³/min and is allocated to the air conditioning fan unit K30d by 4 m³/min, so that the air conditioning fan unit K30a is changed to 20 m³/min and the air conditioning fan unit K30d is changed to 10 m³/min.

In another exemplary case of having determined that there is commanded to change to be equal to or less than the lower limit value, the air conditioning main controller K40 may allocate the shortfall equally to all the air conditioning fan units K30. In the above case, 8 (= 30 - 22) m³/min is allocated to the air conditioning fan units K30a to K30d by 2 m³/min, so that the air conditioning fan unit K30a is changed to 18 m³/min, the air conditioning fan unit K30b is changed to 2 m³/min, the air conditioning fan unit K30c is changed to 2 m³/min, and the air conditioning fan unit K30d is changed to 8 m³/min.

### (4-9-3-2-3) Setting of lower limit value

The lower limit value of the total airflow volume of the air conditioning system K1 is determined by the air conditioning main controller K40 in accordance with heat exchanger temperature or the like. At high heat exchanger temperature during cooling operation, the air conditioning main controller K40 determines that the heat source unit K50 has insufficient heat energy supply capacity and sets a high lower limit value of the total airflow volume. In comparison to such a case, at low heat exchanger temperature during cooling operation, the air conditioning main controller K40 determines that the heat source unit K50 has sufficient heat energy supply capacity and sets a lower limit value of the total airflow volume less than the lower limit value in the above case. The lower limit value may be specifically determined through at least one of an actual test and a simulation of the air conditioning system K1.

### (4-9-3-2-4) Detection of air backflow

Assume that, in the distribution flow path including the duct K20a, the air conditioning fan unit K30a, and the blow-out port unit K70a, a normal airflow travels from the heat exchanger unit K10 toward the air outlet K71 whereas an abnormal airflow as an air backflow travels from the air outlet K71 toward the heat exchanger unit K10. Similarly in each of the distribution flow paths including the ducts K20b to K20d, the air conditioning fan units K30b to K30d, and the blow-out port units K70b to K70d, an air backflow travels from the air outlet K71 toward the heat exchanger unit K10. The single differential pressure sensor K121 provided at each of the air conditioning fan units K30a to K30d has a detection result transmitted to the air conditioning main controller K40 via the air conditioning fan controller K34.

The air conditioning main controller K40 determines that an airflow is normal in a case where the exhaust port K37 is lower in air pressure than or equal to the intake port K36 of each of the air conditioning fan units K30a to K30d, and determines that there is an air backflow in another case where the exhaust port K37 is higher in air pressure than the intake port K36 of each of the air conditioning fan units K30a to K30d.

### (4-9-3-2-5) Operation during occurrence of air backflow

The air conditioning main controller K40 eliminates an air backflow in cooperation with the air conditioning fan units K30. Specifically, the air conditioning main controller K40 detects the air conditioning fan unit K30 connected to the distribution flow path having an air backflow. The air conditioning main controller K40 transmits a command to increase the rotation speed of the fan motor K33 to the air conditioning fan controller K34 of the air conditioning fan unit K30 on the distribution flow path having the air backflow. In an exemplary case where the fan motor K33 is stopped, the air conditioning main controller K40 transmits a command to drive at a preliminarily determined rotation speed. In another case where the fan motor K33 is rotating at low speed, the air conditioning main controller K40 transmits a command to further increase the rotation speed of the fan motor K33.

When the air deflector K74 can change air resistance, the air deflector K74 may alternatively be used to eliminate the air backflow. When the fan motor K33 is stopped, the air deflector K74 of the blow-out port unit K70 having an air backflow may be fully closed. When the fan motor K33 is rotating at low speed, the air conditioning main controller K40 may be configured to transmit a command to further increase the rotation speed of the fan motor K33 as well as increase the air resistance at the air deflector K74.

Still alternatively, the distribution flow path may be provided therein with a backflow preventing damper that is fully closed only by force of an air backflow. In this case, backflow prevention can be achieved even without any command from the air conditioning main controller K40.
(4-9-4-1)
   As to the air conditioning system K1 according to the modification example I, description is made to the case where the ducts K20 are connected directly to the heat exchanger unit K10. The ducts K20 may alternatively be connected indirectly to the heat exchanger unit K10. For example, the ducts K20 and the heat exchanger unit K10 may alternatively interpose an attachment having a plurality of air outlet ports for connection of the ducts K20 to the heat exchanger unit K10. There may be prepared plural types of attachments different in the number of connectable ducts K20, to enable change in the number of the ducts K20 connectable to the heat exchanger unit K10 without changing the model of the heat exchanger unit K10.
(4-9-4-2)
   As to the air conditioning system K1 according to the modification example I, description is made to the case where the single blow-out port unit K70 is connected to the single air conditioning fan unit K30. Alternatively, a plurality of blow-out port units K70 may be connected to the single air conditioning fan unit K30. That is, the single air conditioning fan unit K30 may be provided with a plurality of air outlets K71. In this case, each of the blow-out port units K70 may be provided with a single air conditioning remote controller K60, to connect a plurality of air conditioning remote controllers K60 to each of the air conditioning fan units K30.
(4-9-4-3)
   If the indoor space SI includes a plurality of rooms and walls are provided between the rooms, each of the walls may be provided with a vent hole and only one blow-in port K81 may be provided. The number of the blow-in ports K81 to be provided is not limited to one but may be a plural number. A plurality of blow-in ports K81 may be provide at an identical room or may be provided at both of different rooms. There is no need to provide any vent hole when the blow-in port K81 is provided at each of the rooms.
(4-9-4-4)
   The air conditioning fan unit K30 connected to the second end K22 of the duct K20 having the first end K21 connected to the heat exchanger unit K10 may further be connected with another duct K20 and another air conditioning fan unit K30.

For example, a single distribution flow path may be connected in series with a plurality of air conditioning fan units K30. According to an exemplary connection aspect, two ducts K20, two air conditioning fan units K30, and a single blow-out port unit K70 are connected in series in the order of the heat exchanger unit K10, the duct K20, the air conditioning fan unit K30, the duct K20, the air conditioning fan unit K30, and the blow-out port unit K70. Provision of a plurality of power sources on a single distribution flow path enables setting a longer distance from the heat exchanger unit K10 to the air outlet K71 in comparison to a case of providing only one of the power sources configured similarly.
(4-9-4-5)
   As to the air conditioning system K1 according to the modification example I, description is made to the case where the single heat exchanger unit K10 is connected to the single heat source unit K50. Connection between the heat source unit K50 and the heat exchanger unit K10 is not limited to such a connection aspect. Alternatively, a plurality of heat exchanger units K10 may be connected to the single heat source unit K50. Still alternatively, a plurality of heat source units K50 may be connected to a plurality of heat exchanger units K10. According to these connection aspects, the heat exchanger units K10 may be each provided with a flow rate adjuster configured to adjust a flow rate of a refrigerant flowing in the utilization heat exchanger K11. Examples of the flow rate adjuster include a flow rate control valve having a variable valve opening degree.
(4-9-4-6)
   As to the air conditioning system K1 according to the modification example I, description is made to the case where the compressor K51 of the heat source unit K50 is of the type having a variable rotation speed. The compressor K51 of the heat source unit K50 may alternatively be of a type having a nonvariable rotation speed.
(4-9-4-7)
   Description is made to the case where the air conditioning system K1 according to the modification example I is configured to switch between cooling operation and heating operation. The air conditioning system K1 according to the modification example I is also applicable to an air conditioning system dedicated to cooling operation or heating operation.
(4-9-4-8)
   As to the air conditioning system K1 according to the modification example I, description is made to the case where the heat source unit K50 and the heat exchanger unit K10 are connected to constitute the refrigeration cycle apparatus allowing the refrigerant to flow to the utilization heat exchanger K11. The heat source unit K50 is not limitedly connected to the heat exchanger unit K10 to constitute the refrigeration cycle apparatus. The heat source unit configured to supply the utilization heat exchanger K11 with heat energy may alternatively be configured to supply a heating medium such as at least one of warm water and cold water.

When the heat source unit is configured to supply a heating medium to the utilization heat exchanger K11, the heat exchanger unit K10 may be provided with a flow rate adjuster configured to adjust a flow rate of the heating medium flowing to the utilization heat exchanger K11.

When the heat exchanger unit K10 is connected to the heat source unit configured to supply the heating medium, a single heat source unit may be configured to be connected with a plurality of heat exchanger units K10.
(4-9-4-9)
As to the air conditioning system K1 according to the modification example I, description is made to the case where the air conditioning main controller K40 requests, upon activation, the refrigerant circulation volume necessary for the refrigerant circuit K200, calculated from the obtained total airflow volume of air passing through the utilization heat exchanger K11 and the calculated temperature of air sucked into the heat exchanger unit K10. The necessary refrigerant circulation volume requested by the air conditioning main controller K40 is set in a manner not limited to the above.

For example, the air conditioning system K1 may be configured as follows. Upon activation, the air conditioning main controller K40 totals supply air volume transmitted from all the air conditioning fan units K30 to calculate total airflow volume of air passing through the utilization heat exchanger K11. The air conditioning main controller K40 stores, in an internal memory or the like, an airflow volume table indicating a relation between total airflow volume and necessary refrigerant circulation volume. The air conditioning main controller K40 selects airflow volume closest to the calculated total airflow volume, from among airflow volume included in the airflow volume table. The air conditioning main controller K40 requests, to the heat source controller K56, the refrigerant circulation volume corresponding to the total airflow volume selected from the airflow volume table. As to a difference between the airflow volume selected from the airflow volume table and the total airflow volume, the air conditioning system K1 may alternatively be configured such that the air conditioning main controller K40 transmits a command to the air conditioning fan controller K34 to change to supply air volume corresponding to the difference in the plurality of air conditioning fan units K30.

Still alternatively, the air conditioning system K1 may be configured as follows. Upon activation, the air conditioning main controller K40 receives set temperature of the air conditioning remote controller K60 via the air conditioning fan controllers K34. The air conditioning main controller K40 further receives indoor air temperature detected by the air conditioning remote controller K60, indoor air temperature calculated from the detection value of the suction temperature sensor K101, or indoor air temperature from an indoor temperature sensor capable of transmitting indoor air temperature to the air conditioning main controller K40. The air conditioning main controller K40 calculates an entire air conditioning load of the air conditioning system K1 from the set temperature and the indoor air temperature thus received. The air conditioning main controller K40 calculates total airflow volume and necessary refrigerant circulation volume from the air conditioning load thus calculated. The air conditioning main controller K40 calculates individual supply air volume of each of the air conditioning fan units K30 by multiplying the total airflow volume and a ratio of the air conditioning load of each of the air conditioning fan units K30 and transmits commands to the plurality of air conditioning fan controllers K34. The air conditioning system K1 may be configured such that the air conditioning fan controllers K34 individually adjust in accordance with the individual supply air volume commanded by the air conditioning main controller K40.
(4-9-4-10)
As to the air conditioning system K1 according to the modification example I, description is made to the case where total airflow volume is determined principally and the air conditioning main controller K40 controls to follow a condition for the refrigerant of the heat source unit K50. The air conditioning system K1 may alternatively be configured to principally determine a condition for the refrigerant of the heat source unit K50 and determine total airflow volume in accordance with the condition.

For example, the air conditioning system K1 is configured such that the heat source controller K56 controls at least one of the operating frequency of the compressor K51 and the opening degree of the expansion valve K53. In the air conditioning system K1 thus configured, the heat source controller K56 acquires information on the current total airflow volume of air passing through the utilization heat exchanger K11. The heat source controller K56 transmits, to the air conditioning main controller K40, that the current total airflow volume needs to be increased or decreased in accordance with information on at least one of the operating frequency of the compressor K51 and the opening degree of the expansion valve K53. The air conditioning main controller K40 receives a command to increase or decrease the airflow volume from the heat source controller K56, calculates appropriate proportions of increase or decrease in airflow volume of the plurality of air conditioning fan units K30 for energy suppression in the entire system, and commands the air conditioning fan units K30.
(4-9-4-11)
   In the air conditioning system K1 according to the modification example I, the operating frequency of the compressor K51 is changed to adjust the refrigerant circulation volume of the refrigerant circuit K200. Control of the refrigerant circulation volume in the air conditioning system K1 is, however, not limited to control of the operating frequency of the compressor K51. For example, the refrigerant circulation volume of the refrigerant circuit K200 may be controlled to be adjusted by adjusting the operating frequency of the compressor K51 as well as the opening degree of the expansion valve K53. Alternatively, the refrigerant circulation volume of the refrigerant circuit K200 may be controlled to be adjusted by adjusting the opening degree of the expansion valve K53.
(4-9-4-12)
   The air conditioning system K1 according to the modification example I has the lower limit value of the total airflow volume in accordance with the heat exchanger temperature of the utilization heat exchanger K11. There may alternatively be referred to condensation temperature (TC), evaporation temperature (TE), a degree of superheating (SH), or a degree of subcooling (SC). The degree of superheating can be calculated from inlet temperature and outlet temperature of the utilization heat exchanger K11, or inlet pressure and outlet temperature of the utilization heat exchanger K11. The degree of subcooling can be calculated from inlet temperature and outlet temperature of the utilization heat exchanger K11, or inlet pressure and outlet temperature of the utilization heat exchanger K11.

The lower limit value of the total airflow volume may be a preliminarily determined and fixed value. When the lower limit value is preliminarily determined as 8 m³/min, the air conditioning main controller K40 controls such that the total airflow volume constantly does not become less than the lower limit value 8 m³/min.

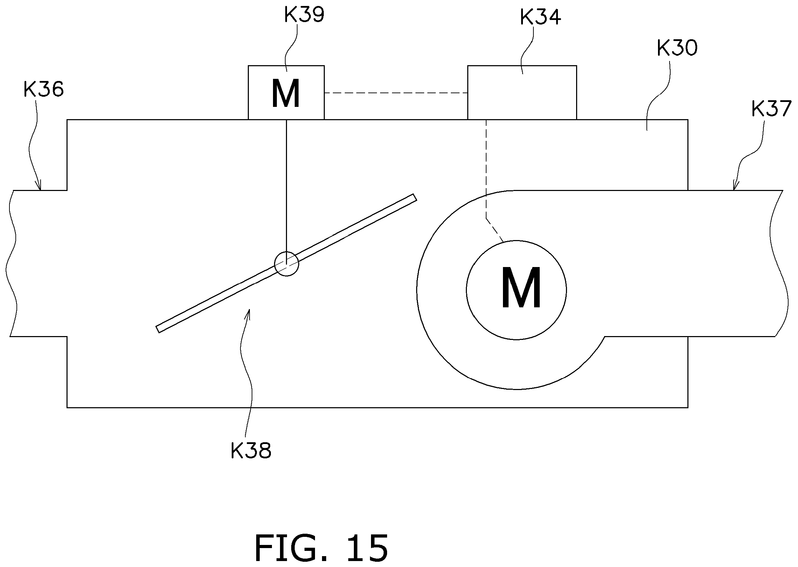

The air conditioning system K1 may alternatively be configured to have, for cooling operation, the lower limit value of the total airflow volume exemplarily determined in accordance with the degree of superheating, the current total airflow volume, and suction temperature of air sucked to the heat exchanger unit K10. The air conditioning system K1 may still alternatively be configured to have, for heating operation, the lower limit value of the total airflow volume determined in accordance with the degree of subcooling, the current total airflow volume, and suction temperature of air sucked to the heat exchanger unit K10. The air conditioning system K1 may still alternatively be configured to have the lower limit value of the total airflow volume in accordance with the refrigerant circulation volume (e.g. the operating frequency of the compressor K51), the evaporation temperature (TE), as well as suction temperature and sucked airflow volume of air sucked to the heat exchanger unit K10. The air conditioning system K1 may still alternatively be configured to have the lower limit value of the total airflow volume determined in accordance with the current airflow volume and excessive or insufficient airflow volume calculated from a dried or wetted degree of the refrigerant having passed through the utilization heat exchanger K11. The air conditioning system K1 may still alternatively be configured to have the lower limit value of the total airflow volume determined in accordance with refrigerant pressure and refrigerant temperature at the outlet port of the utilization heat exchanger K11.
(4-9-4-13)
(4-13-1)
As to the air conditioning system K1 according to the modification example I, the fan motors K33 having a variable rotation speed are exemplarily described as the plurality of actuators configured to change individual supply air volume of conditioned air sucked from the heat exchanger unit K10 through the plurality of ducts K20 and supplied to each of the air outlets K71 of the indoor space SI. The actuators are not limited to the fan motors K33, and examples of the actuators include a drive motor K39 of a damper K38 depicted in Fig. 15. The fan motor K33 of the fan K32 depicted in Fig. 15 may of a type having a variable rotation speed as in the modification example I, or may of a type having a nonvariable rotation speed. When the fan motor K33 is of the type having a nonvariable rotation speed, the supply air volume (airflow volume) from the air conditioning fan unit K30 to the blow-out port unit K70 is changed only with use of the damper K38. In contrast, when the fan motor K33 is of the type having a variable rotation speed, the supply air volume (airflow volume) from the air conditioning fan unit K30 to the blow-out port unit K70 is changed through change in opening degree of the damper K38 in combination with change in the rotation speed of the fan motor K33.

There may be adopted a damper unit including the damper K38 without including any fan, as a unit configured to change the individual supply air volume of conditioned air supplied to the air outlets K71. In other words, the air conditioning system K1 may include a fan unit configured to rotate the fan at constant speed without having a function of changing supply air volume, and a damper unit provided separately from the fan unit. The air conditioning system K1 may exemplarily include a damper unit configured to change supply air volume with use of the damper K38 and provided at a halfway portion of at least one of the ducts K20a to K20d. The air conditioning system K1 can alternatively include the air conditioning fan unit K30 having the function of changing supply air volume and a damper unit having the function of changing supply air volume, which are collectively provided to at least one of the ducts K20a to K20d.

### (4-13-2) Operation during occurrence of backflow

The air conditioning main controller K40 eliminates an air backflow in cooperation with the air conditioning fan units K30. Initially for elimination of an air backflow, the air conditioning main controller K40 detects the air conditioning fan unit K30 connected to the distribution flow path having an air backflow. When the air conditioning fan unit K30 is configured to adjust supply air volume only with use of the damper K38, the air conditioning main controller K40 transmits a command to change the opening degree of the damper K38 to the air conditioning fan controller K34 of the air conditioning fan unit K30 on the distribution flow path having the air backflow. A command to fully close the damper K38 is transmitted in an exemplary case where the air conditioning fan unit K30 having the air backflow is not in operation. There is normally caused no air backflow when the fan motor K33 constantly rotates to blow and air blows in accordance with the opening degree of the damper K38. Upon occurrence of an air backflow in such a case, the air conditioning main controller K40 notifies a user of abnormality occurrence with use of the air conditioning remote controller K60 or the like.

When the air conditioning fan unit K30 is configured to adjust supply air volume by means of both the rotation speed of the fan motor K33 and the opening degree of the damper K38, the air conditioning main controller K40 transmits a command to change at least one of the rotation speed of the fan motor K33 and the opening degree of the damper K38 to the air conditioning fan controller K34 of the air conditioning fan unit K30 on the distribution flow path having the air backflow. A command to fully close the damper K38 is transmitted in an exemplary case where the air conditioning fan unit K30 having the air backflow is not in operation. In another case where the fan motor K33 is rotating at low speed, the air conditioning main controller K40 transmits a command to further increase the rotation speed. When the fan motor K33 is rotating at low speed, the air conditioning main controller K40 may be configured to transmit a command to decrease the opening degree of the damper K38 as well as increase the rotation speed of the fan motor K33.
(4-9-4-14)
   As to the air conditioning system K1 according to the modification example I, description is made to the case where the differential pressure sensor K121 is adopted as a detector configured to detect an air backflow. However, a detector configured to detect an air backflow is not limited to the differential pressure sensor K121. Examples of the detector also include a wind speed sensor having directivity. When the differential pressure sensor K121 is replaced with the wind speed sensor having directivity, the wind speed sensor is exemplarily disposed at the air conditioning fan unit K30 and is connected to the air conditioning fan controller K34. With use of the wind speed sensor having directivity, the air conditioning main controller K40 can detect that air flows in a normal direction when wind speed in a positive direction is indicated, and that an air backflow occurs when wind speed in an opposite negative direction is indicated. Further, the detector can be configured by using a plurality of wind speed sensors with omnidirectional sensitivity. When a plurality of wind speed sensors having no directivity detects wind speed distribution and the wind speed distribution occurs at a backflow, the air conditioning main controller K40 can determine that there occurs a backflow.
(4-9-4-15)
   As to the air conditioning system K1 according to the modification example I, description is made to the case where the plurality of air conditioning fan controllers K34 of the plurality of air conditioning fan units K30 is connected directly in parallel with the air conditioning main controller K40 installed at the heat exchanger unit K10. Alternatively, the plurality of air conditioning fan units K30 may be categorized into a master unit and a slave unit, and the air conditioning fan controllers K34 may be connected to the air conditioning main controller K40.

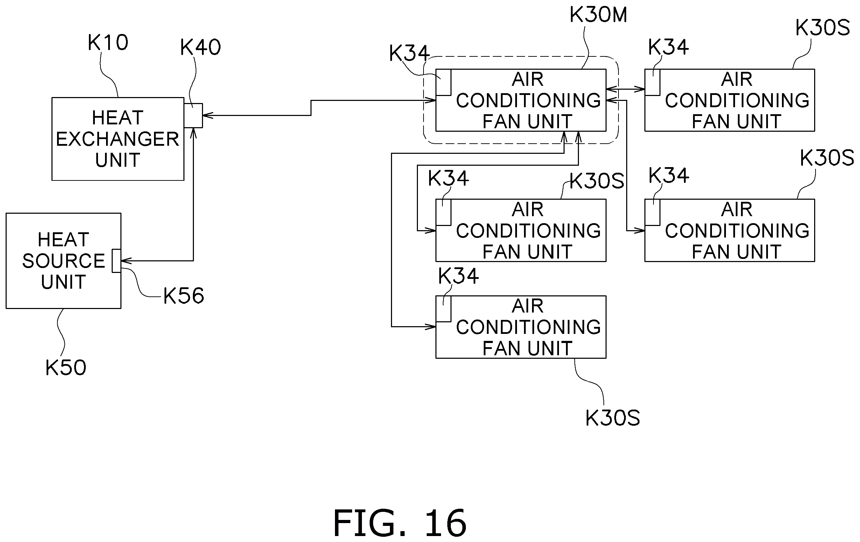

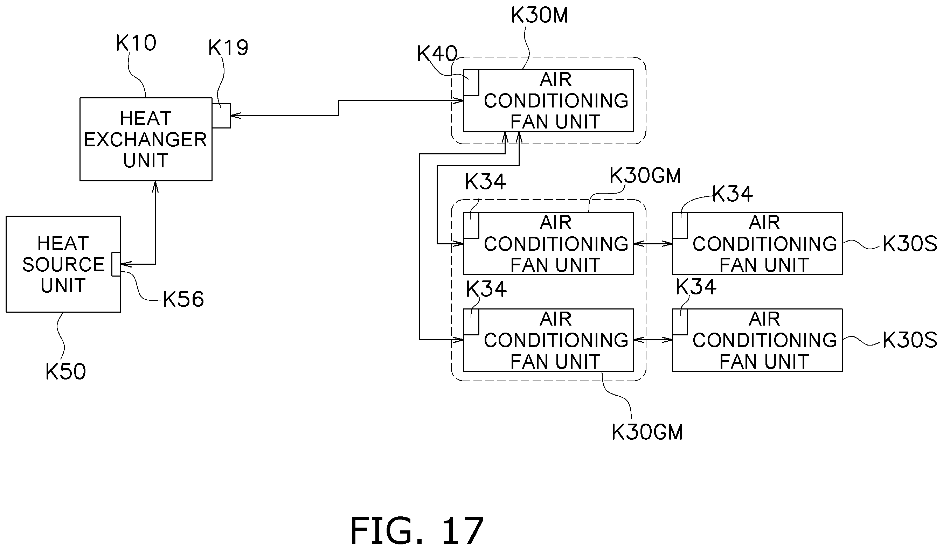

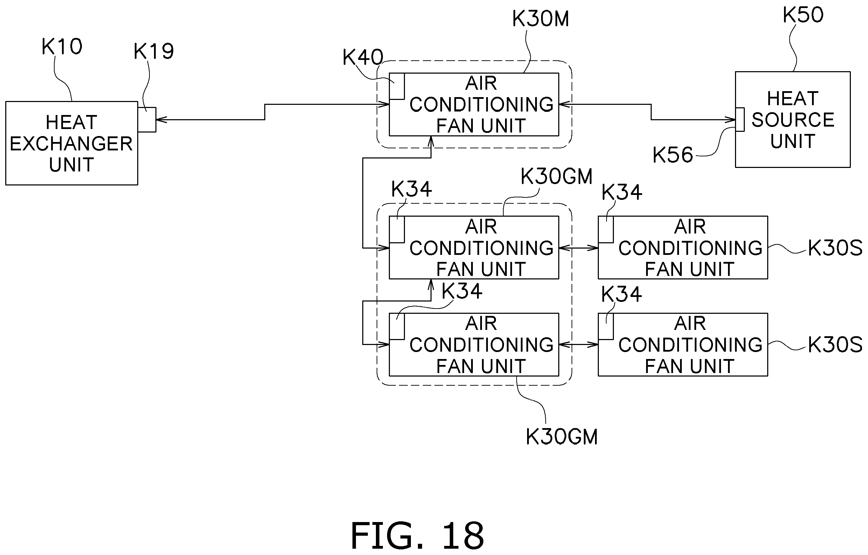

In an exemplary case where the single heat exchanger unit K10 is connected with five air conditioning fan units K30M and K30S, the air conditioning fan units are categorized into the single air conditioning fan unit K30M as a master unit and four air conditioning fan units K30S as slave units, as depicted in Fig. 16. The five air conditioning fan units K30M and K30S are configured similarly to the air conditioning fan units K30. The air conditioning main controller K40 of the heat exchanger unit K10 is connected to the heat source controller K56 of the heat source unit K50 and the single air conditioning fan unit K30M as a master unit. Furthermore, the air conditioning fan controller K34 of the single air conditioning fan unit K30M as a master unit is connected to the air conditioning fan controllers K34 of the four air conditioning fan units K30S as slave units. The air conditioning main controller K40 controls the air conditioning fan controllers K34 of the four air conditioning fan units K30S as slave units through the air conditioning fan controller K34 of the air conditioning fan unit K30M as a master unit. Commands to the four air conditioning fan controllers K34 as slave units may be transmitted directly from the air conditioning main controller K40, or may be transmitted from the air conditioning fan controller K34 of the air conditioning fan unit K30M as a master unit upon receipt of a command from the air conditioning main controller K40.
(4-9-4-16)
As to the air conditioning system K1 according to the modification example I or described in the above section (4-9-4-15), the air conditioning main controller K40 is installed at the heat exchanger unit K10. As depicted in Fig. 17 or Fig. 18, the air conditioning main controller K40 may alternatively be installed at the air conditioning fan unit K30M as a master unit.

In this case, the heat exchanger unit K10 is provided with a terminal K19 for connection to various sensors disposed inside. The air conditioning main controller K40 is connected to the sensors provided in the heat exchanger unit K10 via the terminal K19 of the heat exchanger unit K10. As depicted in Fig. 17, the heat source controller K56 of the heat source unit K50 is connected to the air conditioning main controller K40 of the air conditioning fan unit K30M via the heat exchanger unit K10. Alternatively as depicted in Fig. 18, the heat source controller K56 of the heat source unit K50 is connected directly to the air conditioning main controller K40 of the air conditioning fan unit K30M.

In an exemplary case where the single heat exchanger unit K10 is connected with the five air conditioning fan units K30M, K30GM, and K30S, the air conditioning fan units are categorized into the single air conditioning fan unit K30M as a master unit, two air conditioning fan units K30GM as group master units, and two air conditioning fan units K30S as slave units, as depicted in Fig. 17 or 18. In this case, the air conditioning fan controller K34 of the air conditioning fan unit K30M as a master unit is simply replaced with the air conditioning main controller K40. The remaining five air conditioning fan units K30M, K30GM, and K30S are configured similarly to the air conditioning fan units K30. The air conditioning main controller K40 of the air conditioning fan unit K30M is connected to the air conditioning fan units K30GM as group master units. Furthermore, the air conditioning fan controller K34 of each of the air conditioning fan units K30GM as group master units is connected with the air conditioning fan controller K34 of the air conditioning fan unit K30S as a slave unit in the corresponding group. Description is made to the case where the air conditioning fan controller K34 of the single air conditioning fan unit K30GM as a group master unit is connected with the air conditioning fan controller K34 of the single air conditioning fan unit K30S as a slave unit. The air conditioning fan controller K34 of the group master unit is connected with not necessarily the single air conditioning fan controller K34 of the slave unit and may be connected with two or more. The number of the group master units is not limited to two, and may be one, or three or more. Moreover, the plurality of the air conditioning fan units K30s are slave units of the single air conditioning fan unit K30M and the plurality of the air-conditioning fan controllers K34 of the air-conditioning fan unit K30S may be connected in parallel to the air-conditioning main controller K40 of single air-conditioning fan unit K30M.

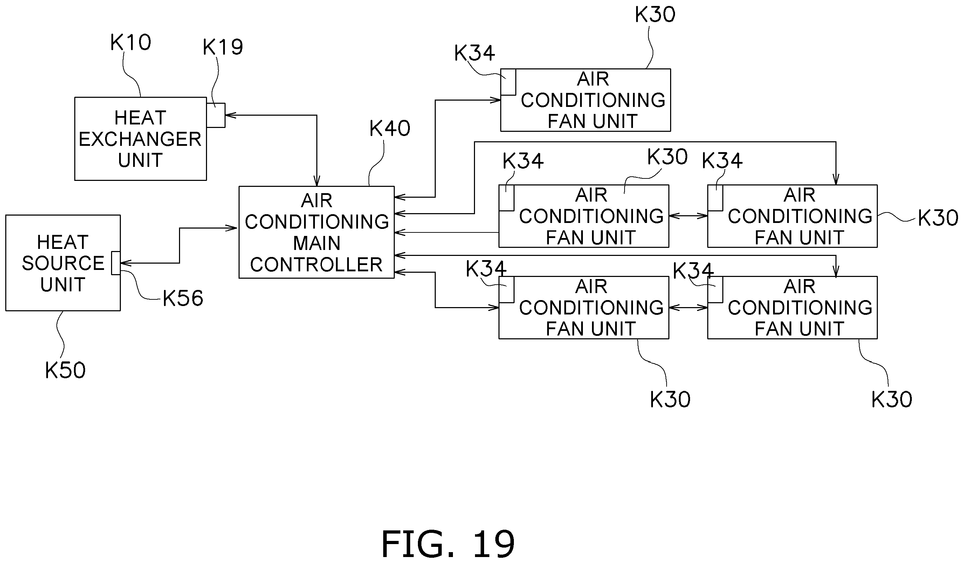

The air conditioning main controller K40 manages the air conditioning fan controllers K34 of the two air conditioning fan units K30GM as group master units. The air conditioning main controller K40 also controls the air conditioning fan controllers K34 of the two air conditioning fan units K30S as group slave units through the air conditioning fan controllers K34 of the air conditioning fan units K30GM as group master units. Commands to the two air conditioning fan controllers K34 as slave units may be transmitted directly from the air conditioning main controller K40, or may be transmitted from the air conditioning fan controllers K34 of the group master units upon receipt of a command from the air conditioning main controller K40.
(4-9-4-17)
As to the air conditioning system K1 according to the modification example I or described in the above section (4-9-4-15) or (4-9-4-16), the air conditioning main controller K40 is installed at the heat exchanger unit K10. As depicted in Fig. 19, Fig. 20, Fig. 21, or Fig. 22, the air conditioning main controller K40 may alternatively be installed at a place other than the heat exchanger unit K10, the air conditioning fan units K30, and the heat source unit K50.

In this case, the heat exchanger unit K10 is provided with the terminal K19 for connection to the various sensors disposed inside. The air conditioning main controller K40 is connected to the sensors provided in the heat exchanger unit K10 via the terminal K19 of the heat exchanger unit K10.

Fig. 19 depicts connection similar to a connection mode of the air conditioning main controller K40, the air conditioning fan controllers K34, and the heat source controller K56 according to the modification example I, with the air conditioning main controller K40 installed at a place different from the heat exchanger unit K10.

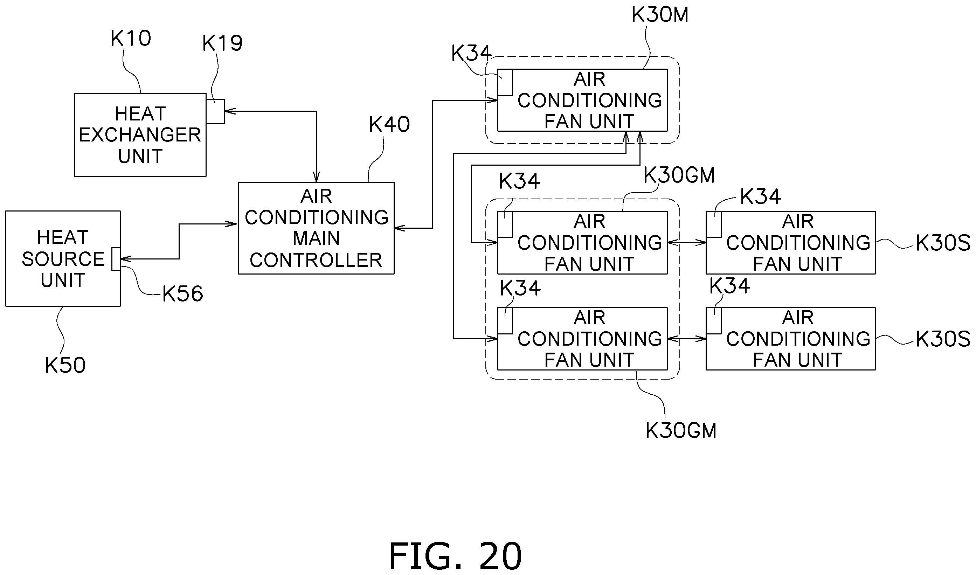

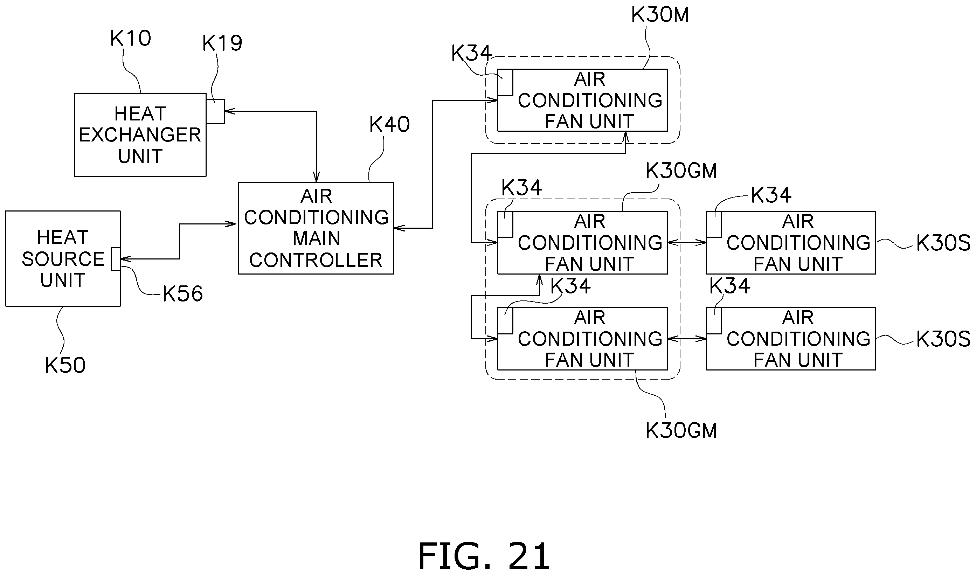

Fig. 20 depicts connection similar to a connection mode of the air conditioning main controller K40, the air conditioning fan controllers K34, and the heat source controller K56 as exemplarily depicted in Fig. 17, with the air conditioning main controller K40 installed at a place different from the heat exchanger unit K10.
(4-9-4-18)
The above section (4-9-4-17) refers to the case and the case (see Fig. 19) where the air conditioning main controller K40 is connected directly in parallel with the plurality of air conditioning fan controllers K34 of the plurality of air conditioning fan units K30, and the case (see Fig. 20 and Fig. 21) where the air conditioning fan controller K34 of the single air conditioning fan unit K30M as a master unit is connected with the air conditioning fan controllers K34 of the two air conditioning fan units K30GM as group master units, and the air conditioning fan controllers K34 of the air conditioning fan units K30S as slave units are connected with the group master units. Alternatively, there may not be provided no entire master unit and the master unit may be categorized as the group master unit to connect the air conditioning fan controller K34 to the air conditioning main controller K40.

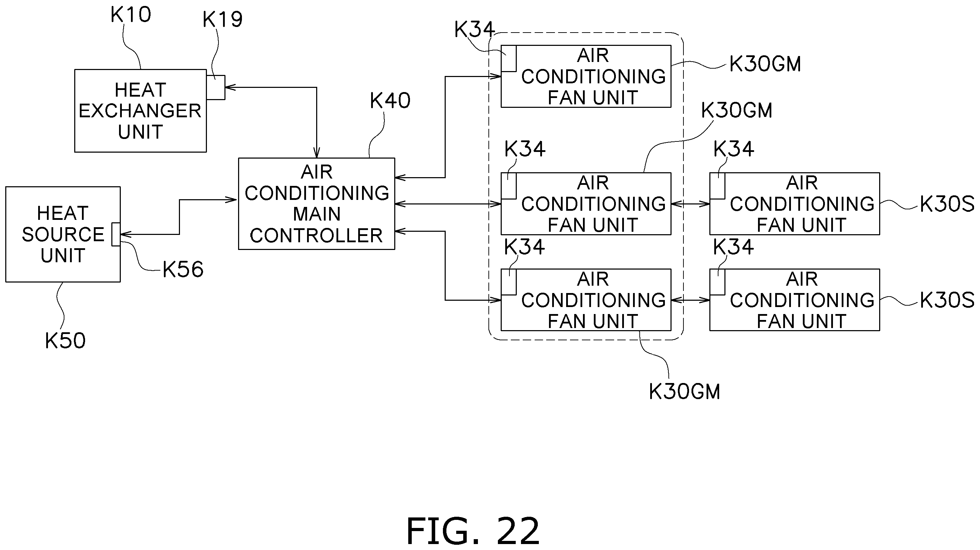

In an exemplary case where the single heat exchanger unit K10 is connected with five air conditioning fan units K30GM and K30S, the air conditioning fan units are categorized into three air conditioning fan units K30GM as group master units and two air conditioning fan units K30S as slave units, as depicted in Fig. 22. The five air conditioning fan units K30GM and K30S are configured similarly to the air conditioning fan units K30. The air conditioning main controller K40 of the heat exchanger unit K10 is connected to the heat source controller K56 of the heat source unit K50 and the three air conditioning fan unit K30GM as group master units. Furthermore, the air conditioning fan controllers K34 of two air conditioning fan units K30GM as group master units are connected with the air conditioning fan controllers K34 of the air conditioning fan units K30S as slave units in the respective groups. However, the air conditioning fan controller K34 of the single air conditioning fan unit K30GM as a group master unit is not connected with any air conditioning fan controller K34 of a slave unit. Description is made to the case where the air conditioning fan controller K34 of the single air conditioning fan unit K30GM as a group master unit is connected with the air conditioning fan controller K34 of the single air conditioning fan unit K30S as a slave unit and the case where the air conditioning fan controller K34 of the single air conditioning fan unit K30GM as a group master unit is connected with the air conditioning fan controller K34 of a slave unit. The air conditioning fan controller K34 of the group master unit is connected with not necessarily the single air conditioning fan controller K34 of the slave unit and may be connected with two or more.

The air conditioning main controller K40 controls the air conditioning fan controllers K34 of the two air conditioning fan units K30S as group slave units through the air conditioning fan controllers K34 of the two air conditioning fan units K30GM as group master units. Commands to the two air conditioning fan controllers K34 as slave units may be transmitted directly from the air conditioning main controller K40, or may be transmitted from the air conditioning fan controllers K34 of the group master units upon receipt of a command from the air conditioning main controller K40.

The air conditioning main controller K40 is disposed at the place other than the heat exchanger unit K10 and the plurality of air conditioning fan units K30 in this manner. The air conditioning main controller K40 can be more freely disposed without being restricted by the heat exchanger unit K10 and the plurality of air conditioning fan units K30GM and K30S so as to be handled easily.
(4-9-4-19)
   As to the air conditioning system K1 according to the modification example I, description is made to the configuration for detection of differential pressure within a determined section with use of the differential pressure sensor K121 (airflow volume sensing unit). The configuration for sensing of airflow volume is not limited to the above. For example, airflow volume can be sensed exemplarily by sensing differential pressure in front of and behind the fan K32 of the air conditioning fan unit K30 with use of the differential pressure sensor, and calculating airflow volume by the air conditioning main controller K40 or the air conditioning fan controller K34 from differential pressure characteristic in front of and behind the fan K32. The differential pressure sensor functions as the airflow volume sensing unit also in this case. For example, wind speed at a specific position can be sensed with use of the wind speed sensor, and the air conditioning main controller K40 or the air conditioning fan controller K34 can calculate airflow volume from a wind speed characteristic at the specific position. The wind speed sensor functions as the airflow volume sensing unit in this case. For example, internal pressure displacement is sensed with use of the pressure sensor, and the air conditioning main controller K40 or the air conditioning fan controller K34 can calculate airflow volume with comparison between internal pressure displacement during predefined airflow volume and the pressure displacement thus sensed. The pressure sensor functions as the airflow volume sensing unit in this case. For example, with use of operation current of the fan K32, the air conditioning main controller K40 or the air conditioning fan controller K34 can calculate airflow volume from a workload of the fan motor K33. A device configured to sense operation current functions the airflow volume sensing unit in this case.
(4-9-4-20)
   As to the air conditioning system K1 according to the modification example I, description is made to the exemplary case where the air conditioning main controller K40 calculates refrigerant circulation volume and transmits, to the heat source controller K56, a request for change in operating frequency of the compressor K51, and the heat source controller K56 controls the operating frequency of the compressor K51. The air conditioning system K1 may alternatively be configured such that the air conditioning main controller K40 controls at least one of the operating frequency of the compressor K51 and the opening degree of the expansion valve K53.
(4-9-4-21)
   As to the air conditioning system K1 according to the modification example I, description is made to the case where the heat exchanger unit K10 is connected with the each of ducts K20a to K20d that extends from the heat exchanger unit K10 to each of the air conditioning fan units K30 without branching halfway. The air conditioning system K1 may alternatively include a duct branching halfway. The air conditioning system K1 can be exemplarily configured such that the air conditioning fan unit K30 is connected to each of branched ends of a single duct.
(4-9-5-1)
   The air conditioning system K1 according to the modification example I includes the air conditioning controller K300, a plurality of ducts K20 and K20a to K20e, the plurality of air conditioning fan units K30, K30a to K30d, 30M, K30GM, and K30S. The plurality of ducts K20 and K20a to K20 is provided to distribute conditioned air having passed through the utilization heat exchanger K11 of the heat exchanger unit K10. The plurality of air conditioning fan units K30, K30a to K30d, 30M, K30GM, and K30S is provided correspondingly to the plurality of ducts K20 and K20a to K20e, and supplies the indoor space SI with conditioned air from the heat exchanger unit K10 through the plurality of ducts K20 and K20a to K20e. The plurality of actuators is configured to change supply air volume of conditioned air supplied to the indoor space SI. The plurality of actuators according to the modification example I is selected from among the plurality of fan motors K33, the plurality of drive motors K39, and the plurality of air deflector motors K75. The plurality of actuators may be the plurality of fan motors K33, the plurality of drive motors K39, or the plurality of air deflector motors K75. In addition, the plurality of actuators may simultaneously include actuators of different types, such as the fan motor K33 and the drive motor K39. Each of the ducts K20 and K20a to K20e is disposed at one of the distribution flow paths. Each of the air conditioning fan units K30, K30a to K30d, 30M, K30GM, and K30S includes a corresponding one of the fans K32 and K32a to K32d as the first fan, and is disposed at one of distribution flow paths. Each of the actuators is disposed at one of the distribution flow paths. The air conditioning controller K300 controls the plurality of actuators to control supply air volume of each of the air conditioning fan units K30, K30a to K30d, 30M, K30GM, and K30S. The air conditioning system K1 according to the modification example I can thus adjust airflow volume of air passing through the utilization heat exchanger K11 for efficient heat exchange at the utilization heat exchanger K11, to reduce energy consumption.
(4-9-5-2)
   The air conditioning main controller K40 of the air conditioning controller K300 according to the modification example I issues a plurality of commands on supply air volume of the plurality of air conditioning fan units K30 in order to control the rotation speed of the plurality of fan motors K33 as the plurality of actuators in the plurality of air conditioning fan units K30, the drive motors K39 of the plurality of dampers K38, or the air deflector motors K75 of the air deflectors K74. The air conditioning system K1 can thus adjust airflow volume of air passing through the utilization heat exchanger K11 for efficient heat exchange at the utilization heat exchanger K11, to reduce energy consumption.
(4-9-5-3)
   In the air conditioning system K1 according to the modification example I, the air conditioning main controller K40 is disposed at the heat exchanger unit K10. There may be thus constructed a network connecting the air conditioning main controller K40 and the plurality of fan motors K33 as the actuators in accordance with a flow of conditioned air supplied from the heat exchanger unit K10. The network for transmission of commands from the air conditioning main controller K40 can thus be constructed easily starting from the heat exchanger unit K10.
(4-9-5-4)
   When the air conditioning main controller K40 is disposed at the air conditioning fan unit K30M as master units which is one of the plurality of air conditioning fan units K30, a network of the plurality of air conditioning fan units K30 is connected to constitute the air conditioning system K1 provided with the single air conditioning main controller K40 included in the plurality of air conditioning fan units K30. The air conditioning system K1 can thus be constructed easily. In other words, the plurality of air conditioning fan units K30 has only to include at least one air conditioning fan unit K30M as a master unit. This facilitates designing and construction of the air conditioning system K1.

In a case where there is a plurality of air conditioning main controllers K40, the plurality of air conditioning main controllers K40 may be configured to operate in cooperation to operate as a single main controller. In an exemplary case where an air conditioning main controller K40 is additionally provided, the air conditioning main controller K40 thus added and the previously existing air conditioning main controller K40 can communicate with each other so as to function as a single new main controller.
(4-9-5-5)
   When the air conditioning main controller K40 is disposed at a place other than the heat exchanger unit K10 and the plurality of air conditioning fan units K30, the air conditioning main controller K40 can be more freely disposed without being restricted by the heat exchanger unit K10 and the plurality of air conditioning fan units K30M, K30GM, and K30S so as to be handled easily.
(4-9-5-4)
   The air conditioning system K1 according to the modification example I is configured such that an airflow passing through the utilization heat exchanger K11 is generated only by air suction force of the plurality of air conditioning fan units K30. There is thus no need to provide any power source configured to generate an airflow in the heat exchanger unit K10. This enables cost reduction in comparison to a case where the heat exchanger unit K10 is provided therein with such a power source configured to generate an airflow. Furthermore, the heat exchanger unit K10 can be thinned to expand a range provided with the air conditioning system K1.
(4-9-5-7)
   When the heat exchanger unit K10 includes at least one of the gas-side temperature sensor K102, the liquid-side temperature sensor K103, the utilization heat exchanger temperature sensor K104 as heating medium temperature sensors configured to sense temperature of a refrigerant as a heating medium flowing in the utilization heat exchanger K11 or in the pipe connected to the utilization heat exchanger K11, and the suction temperature sensor K101 configured to sense temperature of air sucked into the heat exchanger unit, and the air conditioning main controller K40 refers to at least one of the detection values of the heating medium temperature sensors and the suction temperature sensor for determination of a command on increase or decrease in supply air volume, the air conditioning main controller K40 can easily issue a command for air supply to the plurality of air conditioning fan units K30 so as to be adapted to an operation condition of the heat exchanger unit K10. In an exemplary case where there is insufficient heat energy to be supplied from the heat source unit K50 to the heat exchanger unit K10, the air conditioning main controller K40 decreases supply air volume in accordance with the detection value of the utilization heat exchanger temperature sensor K104 to inhibit defects such as excessive decrease in temperature of the refrigerant supplied from the heat source unit K50.
(4-9-5-8)
   The air conditioning remote controller K60 in the air conditioning system K1 according to the modification example I has a temperature setting function of setting temperature in the indoor space SI and indoor temperature sensing function. The air conditioning main controller K40 refers to the set temperature of the air conditioning remote controller K60 and indoor temperature sensed by the air conditioning remote controller K60 to determine a command on increase or decrease in supply air volume. The air conditioning main controller K40 can thus issue a command to approach the temperature in the indoor space SI to the set temperature. In the air conditioning system K1 according to the modification example I, the air conditioning remote controllers K60 are installed at a plurality of places in the indoor space SI, so that indoor air temperature at each of the places can easily approach the set temperature.
(4-9-5-9)
   The air conditioning system K1 according to the modification example I includes the compressor K51 configured to compress a refrigerant circulating in the utilization heat exchanger K11, the heat source heat exchanger K52 configured to cause heat exchange of the refrigerant circulating in the utilization heat exchanger K11, and the expansion valve K53 configured to expand the refrigerant circulating between the utilization heat exchanger K11 and the heat source heat exchanger K52. The air conditioning main controller K40 is connected to at least one of the compressor K51 and the expansion valve K53 for control of system operation via the heat source controller K56. System operation can thus be controlled appropriately through control of at least one of the rotation speed of the compressor K51 and the opening degree of the expansion valve K53 so as to achieve increase or decrease in supply air volume as well as refrigerant circulation volume obtained by calculation or the like, and increase or decrease in supply air volume can be controlled while achieving a refrigeration cycle appropriate for a refrigerant circulating in the utilization heat exchanger K11 and the heat source heat exchanger K52.
(4-9-4-10)
   In the air conditioning system K1 according to the modification example I, the air conditioning main controller K40 is connected to at least one of the compressor K51 and the expansion valve K53 for control of system operation. The air conditioning main controller K40 can thus appropriately control system operation by controlling at least one of the rotation speed of the compressor K51 and the opening degree of the expansion valve K53 to achieve increase or decrease in supply air volume as well as refrigerant circulation volume obtained by calculation or the like. The air conditioning main controller K40 can control increase or decrease in supply air volume while achieving a refrigeration cycle appropriate for the refrigerant circulating in the utilization heat exchanger K11 and the heat source heat exchanger K52.
(4-9-5-11)
   In the air conditioning system K1 according to the modification example I, the air conditioning main controller K40 controls the fan motors K33 or the dampers K38 as an actuator in accordance with information indicating at least one of the rotation speed of the compressor K51 and the opening degree of the expansion valve K53 for control of system operation. The air conditioning main controller K40 can thus control increase or decrease in supply air volume while achieving the refrigeration cycle appropriate for the refrigerant circulating in the utilization heat exchanger and the heat source heat exchanger.
(4-9-5-12)
   The air conditioning main controller K40 adjusts the plurality of fan motors K33 as actuators so as to prevent a backflow of conditioned air from the heat exchanger unit K10 to the plurality of air outlets K71 through the plurality of ducts K20, as well as controls airflow volume of air passing through the utilization heat exchanger K11 with use of the plurality of fan motor K33. This can prevent heat exchange efficiency decrease due to backflows of conditioned air in the plurality of ducts. The air conditioning main controller K40 controls, in addition to the above control, refrigerant circulation volume by means of at least one of the rotation speed of the compressor K51 and the opening degree of the expansion valve K53, so as to easily inhibit heat exchange efficiency decrease.
(4-9-5-13)
   The air conditioning system K1 according to the modification example I includes the dampers K38 of the air conditioning fan units K30 attached to the ducts K20, and the drive motors K39 (exemplifying actuators) configured to drive the dampers K38. The air conditioning main controller K40 controls to adjust the opening degrees of the plurality of dampers K38 so as to prevent backflows of conditioned air from the heat exchanger unit K10 to the plurality of air outlets K71 through the plurality of ducts K20. This can easily prevent heat exchange efficiency decrease due to backflows of conditioned air in the plurality of ducts K20.

The air conditioning system K1 alternatively includes the air deflectors K74 of the blow-out port units K70 attached to the ducts K20, and the air deflector motors K75 configured to drive the air deflectors K74. The air conditioning main controller K40 controls to adjust the opening degrees of the plurality of air deflectors K74 so as to prevent backflows of conditioned air from the heat exchanger unit K10 to the plurality of air outlets K71 through the plurality of ducts K20. This can easily prevent heat exchange efficiency decrease due to backflows of conditioned air in the plurality of ducts K20.
(4-9-5-14)
The air conditioning system K1 according to the modification example I includes the plurality of fan motors K33 configured to individually change supply air volume of the plurality of air conditioning fan units K30. The air conditioning system K1 adjusts the numbers of revolutions of the fan motors K33 to control to prevent backflows of conditioned air in the ducts K20, and canthus easily prevent heat exchange efficiency decrease due to backflows of conditioned air in the ducts K20.

### (4-10) Modification example J

### (4-10-1) Entire configuration

The air conditioning main controller K40 controls the plurality of actuators in accordance with the plurality of commands on supply air volume of the plurality of air conditioning fan units K30 in a mode not limited to the mode according to the modification example I. The air conditioning system K1 including the air conditioning main controller K40 that controls the plurality of actuators in accordance with the plurality of commands on supply air volume of the plurality of air conditioning fan units K30 may be configured in accordance with the modification example J. The air conditioning system K1 according to the modification example J may be combined with the air treatment system 1 according to the above embodiment.

In the air conditioning system K1 according to the modification example J, the plurality of air conditioning fan controllers K34 as a plurality of sub controllers receives the plurality of commands transmitted from the air conditioning main controller K40. In the air conditioning system K1 according to the modification example J, each of the air conditioning fan controllers K34 controls at least one of the plurality of actuators in accordance with at least one of the plurality of commands.

Specifically, exemplarily described is the case where the air conditioning system K1 according to the modification example J includes the configuration depicted in Fig. 1 similarly to the air conditioning system K1 according to the modification example I. The modification example J relates to the case where the air conditioning system K1 depicted in Fig. 1 changes supply air volume by means of the fan motors K33, while the dampers K38 or the air deflectors K74 are not involved in change in supply air volume.

Similarly to the air conditioning main controller K40 according to the modification example I, the air conditioning main controller K40 according to the modification example J calculates necessary supply air volume to be blown out of each of the air conditioning fan units K30, from the blow-out temperature detected by each of the blow-out temperature sensors K122 and the set temperature. Specifically, the air conditioning main controller K40 exemplarily calculates supply air volume of each of the air conditioning fan units K30a to K30d from the temperature difference between the indoor air temperature and the set temperature, as well as blowing air temperature. The air conditioning main controller K40 determines, as commands to be transmitted to each of the air conditioning fan units K30a to K30d, the calculated supply air volume (target supply air volume) of each of the air conditioning fan units K30a to K30d.

The air conditioning main controller K40 transmits, to the plurality of air conditioning fan controllers K34, the plurality of supply air volume thus calculated as the target supply air volume. In other words, the air conditioning main controller K40 transmits the plurality of commands to the plurality of air conditioning fan controllers K34 configured to control the air conditioning fan units K30a to K30d. The air conditioning main controller K40 exemplarily transmits the target supply air volume of the air conditioning fan unit K30a to the air conditioning fan controller K34 attached to the air conditioning fan unit K30a. The target supply air volume of the air conditioning fan unit K30a corresponds to the command on supply air volume of the air conditioning fan unit K30. The air conditioning fan controller K34 of the air conditioning fan unit K30a controls the rotation speed of the fan motor K33a so as to approach the supply air volume to the target supply air volume. Similarly, the air conditioning main controller K40 transmits the target supply air volume of the air conditioning fan units K30b to K30d to the air conditioning fan controllers K34 attached to the air conditioning fan unit K30b to K30d. The air conditioning fan controllers K34 of the air conditioning fan units K30b to K30d control the fan motors K33b to K33d so as to approach the supply air volume to the target supply air volume.

In more detail, the air conditioning fan units K30a to K30d each include the differential pressure sensor K121 as the airflow volume sensing unit configured to sense airflow volume of air passing the unit. The airflow volume sensing unit is not limited to the differential pressure sensor K121. Examples of the airflow volume sensing unit include the wind speed sensor. For example, the air conditioning fan controller K34 of the air conditioning fan unit K30a compares airflow volume (supply air volume) of air passing through the air conditioning fan unit K30a and sensed by the differential pressure sensor K121 of the air conditioning fan unit K30a with target airflow volume (target supply air volume). The air conditioning fan controller K34 of the air conditioning fan unit K30a increases the rotation speed of the fan motor K33a when the airflow volume of air passing through the air conditioning fan unit K30a is less than the target airflow volume, to increase the airflow volume (supply air volume) of the air conditioning fan unit K30a so as to approach to the target airflow volume. In contrast, the air conditioning fan controller K34 decreases the rotation speed of the fan motor K33a when the airflow volume of air passing through the air conditioning fan unit K30a is more than the target airflow volume, to decrease the airflow volume (supply air volume) of the air conditioning fan unit K30a so as to approach to the target airflow volume.
Description is made to the case where the air conditioning fan controller K34 is attached to the air conditioning fan unit K30. The air conditioning fan controller K34 is however, not necessarily attached to the air conditioning fan unit K30.
(4-10-2)
The modification example J refers to the case where the fan motors K33 functions as actuators configured to change supply air volume. The actuators configured to change supply air volume are not limited to the fan motors K33 in the modification example J. Examples of the plurality of actuators include the drive motors K39 of the dampers K38 depicted in Fig. 15. The fan motor K33 of the fan K32 depicted in Fig. 5 may of a type having a variable rotation speed as in the modification example J, or may of a type having a nonvariable rotation speed. When the fan motor K33 is of the type having a nonvariable rotation speed, the supply air volume (airflow volume) from the air conditioning fan unit K30 to the blow-out port unit K70 is changed only with use of the damper K38 or the like. In contrast, when the fan motor K33 is of the type having a variable rotation speed, the supply air volume (airflow volume) from the air conditioning fan unit K30 to the blow-out port unit K70 is changed through change in opening degree of the damper K38 in combination with change in the rotation speed of the fan motor K33. In this case, the air conditioning fan controller K34 may be configured to control both the drive motor K39 and the fan motor K33 functioning as actuators.

When the fan motor K33 is of the type having a nonvariable rotation speed and the supply air volume (airflow volume) from the air conditioning fan unit K30 to the blow-out port unit K70 is changed only with use of the damper K38, the air conditioning fan controller K34 is replaced with a damper controller. The air conditioning main controller K40 transmits, to a plurality of damper controllers, supply air volume thus calculated as the target supply air volume. The air conditioning main controller K40 exemplarily transmits the target supply air volume of the air conditioning fan units K30a to K30d to the damper controllers attached to the air conditioning fan units K30a to K30d. The target supply air volume of the air conditioning fan units K30a to K30d corresponds to commands on supply air volume of the air conditioning fan units K30. In other words, the air conditioning main controller K40 transmits the plurality of commands to the plurality of damper controllers configured to control the air conditioning fan units K30a to K30d. The damper controllers of the air conditioning fan units K30a to K30d control the opening degrees of the dampers K38 so as to approach the supply air volume to the target supply air volume.

In more detail, the damper controller of each of the air conditioning fan units K30a to K30d compares airflow volume (supply air volume) of air passing through the air conditioning fan units K30a to K30d and sensed by the differential pressure sensor K121 of each of the air conditioning fan units K30a to K30d with target airflow volume (target supply air volume). The damper controller of each of the air conditioning fan units K30a to K30d increases the opening degree of the damper K38 by means of the drive motor K39 when the airflow volume of air passing through each of the air conditioning fan units K30a to K30d is less than the target airflow volume, to increase the airflow volume (supply air volume) of each of the air conditioning fan units K30a to K30d so as to approach to the target airflow volume. In contrast, the damper controller decreases the opening degree of the damper K38 by means of the drive motor K39 when the airflow volume of air passing through each of the air conditioning fan units K30a to K30d is more than the target airflow volume, to decrease the airflow volume (supply air volume) of each of the air conditioning fan units K30a to K30d so as to approach to the target airflow volume.

Examples of the plurality of actuators include the air deflector motors K75. The fan motor K33 of the fan K32 may of a type having a variable rotation speed as in the modification example J, or may of a type having a nonvariable rotation speed. When the fan motor K33 is of the type having a nonvariable rotation speed, the supply air volume (airflow volume) from the air conditioning fan unit K30 to the blow-out port unit K70 is changed with use of both or either one of the damper K38 or the air deflector K74. In contrast, when the fan motor K33 is of the type having a variable rotation speed, the supply air volume (airflow volume) from the air conditioning fan unit K30 and the blow-out port unit K70 to the indoor space SI is changed through change in opening degree of both or either one of the damper K38 or the air deflector K74 in combination with change in the rotation speed of the fan motor K33.

When the fan motor K33 is of the type having a nonvariable rotation speed and the supply air volume (airflow volume) from the air conditioning fan unit K30 to the blow-out port unit K70 is changed only with use of the air deflector K74, the air conditioning fan controller K34 is replaced with an air deflector controller. The air conditioning main controller K40 transmits, to a plurality of air deflector controllers, supply air volume thus calculated as the target supply air volume. The air conditioning main controller K40 exemplarily transmits the target supply air volume of the air conditioning fan units K30a to K30d to the air deflector controllers attached to the air conditioning fan units K30a to K30d. The target supply air volume of the air conditioning fan units K30a to K30d corresponds to commands on supply air volume of the air conditioning fan units K30a to K30d. In other words, the air conditioning main controller K40 transmits the plurality of commands to the plurality of air deflector controllers configured to control the air conditioning fan units K30a to K30d. The air deflector controllers of the air conditioning fan units K30a to K30d control the opening degrees of the air deflectors K74 so as to approach the supply air volume to the target supply air volume.

In more detail, the air deflector controller of each of the air conditioning fan units K30a to K30d compares airflow volume (supply air volume) of air passing through the air conditioning fan units K30a to K30d and sensed by the differential pressure sensor K121 of each of the air conditioning fan units K30a to K30d with target airflow volume (target supply air volume). The air deflector controller of each of the air conditioning fan units K30a to K30d increases the opening degree of the air deflector K74 by means of the air deflector motor K75 when the airflow volume of air passing through each of the air conditioning fan units K30a to K30d is less than the target airflow volume, to increase the airflow volume (supply air volume) of each of the air conditioning fan units K30a to K30d so as to approach to the target airflow volume. In contrast, the air deflector controller decreases the opening degree of the air deflector K74 by means of the air deflector motor K75 when the airflow volume of air passing through each of the air conditioning fan units K30a to K30d is more than the target airflow volume, to decrease the airflow volume (supply air volume) of each of the air conditioning fan units K30a to K30d so as to approach to the target airflow volume.
(4-10-3-1)
   The air conditioning system K1 according to the modification example J has characteristics described in the section (5-1) of the modification example I.
(4-10-3-2)
   The air conditioning controller K300 according to the modification example J controls the plurality of actuators in accordance with the plurality of commands on supply air volume of the plurality of air conditioning fan units K30a to K30d. The actuators according to the modification example J include at least one type of the fan motors K33, the drive motors K39, and the air deflector motors K75. The air conditioning system K1 can thus adjust airflow volume of air passing through the utilization heat exchanger K11 for efficient heat exchange at the utilization heat exchanger K11, to reduce energy consumption by the air conditioning system K1. In the modification example J, the plurality of actuators is controlled by at least one type of the plurality of air conditioning fan controllers K34, the plurality of damper controllers, and the plurality of air deflector controllers in the air conditioning controller K300.
(4-10-3-3)
   The air conditioning controller K300 in the air conditioning system K1 according to the modification example J includes the air conditioning main controller K40 configured to transmit a plurality of commands, and at least one sub controller configured to receive the plurality of commands from the air conditioning controller K40. Examples of the sub controller according to the modification example J include the air conditioning fan controller K34, the damper controller, and the air deflector controller. The at least one sub controller controls the plurality of actuators in accordance with the plurality of commands. In an exemplary case where the plurality of actuators includes only the plurality of fan motors K33, the air conditioning fan controllers K34 and the fan motors K33 may be correspondingly provided one by one. The plurality of fan motors K33 may alternatively be provided correspondingly to a single air conditioning fan controller K34. In the air conditioning system K1 thus configured, the air conditioning main controller K40 controls the plurality of actuators via the at least one sub controller, which simplifies control by the air conditioning main controller K40 and facilitates designing of the ducts and system layout change.
(4-10-3-4)
   In the air conditioning system K1 according to the modification example J, each of the air conditioning fan units K30a to K30d includes the differential pressure sensor K121 or the wind speed sensor functioning as the airflow volume sensing unit configured to sense airflow volume of air passing through the unit. Each of the sub controllers controls the rotation speed of each of the fan motors K33a to K33d so as to approach the airflow volume sensed by the airflow volume sensing unit to supply air volume commanded by the air conditioning controller K300. This reliably achieves control of the supply air volume of each of the air conditioning fan units K30a to K30d by the air conditioning controller K300.
(4-10-3-5)
   In the air conditioning system K1 according to the modification example J, the air conditioning controller K300 calculates supply air volume of each of the air conditioning fan units K30a to K30d from the temperature difference between the indoor air temperature adjusted by each of the air conditioning fan units K30a to K30d and the set temperature, as well as the blowing air temperature, and determines a plurality of commands in accordance with the supply air volume thus calculated. The air conditioning system K1 can thus easily control temperature of the indoor space SI by changing the supply air volume.

### (4-11) Modification example K

The air treatment system 1 according to the above embodiment may alternatively be configured to treat air in the indoor space SI as the air conditioning target space in combination with an air conditioning system 510 to be described later.

### (4-11-1) Entire configuration

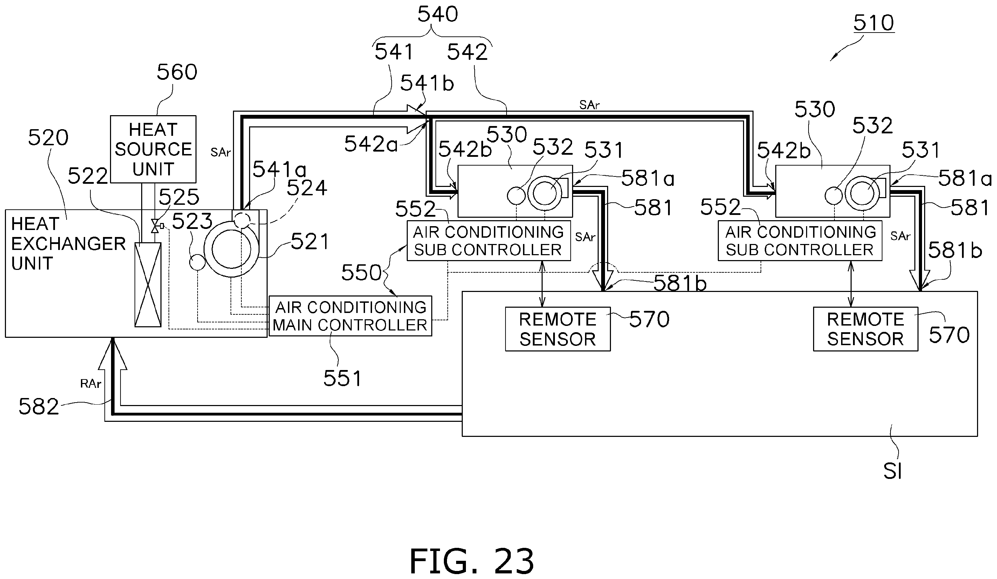

The air conditioning system 510 depicted in Fig. 23 includes a heat exchanger unit 520, an air conditioning fan unit 530, a plurality of ducts 540, and an air conditioning controller 550. The heat exchanger unit 520 includes a second fan 521. Each of the air conditioning fan units 530 includes a first fan 531. The first fans 531 each supply the indoor space SI with air from the air conditioning fan unit 530. Examples of the indoor space SI include a room in a building. Examples of the room include a space having air movement restricted by a floor, a ceiling, and walls. The indoor space SI including a single or a plurality of spaces is provided with a plurality of air conditioning fan units 530. Fig. 23 representatively depicts, as the air conditioning system 510 including the plurality of air conditioning fan units 530, the air conditioning system 510 including two air conditioning fan units 530 and installed for the single indoor space SI. The number of the air conditioning fan units 530 may be three or more to be set appropriately. As described earlier, the indoor space SI provided with the air conditioning fan units 530 may include two or more spaces.

The ducts 540 distribute, to the plurality of air conditioning fan units 530, air SAr sent from the heat exchanger unit 520 by means of the second fan 521. The ducts 540 include a main pipe 541 and a branch pipe 542 branching from the main pipe 541. Fig. 23 depicts the main pipe 541 disposed outside the heat exchanger unit 520. Alternatively, the main pipe 541 may be disposed inside the heat exchanger unit 520, or may be disposed to extend from inside the heat exchanger unit 520 to outside the heat exchanger unit 520. When the main pipe 541 disposed inside the heat exchanger unit 520, part of a casing of the heat exchanger unit 520 may occasionally serve as the main pipe 541. Fig. 23 exemplarily depicts the main pipe 541 having an inlet port 541a connected to the heat exchanger unit 520. The second fan 521 is disposed in the heat exchanger unit 520. In this case, air blown out of the second fan 521 entirely flows into the ducts 540.

The main pipe 541 in the ducts 540 has an outlet port 541b connected to an inlet port 542a of the branch pipe 542. The branch pipe 542 has a plurality of outlet ports 542b connected to the plurality of air conditioning fan units 530.

Each of the air conditioning fan units 530 and the indoor space SI are connected to each other via an air duct 581 The air duct 581 has an inlet port 581a connected to the air conditioning fan unit 530. The air duct 581 has an outlet port 581b connected to the indoor space SI. Each of the first fans 531 generates, in the air conditioning fan unit 530, an airflow from the outlet port 542b of the duct 540 toward the inlet port 581a of the air duct 581. From a different viewpoint, each of the first fans 531 sucks the air SAr from the outlet port 542b of the branch pipe 542. Each of the first fans 531 is configured to changes a rotation speed to change static pressure in each of the air conditioning fan units 530 (in front of the inlet port 581a of the air duct 581). Assuming that the duct 540 has constant static pressure, each of the first fans 531 increases the rotation speed to increase the static pressure in each of the air conditioning fan units 530 (in front of the inlet port 581a of the air duct 581). Increase in static pressure in the air conditioning fan unit 530 leads to increase in volume of the air SAr flowing in the air duct 581. Such change in volume of the flowing air leads to change in supply air volume of air blown out of the outlet port 581b of each of the air ducts 581 to the indoor space SI.

The air conditioning controller 550 includes an air conditioning main controller 551 and a plurality of air conditioning sub controllers 552. The air conditioning main controller 551 and the plurality of air conditioning sub controllers 552 are connected to each other to constitute the air conditioning controller 550. The air conditioning main controller 551 controls a rotation speed of the second fan 521. In other words, the air conditioning main controller 551 controls output from the second fan 521. When the second fan 521 has higher output, the second fan 521 is changed in state to be directed to increase airflow volume of the second fan 521.

Each of the air conditioning fan units 530 is provided with a single air conditioning sub controller 552. Each of the air conditioning sub controllers 552 transmits a command on airflow volume change to a fan motor 531a of the corresponding first fan 531. The air conditioning sub controllers 552 each store target airflow volume (target supply air volume). The air conditioning sub controllers 552 each issue a command (command on airflow volume change) to increase a rotation speed of the fan motor 531a of the first fan 531 in a case where the supply air volume is less than the target airflow volume. The air conditioning sub controllers 552 each issue a command (command on airflow volume change) to decrease the rotation speed of the fan motor 531a of the first fan 531 in another case where the supply air volume exceeds the target airflow volume. The command on airflow volume change corresponds to the command on supply air volume of the air conditioning fan unit 530.

The air conditioning controller 550 acquires information on supply air volume of air supplied to the indoor space SI by the plurality of first fans 531. Examples of the information on supply air volume include air volume of air to be supplied to the indoor space SI per one second, and the air volume of air to be supplied may also be called necessary supply air volume. Requested output of the second fan 521 is determined in accordance with the information on supply air volume thus acquired. The air conditioning controller 550 controls the output of the second fan 521 in order to match the output of the second fan 521 to the requested output which has determined. Specifically, each of the air conditioning sub controllers 552 acquires, from the corresponding air conditioning fan unit 530, the information on supply air volume of the air conditioning fan unit 530. The air conditioning sub controllers 552 each output the information on supply air volume to the air conditioning main controller 551.

### (4-11-2) Detailed configurations

### (4-11-2-1) Heat exchanger unit 520

The heat exchanger unit 520 includes, in addition to the second fan 521 already described, a utilization heat exchanger 522, a first airflow volume sensing means 523, a temperature sensor 524, and water volume control valve 525. The utilization heat exchanger 522 is supplied with cold water, warm water, or the like as a heating medium, from a heat source unit 560. The heating medium supplied to the utilization heat exchanger 522 may be brine or the like other than cold water and warm water. Examples of the first airflow volume sensing means 523 can include an airflow volume sensor, a wind speed sensor, and a differential pressure sensor.

The first airflow volume sensing means 523 senses airflow volume of air sent from the second fan 521. The first airflow volume sensing means 523 is connected to the air conditioning main controller 551. A value of the airflow volume sensed by the first airflow volume sensing means 523 is transmitted from the first airflow volume sensing means 523 to the air conditioning main controller 551. The airflow volume sensed by the first airflow volume sensing means 523 corresponds to airflow volume of air flowing in the main pipe 541 of the ducts 540. In other words, the airflow volume sensed by the first airflow volume sensing means 523 corresponds to total supply air volume of air supplied from the plurality of air conditioning fan units 530 to the indoor space SI.

The temperature sensor 524 senses temperature of the air SAr sent from the second fan 521 to the ducts 540. The temperature sensor 524 is connected to the air conditioning main controller 551. A value of the temperature sensed by the temperature sensor 524 is transmitted from the temperature sensor 524 to the air conditioning main controller 551.

Th heat exchanger unit 520 is connected to the indoor space SI via an air duct 582. Air RAr returning from the indoor space SI through the air duct 582 is sent by the second fan 521 to the ducts 540 through the utilization heat exchanger 522. The air RAr passing the utilization heat exchanger 522 exchanges heat with cold water or warm water flowing in the utilization heat exchanger 522 to become conditioned air. The air SAr exchanging heat in the utilization heat exchanger 522 and sent to the ducts 540 is provided with heat quantity adjusted by the water volume control valve 525. The water volume control valve 525 has an opening degree controlled by the air conditioning main controller 551. Increase in opening degree of the water volume control valve 525 leads to increase in volume of water flowing to the utilization heat exchanger 522, and the utilization heat exchanger 522 and the air SAr exchange more heat quantity per unit time. In contrast, decrease in opening degree of the water volume control valve 525 leads to decrease in volume of water flowing to the utilization heat exchanger 522, and the utilization heat exchanger 522 and the air SAr exchange less heat quantity per unit time.

### (4-11-2-2) Air conditioning fan unit 530

The air conditioning fan units 530 each include, in addition to the first fan 531 already described, a second airflow volume sensing means 532. The second airflow volume sensing means 532 senses airflow volume of air sent from the first fan 531. The second airflow volume sensing means 532 are each connected to a corresponding one of the air conditioning sub controllers 552. A value of the airflow volume sensed by the second airflow volume sensing means 532 is transmitted to the air conditioning sub controller 552. The airflow volume sensed by the second airflow volume sensing means 532 corresponds to airflow volume of air flowing in the air duct 581. In other words, the airflow volume sensed by the second airflow volume sensing means 532 corresponds to supply air volume of air supplied from each of the air conditioning fan units 530 to the indoor space SI. Examples of the second airflow volume sensing means 532 can include an airflow volume sensor, a wind speed sensor, and a differential pressure sensor.

### (4-11-2-3) Remote sensor 570

There is provided a plurality of remote sensors 570 functioning as temperature sensors. Each of the remote sensors 570 are configured to transmit data indicating temperature of the indoor space SI to the corresponding air conditioning sub controller 552.

### (4-11-3) Operation of air conditioning system 510

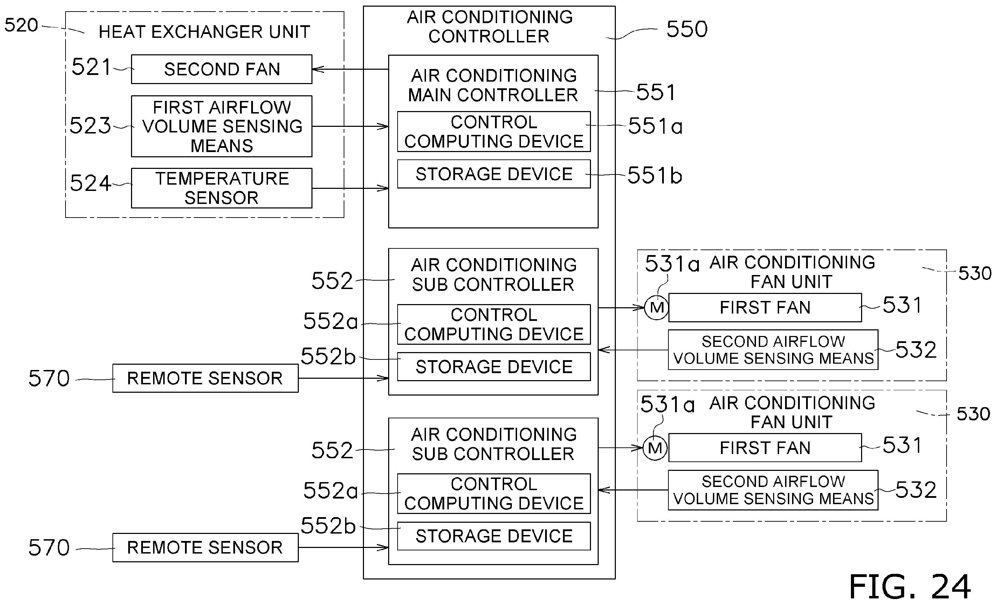

Each of the air conditioning sub controllers 552 receives, from the connected remote sensor 570, a sensed temperature value of a target space. The air conditioning sub controllers 552 each store data indicating set temperature. The data indicating set temperature is preliminarily transmitted from a remote controller (not depicted) or the like to each of the air conditioning sub controllers 552. Each of the air conditioning sub controllers 552 store the data indicating set temperature received from the remote controller or the like in a storage device 552b (see Fig. 24) such as an internal memory. The air conditioning sub controllers 552 each transmit a value of the set temperature to the air conditioning main controller 551. The air conditioning main controller 551 determines target airflow volume of each of the air conditioning fan units 530 on the basis of the set temperature and in accordance with the temperature sensed by the corresponding remote sensor 570. The air conditioning main controller 551 transmits a value of the target airflow volume to each of the air conditioning sub controllers 552.

The air conditioning main controller 551 determines output from the second fan 521 in accordance with total target airflow volume to be supplied to the indoor space SI.

When comparing a case where static pressure at the outlet port 541b of the main pipe 541 (the inlet port 542a of the branch pipe 542) has an intermediate value between static pressure at the inlet port 541a of the main pipe 541 and static pressure at the outlet port 542b of the branch pipe 542 and a case where the static pressure at the outlet port 541b of the main pipe 541 (the inlet port 542a of the branch pipe 542) is more than the intermediate value, output from the second fan 521 is larger in proportion than output from the plurality of first fans 531 in the case where the static pressure at the outlet port 541b of the main pipe 541 (the inlet port 542a of the branch pipe 542) is more than the intermediate value. **In** contrast, when comparing the case where the static pressure at the outlet port 541b of the main pipe 541 (the inlet port 542a of the branch pipe 542) has the intermediate value and the case where the static pressure is less than the intermediate value, output from the second fan 521 is smaller in proportion than output from the plurality of first fans 531 in the case where the static pressure is less than the intermediate value. The proportion of output from the second fan 521 and the proportion of output from the plurality of first fans 531 have an efficient range. The air conditioning main controller 551 thus determines output from the second fan 521 to achieve an efficient proportion. **In** other words, the air conditioning main controller 551 determines output from the second fan 521 to preliminarily set appropriate output with respect to total target airflow volume.

Consideration of the following method of determining output from the second fan 521 will help understanding that output from the second fan 521 has an appropriate range of output from the second fan 521 for reduction of power consumption. When increase in output from the second fan 521 leads to increase in total power consumption of the second fan 521 and the plurality of first fans 531, output from the second fan 521 is gradually decreased to determine the output from the second fan 521 before the total power consumption of the second fan 521 and the plurality of first fans 531 starts increasing again, so that the output thus determined is in a range with smaller power consumption than power consumption in any other range. In contrast, when decrease in output from the second fan 521 leads to increase in total power consumption of the second fan 521 and the plurality of first fans 531, output from the second fan 521 is gradually increased to determine the output from the second fan 521 before the total power consumption of the second fan 521 and the plurality of first fans 531 starts increasing again, so that the output thus determined is in a range with smaller power consumption than power consumption in any other range. When increase in output from the second fan 521 leads to decrease in total power consumption of the second fan 521 and the plurality of first fans 531, output from the second fan 521 is gradually increased to determine the output from the second fan 521 before the total power consumption of the second fan 521 and the plurality of first fans 531 starts increasing again, so that the output thus determined is in a range with smaller power consumption than power consumption in any other range. In contrast, when decrease in output from the second fan 521 leads to decrease in total power consumption of the second fan 521 and the plurality of first fans 531, output from the second fan 521 is gradually decreased to determine the output from the second fan 521 before the total power consumption of the second fan 521 and the plurality of first fans 531 starts increasing again, so that the output thus determined is in a range with smaller power consumption than power consumption in any other range. Appropriate output from the second fan 521 is not necessarily determined in such a manner.

After the air conditioning main controller 551 determines target airflow volume and transmits the value of the target airflow volume to each of the air conditioning sub controllers 552, the air conditioning fan units 530 other than the air conditioning fan unit 530 having highest fan efficiency are each adjusted in terms of the rotation speed of the fan motor 531a of the first fan 531 (the rotation speed of the first fan 531) by the corresponding air conditioning sub controller 552. The numbers of revolutions of the fan motors 531a of the plurality of first fans 531 are adjusted independently from each other.

At the determined output from the second fan 521, the fan motor 531a of the first fan 531 in the air conditioning fan unit 530 having the highest fan efficiency has the largest rotation speed. The air conditioning fan unit 530 having the highest fan efficiency corresponds to the air conditioning fan unit 530 having lowest energy consumption, with equal static pressure at the inlet port 542a of the branch pipe 542 and equal supply air volume to the indoor space SI. The air conditioning fan unit 530 having the lowest fan efficiency corresponds to the air conditioning fan unit 530 having highest energy consumption, with equal static pressure at the inlet port 542a of the branch pipe 542 and equal supply air volume to the indoor space SI.

The air conditioning sub controllers 552 each controls the rotation speed of the fan motor 531a of the corresponding first fan 531 to cause the supply air volume to match the target airflow volume. The plurality of air conditioning sub controllers 552 controls the numbers of revolutions of the fan motors 531a of the plurality of first fan 531 independently from each other. Each of the air conditioning sub controllers 552 increases the rotation speed of the fan motor 531a of the corresponding first fan 531 when the airflow volume sensed by the second airflow volume sensing means 532 is less than the target airflow volume. Each of the air conditioning sub controllers 552 decreases the rotation speed of the fan motor 531a of the corresponding first fan 531 when the airflow volume sensed by the second airflow volume sensing means 532 is more than the target airflow volume. If the air conditioning fan unit 530 having the highest fan efficiency is decreased in the rotation speed, the air conditioning main controller 551 changes the output from the second fan 521 to adjust such that the air conditioning fan unit 530 having the highest fan efficiency has the largest rotation speed.

The air conditioning main controller 551 prioritizes increasing output from a fan having high fan efficiency or decreasing output from a fan having low fan efficiency in the second fan 521 and the plurality of first fans 531, for changing an operation state of at least one of the first fans 531 or airflow volume of at least one of the first fans 531. In other words, the air conditioning main controller 551 determines, in order to increase the supply air volume to the indoor space SI, output from the second fan 521 and target airflow volume of the plurality of air conditioning fan units 530 so as to increase output from a fan having high fan efficiency in the second fan 521 and the plurality of first fans 531. In contrast, the air conditioning main controller 551 determines, in order to decrease the supply air volume to the indoor space SI, output from the second fan 521 and target airflow volume of the plurality of air conditioning fan units 530 so as to decrease output from a fan having high fan efficiency in the second fan 521 and the plurality of first fans 531.

However, the air conditioning main controller 551 increases output from the first fans 531 when airflow volume with the highest fan efficiency in the plurality of air conditioning fan units 530 does not reach the target airflow volume. In this case, the air conditioning main controller 551 increases output from the first fans 531 as well as maximumly keeps the rotation speed of the fan motor 531a of the first fan 531 in the air conditioning fan unit 530 having the highest fan efficiency.

### (12) Controller

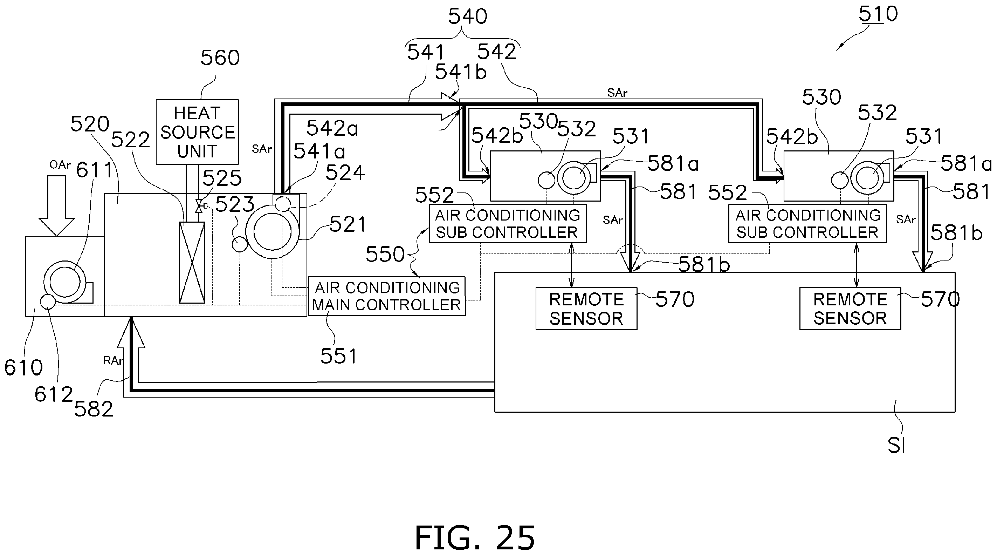

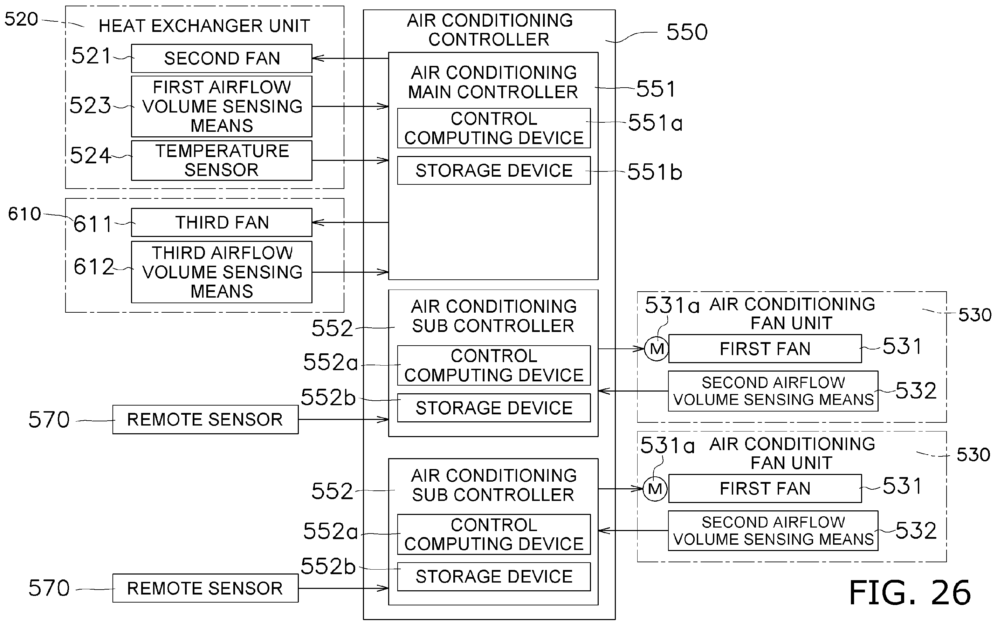

The air conditioning controller 550 is embodied by a computer. The air conditioning controller 550 includes control computing devices 551a and 552a, and storage device 551b and 552b. Examples of the control computing devices 551a and 552a can include a processor such as a CPU or a GPU. The control computing devices 551a and 552a read programs stored in the storage devices 551b and 552b and execute predetermined image processing or arithmetic processing in accordance with the programs. The control computing devices 551a and 552a are configured to further write results of the arithmetic processing to the storage devices 551b and 552b, and read information stored in the storage devices 551b and 552b, in accordance with the programs. Fig. 24 depicts various functional blocks implemented by the control computing devices 551a and 552a. The storage devices 551b and 552b can be utilized as databases.
(4-11-4)
   As depicted in Fig. 25 and Fig. 26, the heat exchanger unit 520 may be provided with an outdoor air introduction unit 610. The outdoor air introduction unit 610 includes a third fan 611 and a third airflow volume sensing means 612. The outdoor air introduction unit 610 takes in outdoor air OAr from outside the indoor space SI by means of the third fan 611 and sends the outdoor air OAr to the heat exchanger unit 520. The third airflow volume sensing means 612 senses airflow volume of the outdoor air OAr to be sent to the heat exchanger unit 520. The third airflow volume sensing means 612 transmits a value of airflow volume of the outdoor air OAr thus sensed to the air conditioning main controller 551. When the outdoor air OAr is sent from the outdoor air introduction unit 610 to the heat exchanger unit 520, the air conditioning main controller 551 may be configured to correct control of output from the second fan 521 in accordance with the airflow volume of the outdoor OAr. Examples of the third airflow volume sensing means 612 can include an airflow volume sensor, a wind speed sensor, and a differential pressure sensor.
(4-11-5-1)
   The air conditioning system 510 according to the modification example K includes the air conditioning controller 550, the plurality of ducts 540, and the plurality of air conditioning fan units 530. The plurality of ducts 540 is provided to distribute conditioned air having passed through the utilization heat exchanger 522 of the heat exchanger unit 520. The plurality of air conditioning fan units 530 is provided correspondingly to the plurality of ducts 540, and conditioned air is supplied from the heat exchanger unit 520 to the indoor space SI through the plurality of ducts 540. The plurality of fan motors 531a as the plurality of actuators is configured to change supply air volume of conditioned air supplied to the indoor space SI. Each of the ducts 540 is disposed at one of distribution flow paths. Each of the air conditioning fan units 530 includes the first fan and is disposed at one of the distribution flow paths. Each of the actuators is disposed at one of the distribution flow paths. The air conditioning controller 550 controls the plurality of fan motors 531a to control supply air volume of each of the air conditioning fan units 530. The air conditioning system 510 according to the modification example K can thus adjust airflow volume of air passing through the utilization heat exchanger 522 for efficient heat exchange at the utilization heat exchanger 522, to reduce energy consumption.
(4-11-5-2)
   In the air conditioning system 510 according to the modification example K, the air conditioning controller 550 controls the plurality of fan motors 531a in accordance with a plurality of commands on supply air volume of the plurality of air conditioning fan units 530. The air conditioning controller 550 thus controls the plurality of fan motors 531a in accordance with the commands on supply air volume, and adjusts airflow volume of air passing through the utilization heat exchanger 522 for efficient heat exchange at the utilization heat exchanger 522, to reduce energy consumption.
(4-11-5-3)
   The air conditioning controller 550 in the air conditioning system 510 according to the modification example K includes the air conditioning main controller 551 configured to transmit a plurality of commands, and at least one air conditioning sub controller 552 configured to receive the plurality of commands from the air conditioning main controller 551. The at least one air conditioning sub controller 552 controls the plurality of fan motors 531a in accordance with the plurality of commands. This simplifies control by the air conditioning main controller 551 and facilitates designing of the ducts and system layout change.
(4-11-5-4)
   **In** the air conditioning system 510 according to the modification example K, each of the air conditioning fan units 530 includes the second airflow volume sensing means 532 functioning as the airflow volume sensing unit configured to sense airflow volume of air passing through the unit. Each of the air conditioning sub controllers 552 controls the rotation speed of each of the fan motors 531a so as to approach the airflow volume sensed by the second airflow volume sensing means 532 to supply air volume commanded by the air conditioning main controller 551. This reliably achieves control of the supply air volume of the air conditioning fan units 530 by the air conditioning sub controllers 552.
(4-11-5-5)
   **In** the air conditioning system 510 according to the modification example K, the air conditioning controller 550 calculates supply air volume of each of the air conditioning fan units 530 from the temperature difference between the indoor air temperature adjusted by each of the air conditioning fan units 530 and the set temperature, as well as the blowing air temperature, and determines a plurality of commands in accordance with the supply air volume thus calculated. The air conditioning system 510 can thus easily control temperature of the air conditioning target space by changing the supply air volume.
(4-11-5-6)
   In the air conditioning system 510 according to the modification example K, the heat exchanger unit 520 includes the second fan 521. In the air conditioning system 510, the air conditioning controller 550 controls the second fan 521 in accordance with supply air volume of the plurality of air conditioning fan units 530. The air conditioning controller 550 can thus control the second fan 521 to achieve an appropriate value in accordance with the supply air volume of the plurality of first fans 531, to reduce energy consumption of the air conditioning system 510.
(4-11-5-7)
   In the air conditioning system 510 according to the modification example K, the heat exchanger unit 520 includes the second fan 521. In the air conditioning system 510, the air conditioning controller 550 includes the air conditioning main controller 551 and the plurality of air conditioning sub controllers 552. The air conditioning main controller 551 controls the plurality of fan motors 531a in accordance with a plurality of commands on supply air volume of the air conditioning fan units 530. Each of the air conditioning sub controller 552 receives the plurality of commands transmitted from the air conditioning main controller 551 and controls the plurality of fan motors 531a. The air conditioning main controller 551 controls the second fan 521 to achieve preliminarily set output with respect to total supply air volume commanded by the plurality of commands. The air conditioning system 510 can thus easily control the second fan 521 in order to achieve an appropriate value of output from the second fan 521 in accordance with the supply air volume of the plurality of first fans 531.

The embodiment of the present disclosure has been described above. Various modifications to modes and details should be available without departing from the object and the scope of the present invention recited in the claims.

### REFERENCE SIGNS LIST

1: air treatment system
10: air treatment unit
20: supply fan unit
20a: first supply fan unit
20b: second supply fan unit
22: first fan
23: first airflow volume detection unit
24: fan controller (exemplifying first control unit)
30: exhaust fan unit
30a: first exhaust fan unit
30b: second exhaust fan unit
32: second fan
33: second airflow volume detection unit
34: fan controller (exemplifying second control unit)
50: outdoor air duct
60: supply air duct
62a: first branch duct (exemplifying first supply air duct)
62b: second branch duct (exemplifying second supply air duct)
70: return air duct
72a: first branch duct (exemplifying first return air duct)
72b: second branch duct (exemplifying second return air duct)
80: exhaust air duct
400: controller

## Claims

1. An air treatment system (1) comprising:
an air treatment unit (10) configured to apply predetermined treatment to air passing through the unit;
a supply fan unit (20) disposed separately from the air treatment unit (10) and configured to send outdoor air from an outdoor space (SO) to the air treatment unit (10) and send the outdoor air treated by the air treatment unit (10) to an indoor space (SI);
an exhaust fan unit (30) disposed separately from the air treatment unit (10) and configured to send indoor air from the indoor space (SI) to the air treatment unit (10) and send the indoor air treated by the air treatment unit (10) to the outdoor space (SO); and
a controller (400) configured to control the supply fan unit (20) and the exhaust fan unit (30),
an outdoor air duct (50) connected to the air treatment unit (10) and provided to guide the outdoor air taken in to the air treatment unit (10) from the outdoor space (SO);
a supply air duct (60) connected to the air treatment unit (10) and provided to guide the outdoor air treated by the air treatment unit (10) and supplied to the indoor space (SI);
a return air duct (70) connected to the air treatment unit (10) and provided to guide the indoor air taken in to the air treatment unit (10) from the indoor space (SI); and
an exhaust air duct (80) connected to the air treatment unit (10) and provided to guide the indoor air treated by the air treatment unit (10) and exhausted to the outdoor space (SO), wherein
the supply fan unit (20) includes a first fan (22) having a variable rotation speed, and a first airflow volume detection unit (23) configured to detect airflow volume of the first fan (22) or airflow volume corresponding quantity as physical quantity corresponding to the airflow volume, and output a first detection value,
the exhaust fan unit (30) includes a second fan (32) having a variable rotation speed, and a second airflow volume detection unit (33) configured to detect airflow volume of the second fan (32) or airflow volume corresponding quantity as physical quantity corresponding to the airflow volume, and output a second detection value,
the controller (400) controls the rotation speed of the first fan (22) in accordance with the first detection value, and controls the rotation speed of the second fan (32) in accordance with the second detection value
the supply fan unit (20) is provided to at least one of the outdoor air duct (50) and the supply air duct (60), and causes the outdoor air to flow from the outdoor air duct (50) to the supply air duct (60) through the air treatment unit (10), and
the exhaust fan unit (30) is provided to at least one of the return air duct (70) and the exhaust air duct (80), and causes the indoor air to flow from the supply air duct (60) to the exhaust air duct (80) through the air treatment unit (10),
the supply fan unit (20) is connected to the supply air duct (60),
**characterized in that**
the exhaust fan unit (30) is connected to the return air duct (70).

2. The air treatment system (1) according to claim 1, wherein
the controller (400) includes a first control unit (24) provided at the supply fan unit (20), and a second control unit (34) provided at the exhaust fan unit (30),
the first control unit (24) receives a first command value on the airflow volume of the first fan (22) from outside the supply fan unit (20), and controls the rotation speed of the first fan (22) in accordance with the first command value and the first detection value, and
the second control unit (34) receives a second command value on the airflow volume of the second fan (32) from outside the exhaust fan unit (30), and controls the rotation speed of the second fan (32) in accordance with the second command value and the second detection value.

3. The air treatment system (1) according to claim 2, wherein
the controller (400) includes a main controller (41) configured to transmit the first command value to the first control unit (24) and transmit the second command value to the second control unit (34).

4. The air treatment system (1) according to any one of claims 1 to 3, wherein
the exhaust fan unit (30) includes a first exhaust fan unit (30a) and a second exhaust fan unit (30b),
the return air duct (70) includes a first return air duct (72a) and a second return air duct (72b) provided to guide the indoor air, and
the first exhaust fan unit (30a) is connected to the first return air duct (72a), and the second exhaust fan unit (30b) is connected to the second return air duct (72b).

5. The air treatment system (1) according to any one of the preceding claims, wherein
the supply fan unit (20) includes a first supply fan unit (20a) and a second supply fan unit (20b),
the supply air duct (60) includes a first supply air duct (62a) and a second supply air duct (62b) provided to guide the outdoor air to the indoor space (SI), and
the first supply fan unit (20a) is connected to the first supply air duct (62a), and the second supply fan unit (20b) is connected to the second supply air duct (62b).

6. The air treatment system (1) according to any one of the preceding claims, wherein
the air treatment unit (10) includes a housing (11) and a total heat exchange element (12).

7. The air treatment system (1) according to any one of the preceding claims, wherein
each of the supply fan unit (20) and the exhaust fan unit (30) further include a unit casing (21, 31).

8. The air treatment system (1) according to claim 7, wherein
the unit casing (21) of the supply fan unit (20) accommodates the first fan (22) and the first airflow volume detection unit (23), and
the unit casing (31) of the exhaust fan unit (30) accommodates the second fan (32) and the second airflow volume detection unit (33).

9. The air treatment system (1) according to any one of the preceding claims, wherein
each of the first fan (22) and second fan (32) includes a fan casing (29, 39).

10. The air treatment system (1) according to claim 9, wherein
the first fan (22) includes a fan rotor (25) rotatably accommodated in the fan casing (29), and
the second fan (32) includes a fan rotor (35) rotatably accommodated in the fan casing (39).

## Patentansprüche

1. Luftbehandlungssystem (1), umfassend:
eine Luftbehandlungseinheit (10), die so ausgebildet ist, dass sie eine vorbestimmte Behandlung auf durch die Einheit strömende Luft anwendet;
eine Zuluftgebläseeinheit (20), die getrennt von der Luftbehandlungseinheit (10) angeordnet ist und so ausgebildet ist, dass sie Außenluft von einem Außenraum (SO) zu der Luftbehandlungseinheit (10) leitet und die von der Luftbehandlungseinheit (10) behandelte Außenluft zu einem Innenraum (SI) leitet; und
eine Abluftgebläseeinheit (30), die getrennt von der Luftbehandlungseinheit (10) angeordnet ist und so ausgebildet ist, dass sie Innenraumluft aus dem Innenraum (SI) zu der Luftbehandlungseinheit (10) leitet und die von der Luftbehandlungseinheit (10) behandelte Innenraumluft zu dem Außenraum (SO) leitet; und
eine Steuerung (400), die so ausgebildet ist, dass sie die Zuluftgebläseeinheit (20) und die Abluftgebläseeinheit (30) steuert,
einen Außenluftkanal (50), der mit der Luftbehandlungseinheit (10) verbunden und dazu bereitgestellt ist, die aus dem Außenraum (SO) angesaugte Außenluft in die Luftbehandlungseinheit (10) zu leiten;
einen Zuluftkanal (60), der mit der Luftbehandlungseinheit (10) verbunden und dazu bereitgestellt ist, die von der Luftbehandlungseinheit (10) behandelte und dem Innenraum (SI) zugeführte Außenluft zu leiten;
einen Rückluftkanal (70), der mit der Luftbehandlungseinheit (10) verbunden und dazu bereitgestellt ist, die aus dem Innenraum (SI) angesaugte Innenraumluft in die Luftbehandlungseinheit (10) zu leiten; und
einen Abluftkanal (80), der mit der Luftbehandlungseinheit (10) verbunden und dazu bereitgestellt ist, die von der Luftbehandlungseinheit (10) behandelte und an den Außenraum (SO) abgegebene Innenraumluft zu leiten, wobei
die Zuluftgebläseeinheit (20) ein erstes Gebläse (22), das eine variable Rotationsgeschwindigkeit aufweist, und eine erste Luftstromvolumendetektionseinheit (23) einschließt, die so ausgebildet ist, dass sie das Luftstromvolumen des ersten Gebläses (22) oder die dem Luftstromvolumen entsprechende Größe als physikalische Größe, die dem Luftstromvolumen entspricht, detektiert, und einen ersten Detektionswert ausgibt,
die Abluftgebläseeinheit (30) ein zweites Gebläse (32), das eine variable Rotationsgeschwindigkeit aufweist, und eine zweite Luftstromvolumendetektionseinheit (33) einschließt, die so ausgebildet ist, dass sie das Luftstromvolumen des zweiten Gebläses (32) oder die dem Luftstromvolumen entsprechende Größe als physikalische Größe erfasst, die dem Luftstromvolumen entspricht, und einen zweiten Detektionswert ausgibt,
die Steuerung (400) die Rotationsgeschwindigkeit des ersten Gebläses (22) in Übereinstimmung mit dem ersten Detektionswert steuert und die Rotationsgeschwindigkeit des zweiten Gebläses (32) in Übereinstimmung mit dem zweiten Detektionswert steuert,
die Zuluftgebläseeinheit (20) an mindestens einem von dem Außenluftkanal (50) und dem Zuluftkanal (60) bereitgestellt ist und bewirkt, dass die Außenluft von dem Außenluftkanal (50) durch die Luftbehandlungseinheit (10) zu dem Zuluftkanal (60) strömt, und
die Abluftgebläseeinheit (30) an mindestens einem von Rückluftkanal (70) und dem Abluftkanal (80) bereitgestellt ist und bewirkt, dass die Innenraumluft von dem Zuluftkanal (60) durch die Luftbehandlungseinheit (10) zu dem Abluftkanal (80) strömt,
die Zuluftgebläseeinheit (20) mit dem Zuluftkanal (60) verbunden ist,
**dadurch gekennzeichnet, dass**
die Abluftgebläseeinheit (30) mit dem Rückluftkanal (70) verbunden ist.

2. Luftbehandlungssystem (1) nach Anspruch 1, wobei
die Steuerung (400) eine erste Steuereinheit (24), die an der Zuluftgebläseeinheit (20) bereitgestellt ist, und eine zweite Steuereinheit (34), die an der Abluftgebläseeinheit (30) bereitgestellt ist, einschließt,
die erste Steuereinheit (24) einen ersten Befehlswert für das Luftstromvolumen des ersten Gebläses (22) von außerhalb der Zuluftgebläseeinheit (20) empfängt und die Rotationsgeschwindigkeit des ersten Gebläses (22) in Übereinstimmung mit dem ersten Befehlswert und dem ersten Detektionswert steuert, und
die zweite Steuereinheit (34) einen zweiten Befehlswert für den Luftstrom des zweiten Gebläses (32) von außerhalb der Abluftgebläseeinheit (30) empfängt und die Rotationsgeschwindigkeit des zweiten Gebläses (32) in Übereinstimmung mit dem zweiten Befehlswert und dem zweiten Detektionswert steuert.

3. Luftbehandlungssystem (1) nach Anspruch 2, wobei
die Steuerung (400) eine Hauptsteuerung (41) einschließt, die so ausgebildet ist, dass sie den ersten Befehlswert an die erste Steuereinheit (24) übermittelt und den zweiten Befehlswert an die zweite Steuereinheit (34) übermittelt.

4. Luftbehandlungssystem (1) nach einem der Ansprüche 1 bis 3, wobei
die Abluftgebläseeinheit (30) eine erste Abluftgebläseeinheit (30a) und eine zweite Abluftgebläseeinheit (30b) einschließt,
der Rückluftkanal (70) einen ersten Rückluftkanal (72a) und einen zweiten Rückluftkanal (72b) einschließt, die dazu bereitgestellt sind, die Innenraumluft zu leiten, und
die erste Abluftgebläseeinheit (30a) mit dem ersten Rückluftkanal (72a) verbunden ist und die zweite Abluftgebläseeinheit (30b) mit dem zweiten Rückluftkanal (72b) verbunden ist.

5. Luftbehandlungssystem (1) nach einem der vorstehenden Ansprüche, wobei
die Zuluftgebläseeinheit (20) eine erste Zuluftgebläseeinheit (20a) und eine zweite Zuluftgebläseeinheit (20b) einschließt,
der Zuluftkanal (60) einen ersten Zuluftkanal (62a) und einen zweiten Zuluftkanal (62b) einschließt, die dazu bereitgestellt sind, die Außenluft zu dem Innenraum (SI) zu leiten, und
die erste Zuluftgebläseeinheit (20a) mit dem ersten Zuluftkanal (62a) verbunden ist und die zweite Zuluftgebläseeinheit (20b) mit dem zweiten Zuluftkanal (62b) verbunden ist.

6. Luftbehandlungssystem (1) nach einem der vorstehenden Ansprüche, wobei
die Luftbehandlungseinheit (10) ein Gehäuse (11) und ein Gesamtwärmeaustauschelement (12) einschließt.

7. Luftbehandlungssystem (1) nach einem der vorstehenden Ansprüche, wobei
jede von der Zuluftgebläseeinheit (20) und der Abluftgebläseeinheit (30) weiter eine Einheitsverkleidung (21, 31) einschließt.

8. Luftbehandlungssystem (1) nach Anspruch 7, wobei
die Einheitsverkleidung (21) der Zuluftgebläseeinheit (20) das erste Gebläse (22) und die erste Luftstromvolumendetektionseinheit (23) aufnimmt, und
die Einheitsverkleidung (31) der Abluftgebläseeinheit (30) das zweite Gebläse (32) und die zweite Luftstromvolumendetektionseinheit (33) aufnimmt.

9. Luftbehandlungssystem (1) nach einem der vorstehenden Ansprüche, wobei
jedes von dem ersten Gebläse (22) und dem zweiten Gebläse (32) eine Gebläseverkleidung (29, 39) einschließt.

10. Luftbehandlungssystem (1) nach Anspruch 9, wobei
das erste Gebläse (22) einen Gebläserotor (25) einschließt, der drehbar in der Gebläseverkleidung (29) aufgenommen ist, und
das zweite Gebläse (32) einen Gebläserotor (35) einschließt, der drehbar in der Gebläseverkleidung (39) aufgenommen ist.

## Revendications

1. Système de traitement d'air (1) comprenant :
une unité de traitement d'air (10) configurée pour appliquer un traitement prédéterminé à de l'air passant à travers l'unité ;
une unité de ventilateur d'alimentation (20) disposée séparément de l'unité de traitement d'air (10) et configurée pour envoyer de l'air extérieur depuis un espace extérieur (SO) à l'unité de traitement d'air (10) et envoyer l'air extérieur traité par l'unité de traitement d'air (10) vers un espace intérieur (SI) ; et
une unité de ventilateur d'extraction (30) disposée séparément de l'unité de traitement d'air (10) et configurée pour envoyer de l'air intérieur depuis l'espace intérieur (SI) vers l'unité de traitement d'air (10) et envoyer l'air intérieur traité par l'unité de traitement d'air (10) vers l'espace extérieur (SO) ; et
un dispositif de commande (400) configuré pour commander l'unité de ventilateur d'alimentation (20) et l'unité de ventilateur d'extraction (30),
un conduit d'air extérieur (50) raccordé à l'unité de traitement d'air (10) et fourni pour guider l'air extérieur admis vers l'unité de traitement d'air (10) depuis l'espace extérieur (SO) ;
un conduit d'air d'alimentation (60) raccordé à l'unité de traitement d'air (10) et fourni pour guider l'air extérieur traité par l'unité de traitement d'air (10) et fourni à l'espace intérieur (SI) ;
un conduit d'air de retour (70) raccordé à l'unité de traitement d'air (10) et fourni pour guider l'air intérieur admis vers l'unité de traitement d'air (10) depuis l'espace intérieur (SI) ; et
un conduit d'air d'extraction (80) raccordé à l'unité de traitement d'air (10) et fourni pour guider l'air intérieur traité par l'unité de traitement d'air (10) et extrait vers l'espace extérieur (SO), dans lequel
l'unité de ventilateur d'alimentation (20) inclut un premier ventilateur (22) présentant une vitesse de rotation variable, et une première unité de détection de volume de flux d'air (23) configurée pour détecter un volume de flux d'air du premier ventilateur (22) ou une quantité correspondante de volume de flux d'air en tant que quantité physique correspondant au volume de flux d'air, et délivrer une première valeur de détection,
l'unité de ventilateur d'extraction (30) inclut un deuxième ventilateur (32) présentant une vitesse de rotation variable, et une deuxième unité de détection de volume de flux d'air (33) configurée pour détecter un volume de flux d'air du deuxième ventilateur (32) ou une quantité correspondante de volume de flux d'air en tant que quantité physique correspondant au volume de flux d'air, et délivrer une deuxième valeur de détection,
le dispositif de commande (400) commande la vitesse de rotation du premier ventilateur (22) selon la première valeur de détection, et commande la vitesse de rotation du deuxième ventilateur (32) selon la deuxième valeur de détection,
l'unité de ventilateur d'alimentation (20) est fournie sur au moins l'un parmi le conduit d'air extérieur (50) et le conduit d'air d'alimentation (60), et amène l'air extérieur à circuler depuis le conduit d'air extérieur (50) vers le conduit d'air d'alimentation (60) à travers l'unité de traitement d'air (10), et
l'unité de ventilateur d'extraction (30) est fournie sur au moins l'un parmi le conduit d'air de retour (70) et le conduit d'air d'extraction (80), et amène l'air intérieur à circuler depuis le conduit d'air d'alimentation (60) vers le conduit d'air d'extraction (80) à travers l'unité de traitement d'air (10),
l'unité de ventilateur d'alimentation (20) est raccordée au conduit d'air d'alimentation (60),
**caractérisé en ce que**
l'unité de ventilateur d'extraction (30) est raccordée au conduit d'air de retour (70).

2. Système de traitement d'air (1) selon la revendication 1, dans lequel
le dispositif de commande (400) inclut une première unité de commande (24) fournie au niveau de l'unité de ventilateur d'alimentation (20), et une deuxième unité de commande (34) fournie au niveau de l'unité de ventilateur d'extraction (30),
la première unité de commande (24) reçoit une première valeur d'instruction sur le volume de flux d'air du premier ventilateur (22) depuis l'extérieur de l'unité de ventilateur d'alimentation (20), et commande la vitesse de rotation du premier ventilateur (22) selon la première valeur d'instruction et la première valeur de détection, et
la deuxième unité de commande (34) reçoit une deuxième valeur d'instruction sur le volume de flux d'air du deuxième ventilateur (32) depuis l'extérieur de l'unité de ventilateur d'extraction (30), et commande la vitesse de rotation du deuxième ventilateur (32) selon la deuxième valeur d'instruction et la deuxième valeur de détection.

3. Système de traitement d'air (1) selon la revendication 2, dans lequel
le dispositif de commande (400) inclut un dispositif de commande principal (41) configuré pour transmettre la première valeur d'instruction à la première unité de commande (24) et transmettre la deuxième valeur d'instruction à la deuxième unité de commande (34).

4. Système de traitement d'air (1) selon l'une quelconque des revendications 1 à 3, dans lequel
l'unité de ventilateur d'extraction (30) inclut une première unité de ventilateur d'extraction (30a) et une deuxième unité de ventilateur d'extraction (30b),
le conduit d'air de retour (70) inclut un premier conduit d'air de retour (72a) et un deuxième conduit d'air de retour (72b) fournis pour guider l'air intérieur, et
la première unité de ventilateur d'extraction (30a) est raccordée au premier conduit d'air de retour (72a), et la deuxième unité de ventilateur d'extraction (30b) est raccordée au deuxième conduit d'air de retour (72b).

5. Système de traitement d'air (1) selon l'une quelconque des revendications précédentes, dans lequel
l'unité de ventilateur d'alimentation (20) inclut une première unité de ventilateur d'alimentation (20a) et une deuxième unité de ventilateur d'alimentation (20b),
le conduit d'air d'alimentation (60) inclut un premier conduit d'air d'alimentation (62a) et un deuxième conduit d'air d'alimentation (62b) fournis pour guider l'air extérieur vers l'espace intérieur (SI), et
la première unité de ventilateur d'alimentation (20a) est raccordée au premier conduit d'air d'alimentation (62a), et la deuxième unité de ventilateur d'alimentation (20b) est raccordée au deuxième conduit d'air d'alimentation (62b).

6. Système de traitement d'air (1) selon l'une quelconque des revendications précédentes, dans lequel
l'unité de traitement d'air (10) inclut un logement (11) et un élément d'échange thermique total (12).

7. Système de traitement d'air (1) selon l'une quelconque des revendications précédentes, dans lequel
chacune de l'unité de ventilateur d'alimentation (20) et de l'unité de ventilateur d'extraction (30) inclut en outre un boîtier d'unité (21, 31).

8. Système de traitement d'air (1) selon la revendication 7, dans lequel
le boîtier d'unité (21) de l'unité de ventilateur d'alimentation (20) reçoit le premier ventilateur (22) et la première unité de détection de volume de flux d'air (23), et
le boîtier d'unité (31) de l'unité de ventilateur d'extraction (30) reçoit le deuxième ventilateur (32) et la deuxième unité de détection de volume de flux d'air (33).

9. Système de traitement d'air (1) selon l'une quelconque des revendications précédentes, dans lequel
chacun du premier ventilateur (22) et du deuxième ventilateur (32) inclut un boîtier de ventilateur (29, 39).

10. Système de traitement d'air (1) selon la revendication 9, dans lequel
le premier ventilateur (22) inclut un rotor de ventilateur (25) reçu en rotation dans le boîtier de ventilateur (29), et
le deuxième ventilateur (32) inclut un rotor de ventilateur (35) reçu en rotation dans le boîtier de ventilateur (39).
